(19) **Europäisches Patentamt** / **European Patent Office** / **Office européen des brevets**

(11) **EP 4 530 810 A1**

(12) **EUROPEAN PATENT APPLICATION**
published in accordance with Art. 153(4) EPC

(43) Date of publication:
02.04.2025 Bulletin 2025/14

(21) Application number: 23870780.6

(22) Date of filing: 26.09.2023

(51) International Patent Classification (IPC):
*G06F 3/0485* (2022.01)

(52) Cooperative Patent Classification (CPC):
G06F 3/04817; G06F 3/0485; G06F 3/0488;
G06F 9/451

(86) International application number:
PCT/CN2023/121417

(87) International publication number:
WO 2024/067551 (04.04.2024 Gazette 2024/14)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 29.09.2022  CN 202211203511

(71) Applicant: Huawei Technologies Co., Ltd.
Shenzhen, Guangdong 518129 (CN)

(72) Inventors:
• ZHANG, Yanan
  Shenzhen, Guangdong 518129 (CN)
• WANG, Hongjun
  Shenzhen, Guangdong 518129 (CN)

(74) Representative: Thun, Clemens
Mitscherlich PartmbB
Patent- und Rechtsanwälte
Karlstraße 7
80333 München (DE)

(54) **INTERFACE DISPLAY METHOD AND ELECTRONIC DEVICE**

(57)    This application discloses an interface display method and an electronic device, and relates to the field of electronic technologies. The interface display method provided in embodiments of this application includes: When an interface displayed by the electronic device is a split-screen interface, a user may trigger, by performing an operation, the electronic device to switch an application displayed on the split-screen interface, and the user does not need to reopen a desktop or a multi-task interface to switch one or more applications displayed on the split-screen interface. This simplifies a user operation, and improves user experience.

Interface 901

Interface of an application 1 — Display area 1

Interface of an application 2 — Display area 2

FIG. 9A(A)

EP 4 530 810 A1

Interface 902

Interface of the application 1

Display area 1

Interface of the application 2

Interface of an application 3

Display area 21

Display area 2

Display area 22

FIG. 9A(B)

Interface 903

Interface of the application 1

Display area 1

Interface of the application 3

Display area 2

FIG. 9A(C)

**Description**

This application claims priority to Chinese Patent Application No. 202211203511.4, filed with the China National Intellectual Property Administration on September 29, 2022 and entitled "INTERFACE DISPLAY METHOD AND ELECTRONIC DEVICE", which is incorporated herein by reference in its entirety.

**TECHNICAL FIELD**

This application relates to the field of electronic technologies, and in particular, to an interface display method and an electronic device.

**BACKGROUND**

With development of electronic technologies, a physical form of an electronic device also changes accordingly. For example, a physical form of a mobile phone includes a flip type, a straight screen, a curved screen, and a foldable screen. Because electronic devices have different physical forms, a same type of interaction logic cannot be well applied to the electronic devices in different physical forms.

After locations and sizes of an input area for receiving a user input and a display area used for display that are of the electronic device change, the input area and the display area cannot be fully used in a conventional interaction manner. For example, a foldable mobile phone has a plurality of display areas and input areas. After locations of the display area and the input area relative to a user change, the conventional interaction manner is unfavorable for the user to use the electronic device.

**SUMMARY**

This application discloses an interface display method and an electronic device, and relates to the field of electronic technologies. The interface display method provided in embodiments of this application includes: When an interface displayed by the electronic device is a split-screen interface, a user may trigger, by performing an operation, the electronic device to switch an application displayed on the split-screen interface, and the user does not need to reopen a desktop or a multi-task interface to switch one or more applications displayed on the split-screen interface. This simplifies a user operation, and improves user experience.

According to a first aspect, this application provides an interface display method, applied to an electronic device including a display. The method includes: The electronic device displays an interface of a first application in a first display area of the display, and displays an interface of a second application in a second display area of the display; and in response to a first swipe operation performed in the second display area, the electronic device directly switches the interface of the second application displayed in the second display area to an interface of a third application, and keeps displaying the interface of the first application in the first display area.

In the foregoing embodiment, when the interface displayed by the electronic device is a split-screen interface, a user may trigger, by performing an operation in the second display area, the electronic device to switch an application displayed in the second display area on the split-screen interface, the user does not need to reopen a desktop or a multi-task interface to switch one or more applications displayed on the split-screen interface. This simplifies a user operation, and improves user experience.

With reference to some embodiments of the first aspect, in some embodiments, the method further includes: In response to a second swipe operation performed in the second display area, the electronic device directly switches the interface of the first application displayed in the first display area to an interface of a fourth application, and keeps displaying the interface of the third application in the second display area.

In the foregoing embodiment, when the interface displayed by the electronic device is a split-screen interface, a user may trigger, by performing an operation in the second display area, the electronic device to switch an application displayed in the first display area on the split-screen interface, the user does not need to reopen a desktop or a multi-task interface to switch one or more applications displayed on the split-screen interface. This simplifies a user operation, and improves user experience.

With reference to some embodiments of the first aspect, in some embodiments, the third application is a previous application or a next application of the second application.

In the foregoing embodiment, based on a direction of the first swipe operation, the newly displayed third application may be a previous application or a next application of the second application. For example, when the split-screen interface is an up-down split split-screen interface, in a case of leftward swiping, the third application is a previous application of the second application. When the split-screen interface is an up-down split split-screen interface, in a case of rightward swiping, the third application is a next application of the second application.

With reference to some embodiments of the first aspect, in some embodiments, if the third application is started earlier than the second application, the third application is a previous application of the second application; or before the electronic device displays the interface of the first application in the first display area of the display and displays the interface of the second application in the second display area of the display, if the electronic device displays the interface of the first application in the first display area of the display and displays the interface of the third application in the second display area of the display, the third application is a previous application of the second application.

In the foregoing embodiment, a sequence of applications may be a startup sequence of the applications, or may be a time sequence of latest use by the user, or may be a sequence of the applications on a multi-task interface, or may be a sequence of the applications in an activity manager service. Which application the third application is specifically may be determined based on the sequence of the applications.

With reference to some embodiments of the first aspect, in some embodiments, the display is a foldable screen, and the foldable screen is in a support state.

In the foregoing embodiment, the display is a foldable screen and is in the support state. The support state is a folded form in which the screen A and the screen B of the inward foldable screen are bent face to face at a specific included angle. When the inward foldable screen is in the support state, screens that are of the foldable screen and that can be used for displaying include the screen A, the screen B, and a screen C. In an intermediate state, display areas in which the screen A and the screen B are located may also be referred to as large screens, and the display areas in which the screen A and the screen B are located may also be referred to as internal screens. When the inward foldable screen is in the intermediate state, the screen C may be in a screen-off state, or the screen C may be in a screen-on state. An included angle α between the screen A and the screen B is greater than or equal to an angle 2 and less than or equal to an angle 1. For example, the included angle α between the screen A and the screen B may be 120 degrees.

With reference to some embodiments of the first aspect, in some embodiments, before the electronic device displays the interface of the first application in the first display area, and displays the interface of the second application in the second display area, the method further includes: When the foldable screen is in the support state, determining an application type of the first application and/or the second application; if the first application is a display-type application, the electronic device determines that the first application is to be displayed in the first display area, and determines that the second application is to be displayed in the second display area; or if the second application is an interactive application, the electronic device determines that the first application is to be displayed in the first display area, and determines that the second application is to be displayed in the second display area, where a relative location between the first display area and the second display area is: The first display area is located on an upper side of the second display area.

In the foregoing embodiment, based on different application types of the application, in a case of up-down screen splitting, a display-type application is displayed on an upper side and/or an interactive application is displayed on an upper side, so that the user does not need to adjust display manners of the application in different display areas. This simplifies a user operation, and improves user experience. After determining two applications participating in screen splitting, the electronic device may determine an application that is more suitable to be displayed in the first display area, or may determine an application that is more suitable to be displayed in the second display area. The display-type application or an application that is more likely to be a display-type application is suitable to be displayed in the display area 1, and the interactive application or an application that is more likely to be an interactive application is suitable to be displayed in the display area 2. Alternatively, an operating system of the electronic device may determine whether an application is a display-type application or an interactive application. For example, the electronic device locally stores data used to determine whether the application is a display-type application or an interactive application. This is not limited herein. Alternatively, an operating system of the electronic device may determine, based on current display content of an application, whether the application is a display-type application or an interactive application. For example, when the current display content of the application includes a multimedia stream or a large-size (for example, occupying more than 70% of a display area) text, it is considered that the application is currently a display-type application. Alternatively, an operating system of the electronic device may determine an application that is in applications participating in screen splitting and that is more likely to be a display-type application, or may determine an application that is in applications participating in screen splitting and that is more likely to be an interactive application.

With reference to some embodiments of the first aspect, in some embodiments, the display-type application is a video playing application or a music playing application, and/or the interactive application is an instant messaging application or a game application.

With reference to some embodiments of the first aspect, in some embodiments, before the electronic device displays the interface of the first application in the first display area of the display, and displays the interface of the second application in the second display area of the display, the method further includes: When the foldable screen is in an unfolded state, the electronic device displays the interface of the first application in full screen. That the electronic device displays the interface of the first application in the first display area of the display, and displays the interface of the second application in the second display area of the display specifically includes: When the electronic device detects that the display changes to the support state, the electronic device displays the interface of the first application in a third display area, and the electronic device displays a multi-task interface or an interface of a desktop application in a fourth display area; and in response to an operation of selecting the second application in the fourth display area, the electronic device displays the interface of the first application in the first display area, and displays the interface of the second application in the second display area.

In the foregoing embodiment, the user may trigger, by changing a physical form of the electronic device, the electronic device to switch from displaying a full-screen display interface to displaying a to-be-split-screen display interface. For example, the electronic device is switched from the unfolded state to the support state through folding. This simplifies a user operation, and improves user experience.

With reference to some embodiments of the first aspect, in some embodiments, before the electronic device displays the interface of the first application in the first display area of the display, and displays the interface of the second application in the second display area of the display, the method further includes: The electronic device displays the interface of the first application in full screen, and displays the interface of the second application on the interface of the first application in a floating manner; or the electronic device displays the interface of the second application in full screen, and displays the interface of the first application on the interface of the second application in a floating manner. That the electronic device displays the interface of the first application in the first display area of the display, and displays the interface of the second application in the second display area of the display specifically includes: After the electronic device receives a third swipe operation, the electronic device displays the interface of the first application in the first display area, and displays the interface of the second application in the second display area.

In the foregoing embodiment, when the interface displayed in full screen by the electronic device includes a small window, an application in the small window participates in screen splitting. After the electronic device detects a screen splitting operation, for example, a third swipe operation, the electronic device is switched from displaying the interface displayed in full screen to displaying an interface displayed in split screen, and may skip displaying the to-be-split-screen interface. This simplifies a user operation, and improves user experience.

With reference to some embodiments of the first aspect, in some embodiments, before the electronic device displays the interface of the first application in the first display area of the display, and displays the interface of the second application in the second display area of the display, the method further includes: When the display is in the unfolded state, the electronic device displays the interface of the first application in full screen, and displays the interface of the second application on the interface of the first application in a floating manner; or the electronic device displays the interface of the second application in full screen, and displays the interface of the first application on the interface of the second application in a floating manner. That the electronic device displays the interface of the first application in the first display area of the display, and displays the interface of the second application in the second display area of the display specifically includes: When the electronic device detects that the display changes from the unfolded state to the support state, the electronic device displays the interface of the first application in the first display area, and displays the interface of the second application in the second display area.

In the foregoing embodiment, when the interface displayed in full screen by the electronic device includes a small window, an application in the small window participates in screen splitting. After the electronic device detects that the electronic device is switched from the unfolded state to the support state, the electronic device is switched from displaying the interface displayed in full screen to displaying an interface displayed in split screen, and may skip displaying the to-be-split-screen interface. This simplifies a user operation, and improves user experience.

With reference to some embodiments of the first aspect, in some embodiments, after the electronic device directly switches, in response to the second swipe operation performed in the second display area, the interface of the first application displayed in the first display area to the interface of the fourth application, and keeps displaying the interface of the third application in the second display area, the method further includes: In response to a fourth swipe operation performed in the second display area, the electronic device directly switches the interface of the fourth application displayed in the first display area from a first page to a second page, where the second page is a parent page or a child page of the first page.

In the foregoing embodiment, when the interface displayed by the electronic device is a split-screen interface, the user may trigger, in the second display area by performing an operation, the electronic device to switch between parent and child pages of the application displayed in the first display area on the split-screen interface, and the user does not need to perform an operation in the first display area. This simplifies a user operation, and improves user experience.

With reference to some embodiments of the first aspect, in some embodiments, after the electronic device directly switches, in response to the second swipe operation performed in the second display area, the interface of the first application displayed in the first display area to the interface of the fourth application, and keeps displaying the interface of the third application in the second display area, the method further includes: in response to a fifth swipe operation performed in the second display area, directly switching the interface of the third application displayed in the second display area from a third page to a fourth page, where the fourth page is a parent page or a child page of the third page.

In the foregoing embodiment, when the interface displayed by the electronic device is a split-screen interface, the user may trigger, in the second display area by performing an operation, the electronic device to switch between parent and child pages of the application displayed in the second display area on the split-screen interface, and the user does not need to tap a control of the application in the second display area. This simplifies a user operation, and improves user experience.

With reference to some embodiments of the first aspect, in some embodiments, after the electronic device directly switches, in response to the second swipe operation performed in the second display area, the interface of the first application displayed in the first display area to the interface of the fourth application, and keeps displaying the interface of the third application in the second display area, the method further includes: in response to a sixth swipe operation performed in the second display area, directly switching the interface of the fourth application displayed in the first display area from a first page to a fifth page, where the fifth page is a sibling page of the first page.

In the foregoing embodiment, when the interface displayed by the electronic device is a split-screen interface, the user may trigger, in the second display area by performing an operation, the electronic device to switch to a sibling page of the application displayed in the first display area on the split-screen interface, and the user does not need to perform an operation in the first display area. This simplifies a user operation, and improves user experience.

With reference to some embodiments of the first aspect, in some embodiments, after the electronic device directly switches, in response to the second swipe operation performed in the second display area, the interface of the first application displayed in the first display area to the interface of the fourth application, and keeps displaying the interface of the third application in the second display area, the method further includes: in response to a seventh swipe operation performed in the second display area, directly switching the interface of the third application displayed in the second display area from a third page to a sixth page, where the sixth page is a sibling page of the third page.

In the foregoing embodiment, when the interface displayed by the electronic device is a split-screen interface, the user may trigger, in the second display area by performing an operation, the electronic device to switch to a sibling page of the application displayed in the second display area on the split-screen interface, and the user does not need to tap a control of the application in the second display area. This simplifies a user operation, and improves user experience.

With reference to some embodiments of the first aspect, in some embodiments, the method further includes: When the folded screen is in the support state, if the electronic device determines that a first notification needs to be displayed, determining a notification type of the first notification; and if the first notification is a display notification, the electronic device displays the first notification in the first display area; or if the first notification is an interactive notification, the electronic device displays the first notification in the second display area. A relative location between the first display area and the second display area is: The first display area is located on an upper side of the second display area.

In the foregoing embodiment, when the electronic device is in the support state, when displaying the first notification, the electronic device may determine the type of the first notification, to display a display notification in the first display area, and display an interactive-type notification in the second display area, so as to facilitate viewing and operation by the user. This simplifies a user operation, and improves user experience.

With reference to some embodiments of the first aspect, in some embodiments, the method further includes: When the foldable screen is in the support state, if the electronic device determines that a first notification needs to be displayed, determining a notification type of the first notification; and if the first notification is an interactive notification, the electronic device displays a second notification in the first display area, and the electronic device displays a third notification in the second display area, where the second notification is used for displaying display content in the first notification, and the third notification is used for displaying interactive content in the first notification. A relative location between the first display area and the second display area is: The first display area is located on an upper side of the second display area.

In the foregoing embodiment, when the electronic device is in the support state, when displaying the first notification, the electronic device may split the first notification into the second notification and the third notification, to display the display second notification in the first display area, and display the interactive third notification in the second display area, so as to facilitate viewing and operation by the user. This simplifies a user operation, and improves user experience.

With reference to some embodiments of the first aspect, in some embodiments, the determining a notification type of the first notification specifically includes: The first electronic device determines, based on display duration of the first notification, a type of a control included in the first notification, whether there is a click event listener on the control of the first notification, an application that initiates the first notification, and semantics of text content in the first notification and/or a type declaration of the first notification, that the first notification is a display notification or an interactive notification.

In the foregoing embodiment, the electronic device may determine, in a plurality of manners, whether the first notification is an interactive notification or a display notification.

According to a second aspect, this application provides an interface display method, applied to an electronic device including a display. The method includes: When the display is a foldable screen, when the foldable screen is in an unfolded state, the electronic device displays an interface of a first application in a floating form at a first location.

The floating form means that the interface of the first application is displayed above a desktop or an interface of another application, does not occupy a full screen, and usually may be moved in the floating form. Specifically, the interface is usually located in a window, and therefore may be referred to as a floating window or a small window. For ease of understanding, in the following plurality of embodiments, the floating window or the small window is used as a name for description. However, in some other embodiments, display of a control like a sidebar may alternatively be considered as a specific embodiment of floating display.

After the electronic device detects that the display changes to a support state, the electronic device displays the interface of the first application in a form of a floating window or a small window at a second location, where the second location is different from the first location, and the second location is located in a first display area or a second display area. When the electronic device is in the support state, display areas of the display include the first display area and the second display area, and neither the first display area nor the second display area includes a folding edge.

In the foregoing embodiment, when the electronic device in the unfolded state displays an interface in full screen, a small window or a floating window is displayed on the interface displayed in full screen. After the electronic device is switched from the unfolded state to the support state, the electronic device performs display in a form of a floating window or a small window at a location that does not cross the folding edge. In this way, an interface of the small window or the floating window does not cross the folding edge, to prevent a user from failing to clearly see content displayed in the small window or the floating window due to an angle of view difference. The angle of view difference is caused by an included angle between the first display area (for example, a screen A) and the second display area (for example, a screen B).

With reference to some embodiments of the second aspect, in some embodiments, that the electronic device displays the interface of the first application in a form of a floating window or a small window at a second location specifically includes: If the first size is greater than the second size, the electronic device displays the interface of the first application in the first display area at the second location in the form of the floating window or the small window, where the second location is in the first display area, the first size is a size occupied by the first location in the first display area, and the second size is a size occupied by the first location in the second display area.

In the foregoing embodiment, when the small window or the floating window occupies more of the first display area, a location of the small window or the floating window is adjusted to be in the first display area. When the small window or the floating window occupies more of the second display area, a location of the small window or the floating window is adjusted to be in the first display area. In this way, the small window or the floating window is prevented from crossing the folding edge, visual coherence is further ensured, and user experience is improved.

With reference to some embodiments of the second aspect, in some embodiments, before the electronic device displays the interface of the first application in the form of the floating window or the small window at the second location, the method further includes: when the foldable screen is in the support state, determining an application type of the first application; and if the first application is a display-type application, the electronic device determines that the first application is to be displayed in the first display area, where the second location is in the first display area; or if the first application is an interactive application, the electronic device determines that the first application is to be displayed in the second display area, where the second location is in the second display area, and a relative location between the first display area and the second display area is: The first display area is located on an upper side of the second display area.

In the foregoing embodiment, whether an application is displayed in the first display area or the second display area may be further determined based on an application type of the application displayed in the floating window or the small window. When the application is a display-type application, the application is displayed in an upper display area. This is more convenient for the user to observe in time. When the application is an interactive application, the application is displayed in a lower display area. This is more convenient to receive an operation of the user.

With reference to some embodiments of the second aspect, in some embodiments, the method further includes: When the foldable screen is in the unfolded state, the electronic device displays a sidebar at a third location; and after the electronic device detects that the display changes to the support state, the electronic device displays the sidebar at a fourth location, where the fourth location is in the second display area, and a relative location between the first display area and the second display area is: The first display area is located on an upper side of the second display area.

In the foregoing embodiment, when the electronic device is switched from the unfolded state to the support state, the electronic device adjusts a location of the sidebar, so that the sidebar is displayed in the lower display area and does not cross the folding edge.

According to a third aspect, this application provides an interface display method, applied to an electronic device including a display. The method includes: The electronic device displays an interface of a first application in a first display area, and displays an interface of a second application in a second display area, where display areas on the display includes the first display area and the second display area; and when a location of a mouse or a location of a pointer is in the first display area, after the electronic device receives a first swipe operation, the electronic device displays an interface of a third application in the first display area, and keeps displaying the interface of the second application in the second display area.

In the foregoing embodiment, when the electronic device is an electronic device like a notebook computer, and the electronic device displays a split-screen interface, a user may switch, by using the first swipe operation performed in the first display area, an application displayed in the first display area. This simplifies a user operation.

According to a fourth aspect, this application provides an interface display method, applied to a system including a first electronic device and a second electronic device. The method includes: The first electronic device establishes a first connection to the second electronic device, where a screen of the first electronic device is divided into a first input area and a second input area, a screen of the second electronic device includes a first display area and a second display area, an interface of a first application is displayed in the first display area, an interface of a second application is displayed in the second display area, the first display area corresponds to the first input area, and the second display area corresponds to the second input area; after receiving a first swipe operation in the first input area, the first electronic device sends a first message to the second electronic device based on the first connection; and after the second electronic device receives the first message, the second electronic device switches the interface of the first application displayed in the first display area to an interface of a third application, and keeps displaying the interface of the second application in the second display area.

In the foregoing embodiment, when the connection is established between the two electronic devices, a user may trigger, by performing an operation in the first input area of the first electronic device, the second electronic device to switch an application displayed in the first display area on a split-screen interface. This simplifies a user operation, and the user does not need to perform an operation on the second electronic device. In this way, user experience is improved.

According to a fifth aspect, an embodiment of this application provides an electronic device. The electronic device includes one or more processors, a display, and a memory. The memory is coupled to the one or more processors, the memory is configured to store computer program code, and the computer program code includes computer instructions. The one or more processors invoke the computer instructions to enable the electronic device to perform the following operations: The electronic device displays an interface of a first application in a first display area of the display, and displays an interface of a second application in a second display area of the display; and in response to a first swipe operation performed in the second display area, the electronic device directly switches the interface of the second application displayed in the second display area to an interface of a third application, and keeps displaying the interface of the first application in the first display area.

With reference to some embodiments of the fifth aspect, in some embodiments, the one or more processors are further configured to invoke the computer instructions to enable the electronic device to perform the following operations: In response to a second swipe operation performed in the second display area, the electronic device directly switches the interface of the first application displayed in the first display area to an interface of a fourth application, and keeps displaying the interface of the third application in the second display area.

With reference to some embodiments of the fifth aspect, in some embodiments, the third application is a previous application or a next application of the second application.

With reference to some embodiments of the fifth aspect, in some embodiments, if the third application is started earlier than the second application, the third application is a previous application of the second application; or before the electronic device displays the interface of the first application in the first display area of the display and displays the interface of the second application in the second display area of the display, if the electronic device displays the interface of the first application in the first display area of the display and displays the interface of the third application in the second display area of the display, the third application is a previous application of the second application.

With reference to some embodiments of the fifth aspect, in some embodiments, the display is a foldable screen, and the foldable screen is in a support state.

With reference to some embodiments of the fifth aspect, in some embodiments, the one or more processors are further configured to invoke the computer instructions to enable the electronic device to perform the following operations: when the foldable screen is in the support state, determining an application type of the first application and/or an application type of the second application; and if the first application is a display-type application, the electronic device determines that the first application is to be displayed in the first display area, and determines that the second application is to be displayed in the second display area; or if the second application is an interactive application, the electronic device determines that the first application is to be displayed in the first display area, and determines that the second application is to be displayed in the second display area, where A relative location between the first display area and the second display area is: The first display area is located on an upper side of the second display area.

With reference to some embodiments of the fifth aspect, in some embodiments, the display-type application is a video playing application or a music playing application, and/or the interactive application is an instant messaging application or a game application.

With reference to some embodiments of the fifth aspect, in some embodiments, the one or more processors are further configured to invoke the computer instructions to enable the electronic device to perform the following operations: When the foldable screen is in an unfolded state, the electronic device displays the interface of the first application in full screen. The one or more processors are further configured to invoke the computer instructions to enable the electronic device to perform the following operations: When the electronic device detects that the display changes to the support state, the electronic device displays the interface of the first application in a third display area, and the electronic device displays a multi-task interface or an interface of a desktop application in a fourth display area; and in response to an operation of selecting the second application in the fourth display area, the electronic device displays the interface of the first application in the first display area, and displays the interface of the second application in the second display area.

With reference to some embodiments of the fifth aspect, in some embodiments, the one or more processors are further configured to invoke the computer instructions to enable the electronic device to perform the following operations: The electronic device displays the interface of the first application in full screen, and displays the interface of the second application on the interface of the first application in a floating manner; or the electronic device displays the interface of the second application in full screen, and displays the interface of the first application on the interface of the second application in a floating manner. The one or more processors are further configured to invoke the computer instructions to enable the electronic device to perform the following operations: After the electronic device receives a third swipe operation, the electronic device displays the interface of the first application in the first display area, and displays the interface of the second application in the second display area.

With reference to some embodiments of the fifth aspect, in some embodiments, the one or more processors are further configured to invoke the computer instructions to enable the electronic device to perform the following operations: When the display is in the unfolded state, the electronic device displays the interface of the first application in full screen, and displays the interface of the second application on the interface of the first application in a floating manner; or the electronic device displays the interface of the second application in full screen, and displays the interface of the first application on the interface of the second application in a floating manner. The one or more processors are further configured to invoke the computer instructions to enable the electronic device to perform the following operations: When the electronic device detects that the display changes from the unfolded state to the support state, the electronic device displays the interface of the first application in the first display area, and displays the interface of the second application in the second display area.

With reference to some embodiments of the fifth aspect, in some embodiments, the one or more processors are further configured to invoke the computer instructions to enable the electronic device to perform the following operations: In response to a fourth swipe operation performed in the second display area, the electronic device directly switches the interface of the fourth application displayed in the first display area from a first page to a second page, where the second page is a parent page or a child page of the first page.

With reference to some embodiments of the fifth aspect, in some embodiments, the one or more processors are further configured to invoke the computer instructions to enable the electronic device to perform the following operations: in response to a fifth swipe operation performed in the second display area, directly switching the interface of the third application displayed in the second display area from a third page to a fourth page, where the fourth page is a parent page or a child page of the third page.

With reference to some embodiments of the fifth aspect, in some embodiments, the one or more processors are further configured to invoke the computer instructions to enable the electronic device to perform the following operations: in response to a sixth swipe operation performed in the second display area, directly switching the interface of the fourth application displayed in the first display area from a first page to a fifth page, where the fifth page is a sibling page of the first page.

With reference to some embodiments of the fifth aspect, in some embodiments, the one or more processors are further configured to invoke the computer instructions to enable the electronic device to perform the following operations: in response to a seventh swipe operation performed in the second display area, directly switching the interface of the third application displayed in the second display area from a third page to a sixth page, where the sixth page is a sibling page of the third page.

With reference to some embodiments of the fifth aspect, in some embodiments, the one or more processors are further configured to invoke the computer instructions to enable the electronic device to perform the following operations: When the folded screen is in the support state, if the electronic device determines that a first notification needs to be displayed, determining a notification type of the first notification; and if the first notification is a display notification, the electronic device displays the first notification in the first display area; or if the first notification is an interactive notification, the electronic device displays the first notification in the second display area. A relative location between the first display area and the second display area is: The first display area is located on an upper side of the second display area.

With reference to some embodiments of the fifth aspect, in some embodiments, the one or more processors are further configured to invoke the computer instructions to enable the electronic device to perform the following operations: When the foldable screen is in the support state, if the electronic device determines that a first notification needs to be displayed, determining a notification type of the first notification; and if the first notification is an interactive notification, the electronic device displays a second notification in the first display area, and the electronic device displays a third notification in the second display area, where the second notification is used for displaying display content in the first notification, and the third notification is used for displaying interactive content in the first notification. A relative location between the first display area and the second display area is: The first display area is located on an upper side of the second display area.

With reference to some embodiments of the fifth aspect, in some embodiments, the one or more processors are specifically configured to invoke the computer instructions to enable the electronic device to perform the following operations: The first electronic device determines, based on display duration of the first notification, a type of a control included in the first notification, whether there is a click event listener on the control of the first notification, an application that initiates the first notification, and semantics of text content in the first notification and/or a type declaration of the first notification, that the first notification is a display notification or an interactive notification.

According to a sixth aspect, an embodiment of this application provides an electronic device. The electronic device includes one or more processors, a display, and a memory. The memory is coupled to the one or more processors, the memory is configured to store computer program code, and the computer program code includes computer instructions. The one or more processors invoke the computer instructions to enable the electronic device to perform the following operations: When the display is a foldable screen, when the foldable screen is in an unfolded state, the electronic device displays an interface of a first application in a form of a floating window or a small window at a first location; and after the electronic device detects that the display changes to a support state, the electronic device displays the interface of the first application in a form of a floating window or a small window at a second location, where the second location is different from the first location, the second location is in the first display area or the second display area. When the electronic device is in the support state, display areas of the display include the first display area and the second display area, and neither the first display area nor the second display area includes a folding edge.

With reference to some embodiments of the sixth aspect, in some embodiments, the one or more processors are specifically configured to invoke the computer instructions to enable the electronic device to perform the following operation: If the first size is greater than the second size, the electronic device displays the interface of the first application in the first display area at the second location in the form of the floating window or the small window, where the second location is in the first display area, the first size is a size occupied by the first location in the first display area, and the second size is a size occupied by the first location in the second display area.

With reference to some embodiments of the sixth aspect, in some embodiments, the one or more processors are specifically configured to invoke the computer instructions to enable the electronic device to perform the following operation: The electronic device determines the first size and the second size based on the first location, a location of the first display area, and a location of the second display area.

With reference to some embodiments of the sixth aspect, in some embodiments, the one or more processors are further configured to invoke the computer instructions to enable the electronic device to perform the following operations: when the foldable screen is in the support state, determining an application type of the first application; and if the first application is a display-type application, the electronic device determines that the first application is to be displayed in the first display area, where the second location is in the first display area; or if the first application is an interactive application, the electronic device determines that the first application is to be displayed in the second display area, where the second location is in the second display area, and a relative location between the first display area and the second display area is: The first display area is located on an upper side of the second display area.

With reference to some embodiments of the sixth aspect, in some embodiments, the one or more processors are further configured to invoke the computer instructions to enable the electronic device to perform the following operations: When the foldable screen is in the unfolded state, the electronic device displays a sidebar at a third location; and after the electronic device detects that the display changes to the support state, the electronic device displays the sidebar at a fourth location, where the fourth location is in the second display area, and a relative location between the first display area and the second display area is: The first display area is located on an upper side of the second display area.

According to a seventh aspect, an embodiment of this application provides an electronic device. The electronic device includes one or more processors, a display, and a memory. The memory is coupled to the one or more processors, the memory is configured to store computer program code, and the computer program code includes computer instructions. The one or more processors invoke the computer instructions to enable the electronic device to perform the following operations: The electronic device displays an interface of a first application in a first display area, and displays an interface of a second application in a second display area, where display areas on the display include the first display area and the second display area; and when a location of a mouse or a location of a pointer is in the first display area, after the electronic device receives a first swipe operation, the electronic device displays an interface of a third application in the first display area, and keeps displaying the interface of the second application in the second display area.

According to an eighth aspect, an embodiment of this application provides a chip system. The chip system is used in an electronic device, and the chip system includes one or more processors. The processor is configured to invoke computer instructions to enable the electronic device to perform the method according to any one of the first aspect, the second aspect, the third aspect, the possible implementations of the first aspect, and the possible implementations of the second aspect.

According to a ninth aspect, an embodiment of this application provides a computer program product including instructions. When the computer program product is run on an electronic device, the electronic device is enabled to perform the method according to any one of the first aspect, the second aspect, the third aspect, the possible implementations of the first aspect, and the possible implementations of the second aspect.

According to a tenth aspect, an embodiment of this application provides a computer-readable storage medium including instructions. When the instructions are run on an electronic device, the electronic device is enabled to perform the method according to any one of the first aspect, the second aspect, the third aspect, the possible implementations of the first aspect, and the possible implementations of the second aspect.

It may be understood that the electronic devices provided in the fifth aspect, the sixth aspect, and the seventh aspect, the chip system provided in the eighth aspect, the computer program product provided in the ninth aspect, and the computer storage medium provided in the tenth aspect are all configured to perform the method provided in embodiments of this application. Therefore, for beneficial effect that can be achieved by the electronic device, the computer storage medium, the chip, and the computer program product, refer to the beneficial effect in the corresponding method. Details are not described herein again.

**BRIEF DESCRIPTION OF DRAWINGS**

FIG. 1A to FIG. 1C are diagrams of an example of a physical form of a foldable mobile phone according to an embodiment of this application;
FIG. 2 is a diagram of an example of a physical form of a notebook computer according to an embodiment of this application;
FIG. 3A is a diagram of an example of a hardware architecture of an electronic device according to an embodiment of this application;
FIG. 3B and FIG. 3C are diagrams of an example of determining a physical form of an electronic device according to an embodiment of this application;
FIG. 4A and FIG. 4B are diagrams of examples of a software architecture of an electronic device according to an embodiment of this application;
FIG. 5 is a diagram of an example of an architecture of a system according to an embodiment of this application;
FIG. 6 is a diagram of an example of a system according to an embodiment of this application;
FIG. 7A to FIG. 7D-3 are diagrams of an example of a change of an interface displayed by an electronic device in an unfolded state before and after screen splitting according to an embodiment of this application;
FIG. 7E is a diagram of another example of a change of an interface displayed by an electronic device before and after screen splitting according to an embodiment of this application;
FIG. 7F to FIG. 7I are diagrams of an example of a change of an interface displayed by an electronic device in a support state before and after screen splitting according to an embodiment of this application;
FIG. 7J(A) to FIG. 7J(C) are diagrams of an example in which an electronic device in a support state adjusts a display location of an application when displaying a split-screen interface according to an embodiment of this application;
FIG. 7K and FIG. 7L are diagrams of an example in which an electronic device displays a to-be-split-screen interface or displays a split-screen interface after receiving a screen splitting operation according to an embodiment of this application;
FIG. 8A to FIG. 8G are diagrams of an example of a change of an interface during switching of an application on a split-screen interface according to an embodiment of this application;
FIG. 9A(A) to FIG. 9C(C) are diagrams of an example of an interface change after switching of an application on a split-screen interface according to an embodiment of this application;
FIG. 9D(A) to FIG. 9F(C) are diagrams of an example of an interface change after switching of an application on a split-screen interface according to an embodiment of this application;
FIG. 9G-1 to FIG. 9J are diagrams of an example of switching from a split-screen interface to a to-be-split-screen interface according to an embodiment of this application;
FIG. 10A and FIG. 10B are diagrams of an example of switching between parent and child pages that are different of an application after an electronic device in an unfolded state displays a split-screen interface according to an embodiment of this application;

FIG. 10C and FIG. 10D are diagrams of another example of switching between parent and child pages that are different of an application after an electronic device in a support state displays a split-screen interface according to an embodiment of this application;

FIG. 10E is a diagram of another example of switching between parent and child pages that are different of an application after an electronic device in a support state displays a split-screen interface according to an embodiment of this application;

FIG. 11A and FIG. 11B are diagrams of an example of switching between sibling pages of an application after a split-screen interface is displayed according to an embodiment of this application;

FIG. 11C and FIG. 11D are diagrams of another example of switching between sibling pages of an application after an electronic device in a support state displays a split-screen interface according to an embodiment of this application;

FIG. 11E-1 and FIG. 11E-2 are a diagram of another example of switching between sibling pages of an application after an electronic device in a support state displays a split-screen interface according to an embodiment of this application;

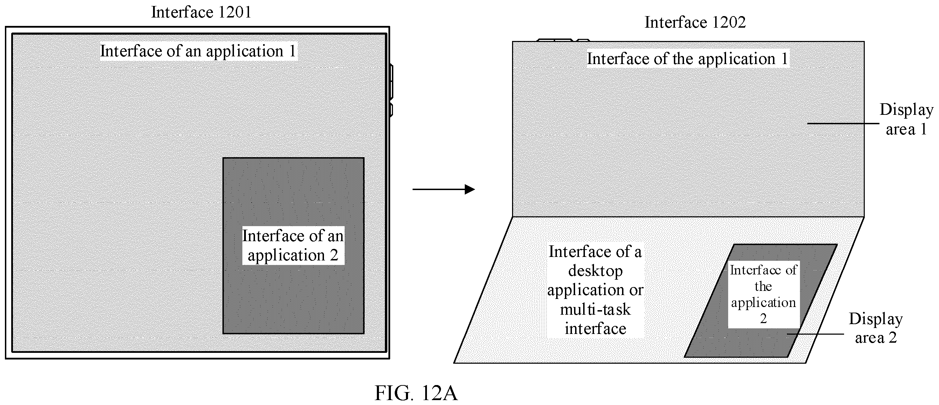

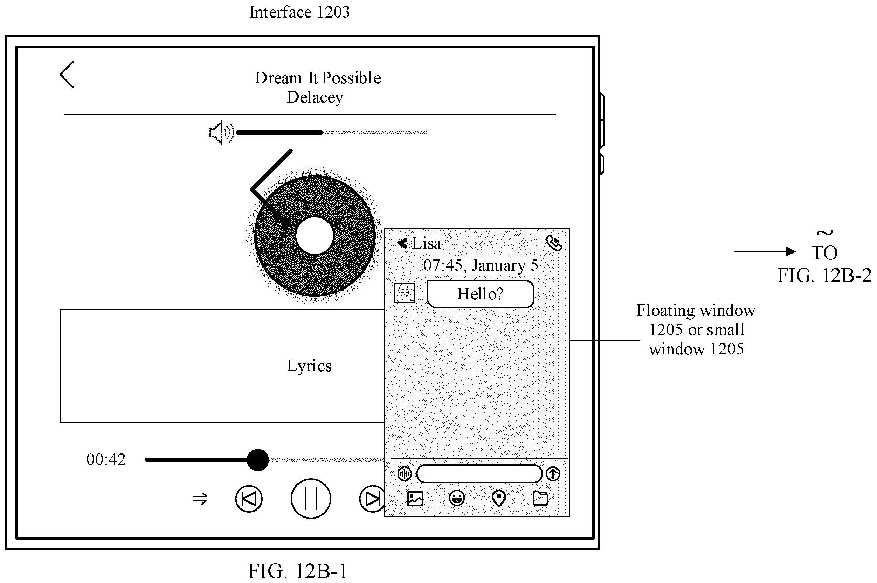

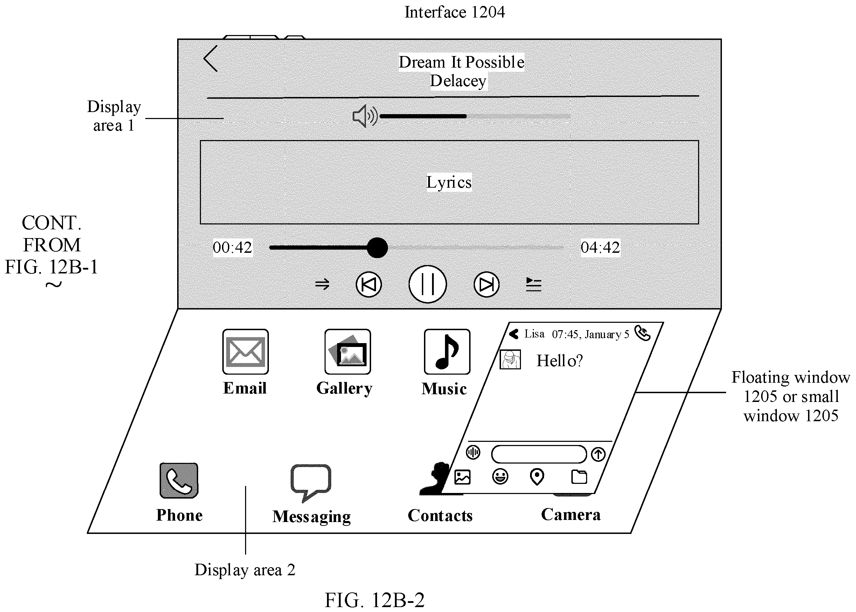

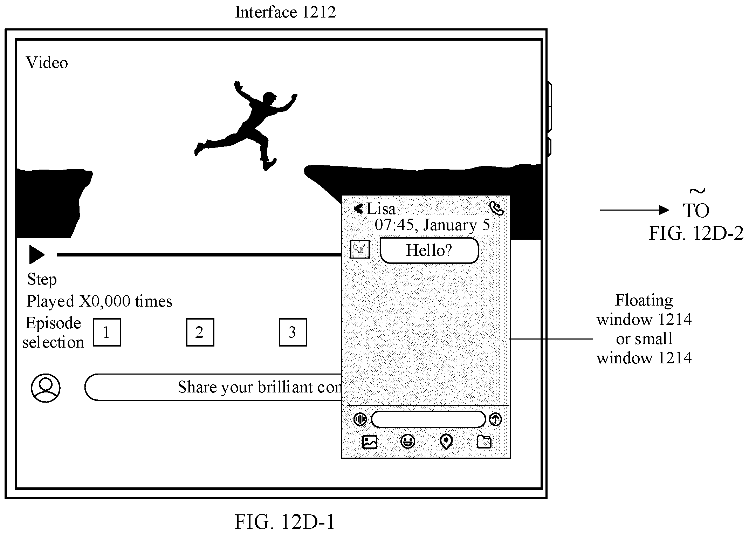

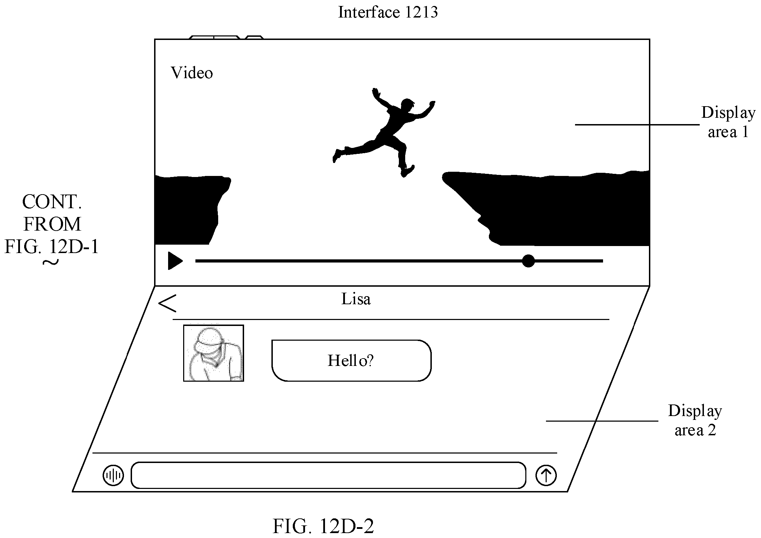

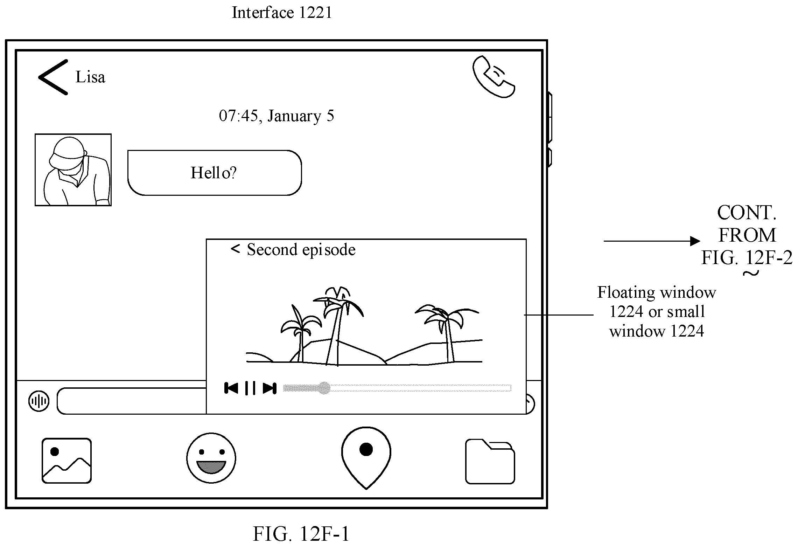

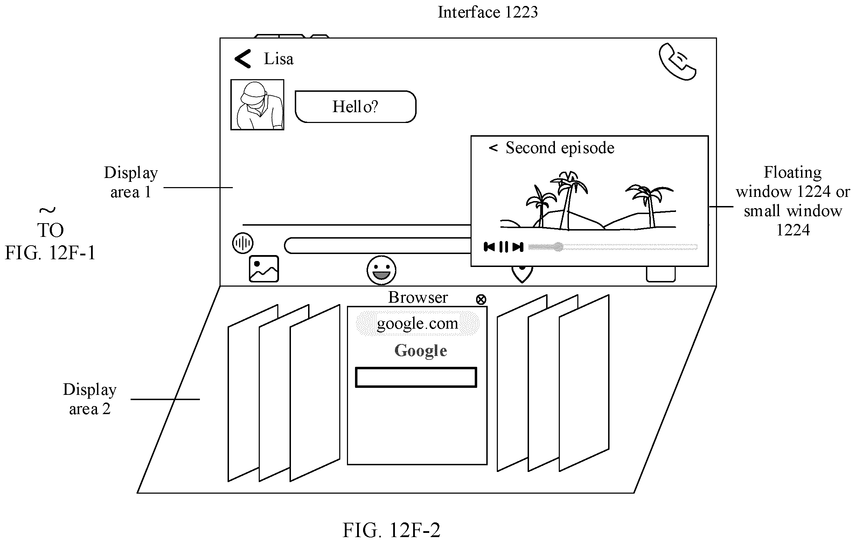

FIG. 12A to FIG. 12F-2 are diagrams of examples of manners of processing controls such as a floating window and a small window on a to-be-split-screen interface and/or a split-screen interface according to an embodiment of this application;

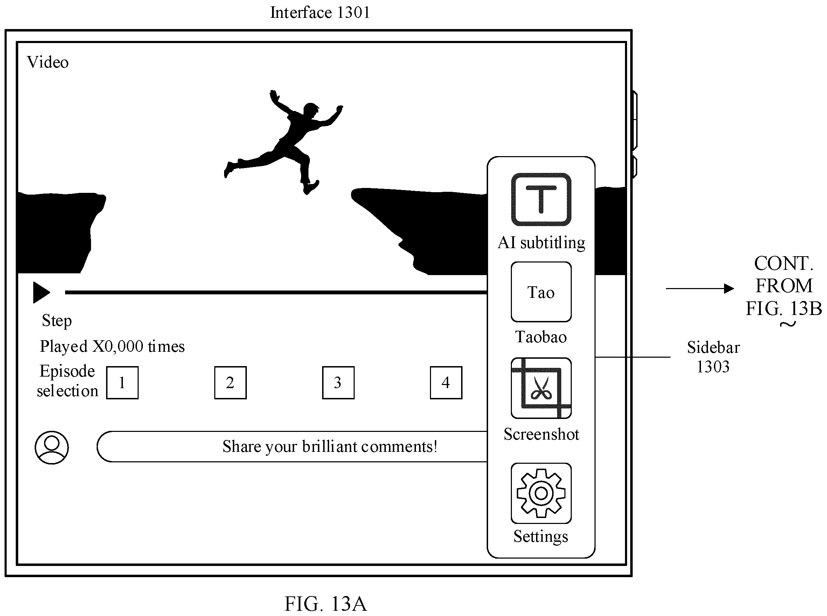

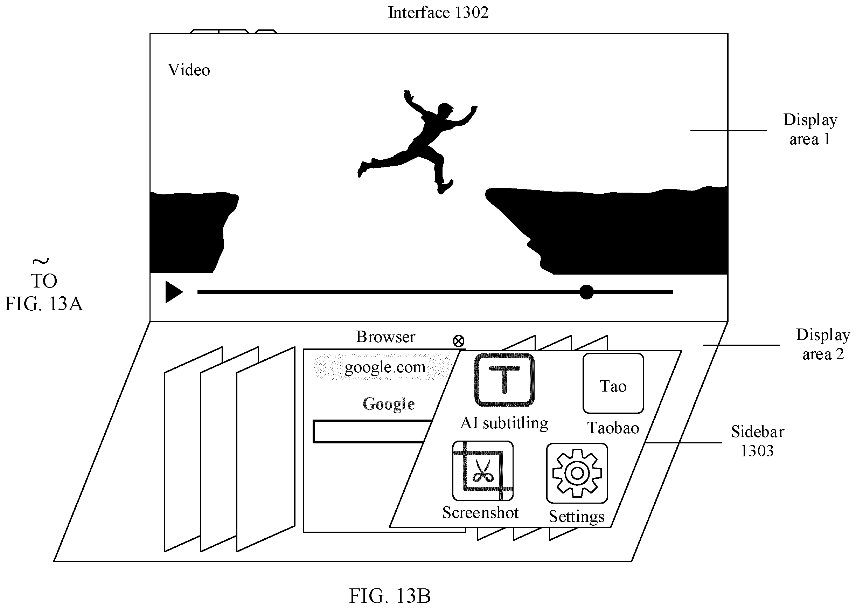

FIG. 13A and FIG. 13B are a diagram of an example of a manner of processing a control like a sidebar on a to-be-split-screen interface and/or a split-screen interface according to an embodiment of this application;

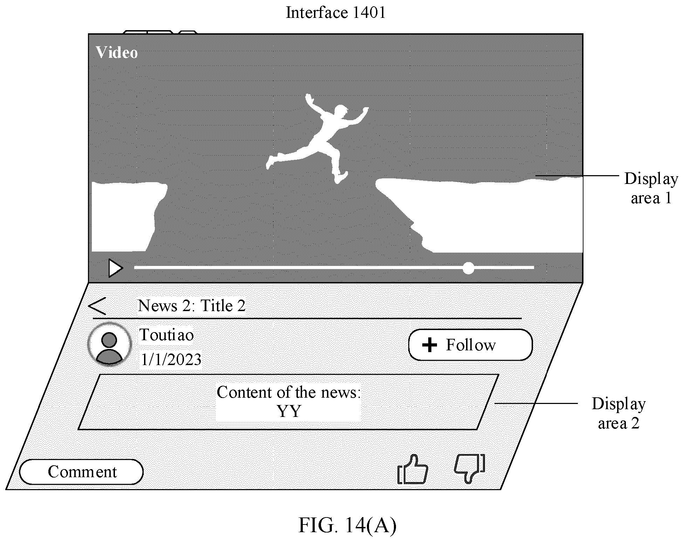

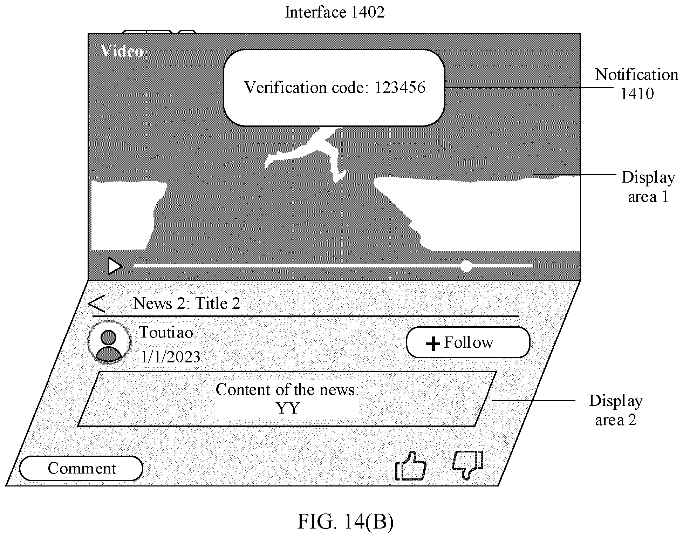

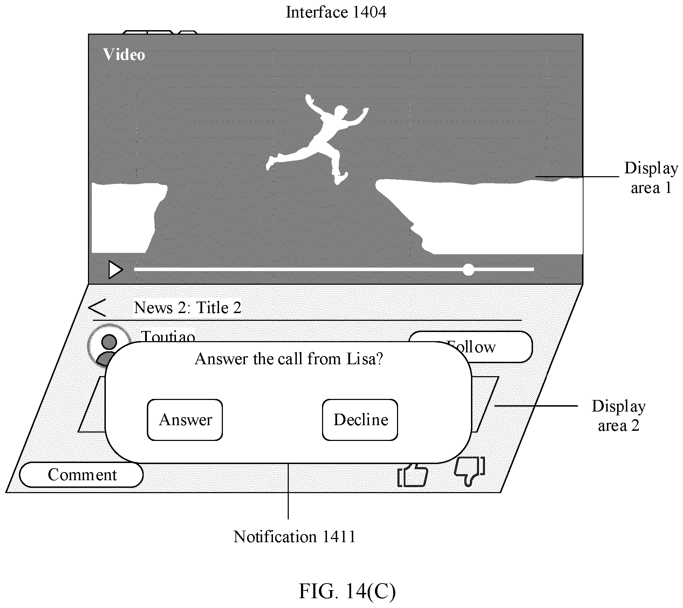

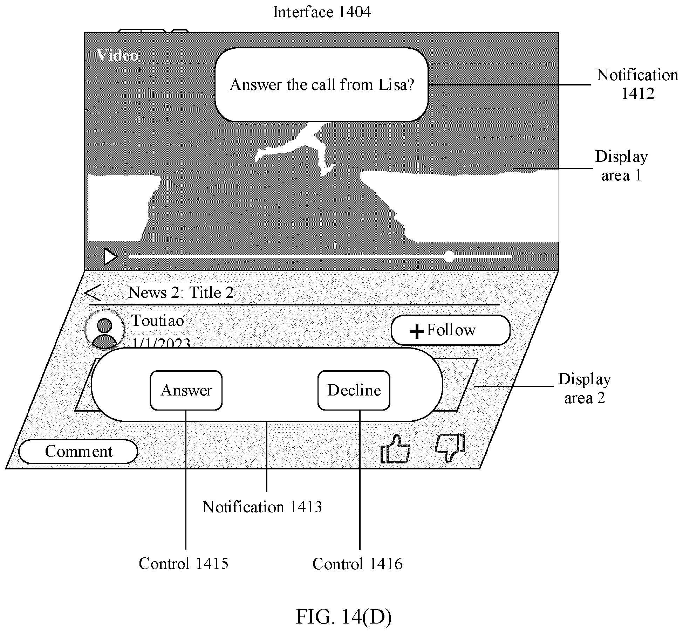

FIG. 14(A) to FIG. 14(D) are diagrams of an example of a manner of processing a notification by an electronic device on a to-be-split-screen interface and/or a split-screen interface according to an embodiment of this application;

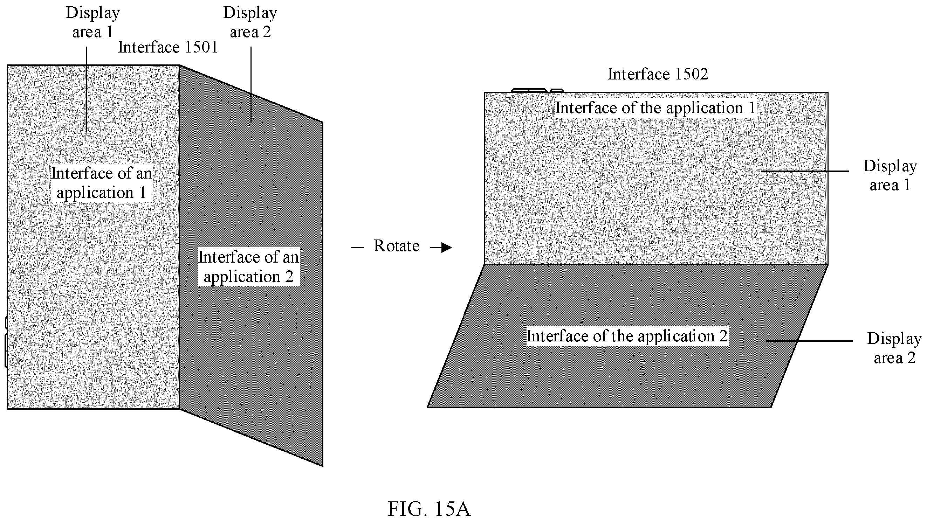

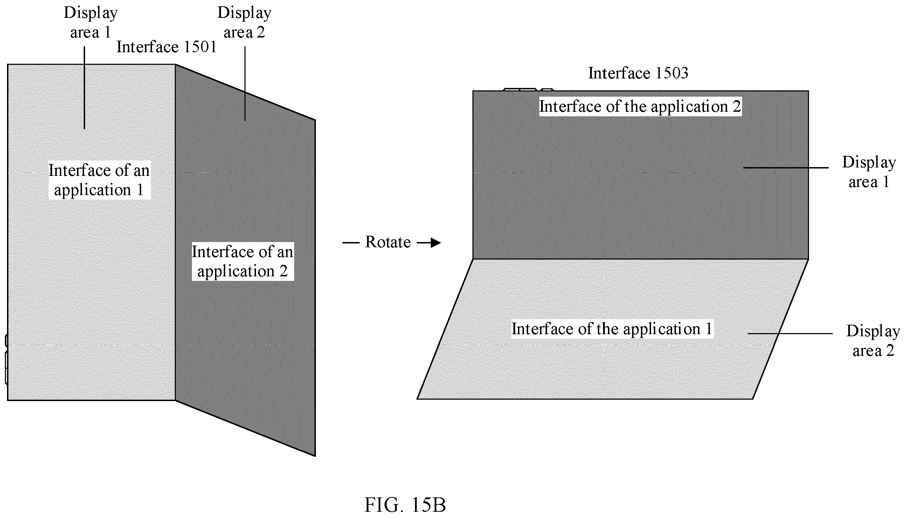

FIG. 15A and FIG. 15B are diagrams of an example of rotating a split-screen interface according to an embodiment of this application;

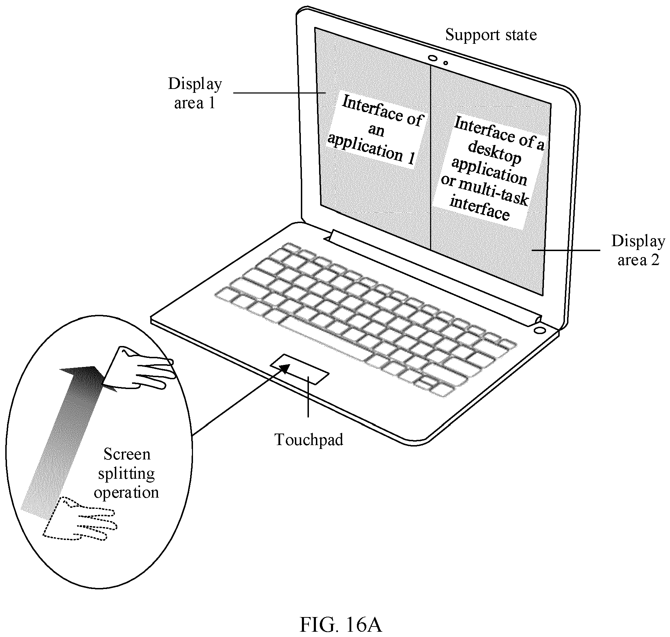

FIG. 16A to FIG. 16D are diagrams of examples in which, when an electronic device is a notebook computer, a screen splitting operation, an application switching operation, an application content switching operation, or the like is entered by using a screen 2 or a touchpad, so that the electronic device displays a corresponding interface according to an embodiment of this application;

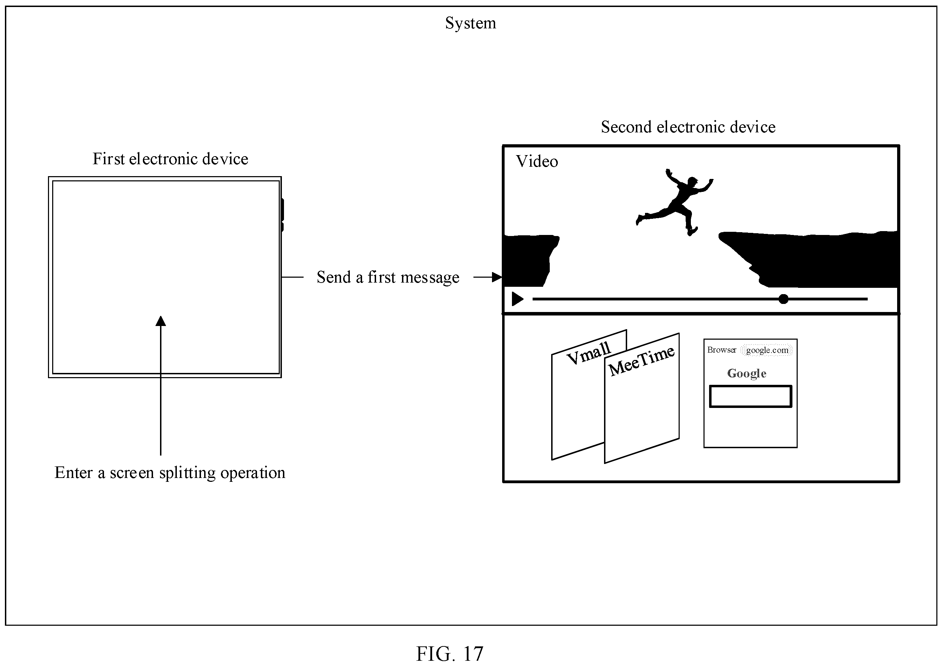

FIG. 17 is a diagram of an example in which a first electronic device indicates a second electronic device to perform screen splitting according to an embodiment of this application; and

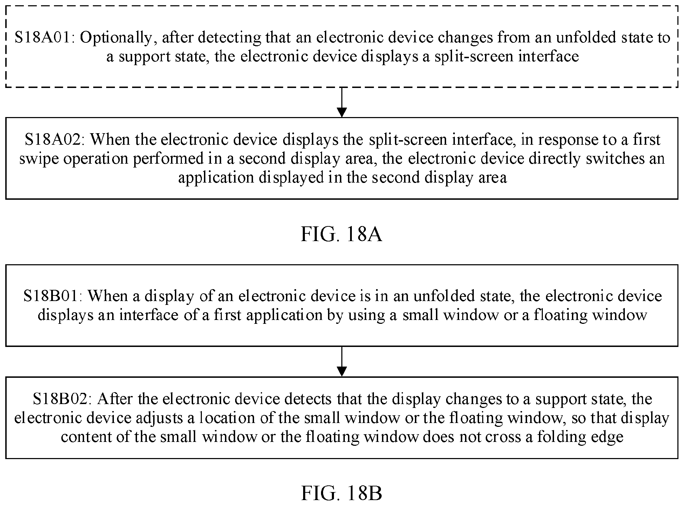

FIG. 18A and FIG. 18B are diagrams of an example of a procedure of an interface display method according to an embodiment of this application.

## DESCRIPTION OF EMBODIMENTS

Terms used in the following embodiments of this application are merely intended to describe specific embodiments, but are not intended to limit this application. Terms "one", "a", "the", "the foregoing", "this", and "the one" of singular forms used in this specification of this application are also intended to include plural forms, unless otherwise specified in the context clearly. It should also be understood that the term "and/or" used in this application means and includes any or all possible combinations of one or more listed items.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more.

A term "user interface (user interface, UI)" in the following embodiments of this application is a medium interface for interaction and information exchange between an application or an operating system and a user, and implements conversion between an internal form of information and a form acceptable to the user. The user interface is source code written in a specific computer language such as Java or an extensible markup language (extensible markup language, XML). Interface source code is parsed and rendered on an electronic device, and is finally presented as content that can be identified by the user. A frequently-used representation form of the user interface is a graphical user interface (graphic user interface, GUI) that is a user interface that is displayed in a graphical manner and that is related to a computer operation. The user interface may be a visual interface element, for example, a text, an icon, a button, a menu, a tab, a text box, a dialog box, a status bar, a navigation bar, or a Widget that is displayed on a display of the electronic device.

Evolving electronic technologies change a physical form of an electronic device. The change of the physical form includes a change of a relative location between a display area and an input area of the electronic device, and a change of a relative location between the display area and the input area, and a user. In addition, relative locations between display areas and input areas of systems formed by combining different electronic devices also change, and relative locations between the display areas and the input areas, and the user also change.

Because locations of the display area and the input area of the electronic device and/or the system change, the display area and the input area of the electronic device and/or the system cannot be fully utilized in a conventional interaction manner. Based on this, embodiments of this application provide an interface display method and an electronic device. The interface display method provided in embodiments of this application provides a new interaction manner for the user, and can make full use of the display area and the input area of the electronic device and/or the system, so that the user can implement functions such as quick screen splitting, switching a displayed application, switching between parent and child pages, and switching to a sibling page by performing simple operations, and no complex operation is required. This improves user experience.

In some embodiments of this application, when a display panel is made of a material, for example, an OLED, an AMOLED, or an FLED, a display of the electronic device can be bent. For example, the display of the electronic device may be folded left and right from the middle, or may be folded up and down from the middle. The display of the electronic device may also be unfolded, that is, a screen may be unfolded and folded. In this application, the display that can be bent is referred to as a foldable display (or referred to as a foldable screen). The foldable display may be one screen, or may be a display formed by combining a plurality of screens. This is not limited herein. The screen of the electronic device may include but is not limited to an outward foldable screen, a scroll screen, an inward foldable screen, a diagonal foldable screen, and the like. The screen of the electronic device may be folded at least once. In the following embodiments, examples in which the screen of the electronic device is an inward foldable screen and an outward foldable screen, and the screen of the electronic device is folded once are used for description.

First, the following describes a physical form, a hardware structure, a software architecture, and a system of the electronic device.

An example in which the electronic device is a foldable mobile phone is used to describe a physical form of the foldable mobile phone.

For example, in some implementations of this application, the physical form of the foldable mobile phone may include a folded state, an unfolded state, a support state, and the like.

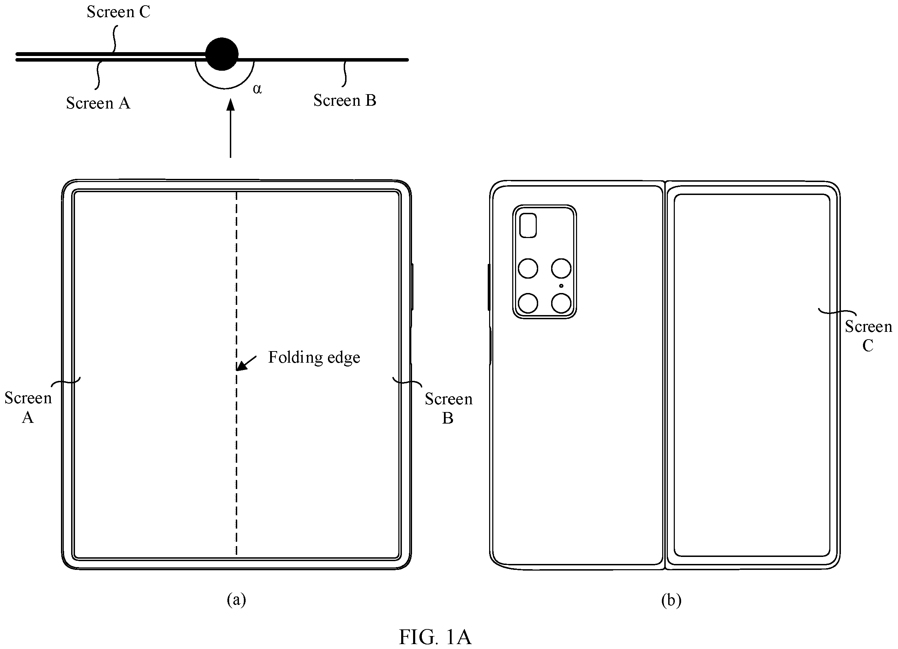

FIG. 1A to FIG. 1C are diagrams of an example of a physical form of a foldable mobile phone according to an embodiment of this application.

(a) and (b) in FIG. 1A show a display form of an inward foldable screen in an unfolded state.

(a) in FIG. 1A shows an example of a front view of the inward foldable screen in the unfolded state. When the inward foldable screen is in the unfolded state, screens that are of a foldable screen and that can be used for displaying include a screen A and a screen B. The screen A and the screen B may be a complete display, or may be two independent displays. In the unfolded state, a display area in which the screen A and the screen B are located may also be referred to as a large screen, and the display area in which the screen A and the screen B are located may also be referred to as an internal screen. For example, when the inward foldable screen is in the unfolded state, an included angle α between the screen A and the screen B is greater than an angle 1 and less than or equal to 180 degrees. For example, a value of the angle 1 may range from 170 degrees to 180 degrees. For example, if the value of the angle 1 is 180 degrees, when the inward foldable screen is in the unfolded state, the included angle α between the screen A and the screen B may be 180 degrees.

When the screen A and the screen B may be a complete display, a folding edge is used as a division boundary between the screen A and the screen B.

(b) in FIG. 1A shows an example of a rear view of the inward foldable screen in the unfolded state. When the inward foldable screen is in the unfolded state, a display of the foldable screen further includes a screen C. The screen C is a display completely independent of the screen A and the screen B.

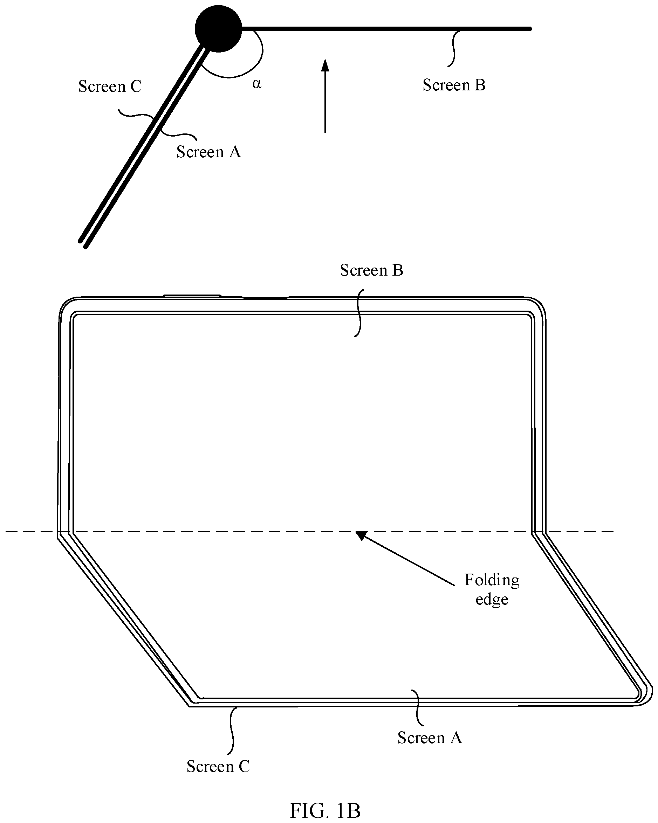

FIG. 1B shows a support state, namely, a folded form in which the screen A and the screen B of the inward foldable screen are bent face to face at a specific included angle. When the inward foldable screen is in the support state, screens that are of the foldable screen and that can be used for displaying include the screen A, the screen B, and the screen C. In an intermediate state, a display area in which the screen A and the screen B are located may also be referred to as a large screen, and the display area in which the screen A and the screen B are located may also be referred to as an internal screen. When the inward foldable screen is in the intermediate state, the screen C may be in a screen-off state, or the screen C may be in a screen-on state. An included angle α between the screen A and the screen B is greater than or equal to an angle 2 and less than or equal to an angle 1. For example, the included angle α between the screen A and the screen B may be 120 degrees.

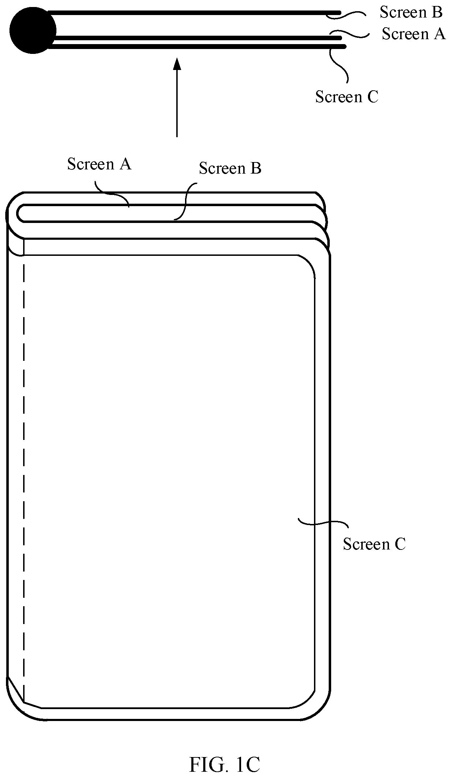

As shown in FIG. 1C, when the inward foldable screen is in a folded state, a screen that is of the foldable screen and that can be used for displaying includes only the screen C. In the folded state, a display area in which the screen C is located may also be referred to as a small screen, and the display area in which the screen C is located may also be referred to as an external screen. The screen A and the screen B are hidden and invisible. For example, when the inward foldable screen is in the folded state, the screen A and the screen B are in a screen-off state, and an included angle α between the screen A and the screen B is greater than or equal to 0 degrees and less than an angle 2. For example, a value of the angle 2 may range from 0 degrees to 10 degrees. For example, if the value of the angle 2 is 0 degrees, when the inward foldable screen is in the folded state, the included angle α between the screen A and the screen B may be 0 degrees.

Optionally, in some implementations of this application, when a relative position between the screen B and the screen A is that the screen B is located on an upper side of the screen A, a display area corresponding to the screen B is a first display area, and a display area corresponding to the screen A is a second display area.

Optionally, in some implementations of this application, when the electronic device is in the support state, a physical structure in which the screen B or the screen A is located may be further configured to support placement of the electronic device. For example, in FIG. 1B, the screen A (screen C) is placed horizontally, and the screen B is placed vertically.

The following uses an example in which the electronic device is a notebook computer to describe a physical form of the notebook computer.

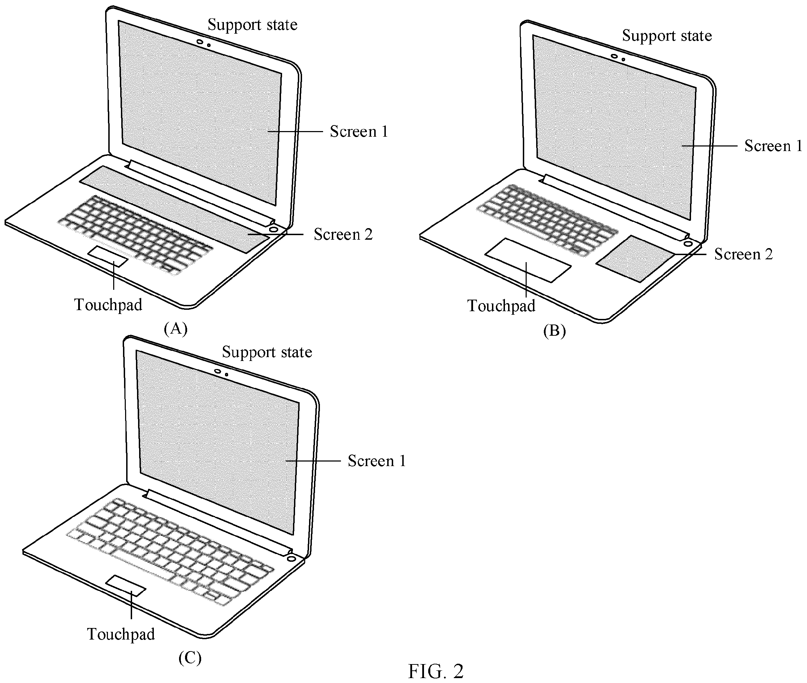

FIG. 2 is a diagram of an example of a physical form of a notebook computer according to an embodiment of this application.

As shown in FIG. 2, the notebook computer has two screens: a screen 1 and a screen 2. The screen 1 is located on a surface B of the notebook computer, and the screen 2 is located on a surface C of the notebook computer.

The screen 2 is a touchscreen that can receive a user input. That is, the screen 1 is a display area, and the screen 2 is a display area and an input area.

Optionally, in some implementations of this application, the screen 1 is a display area and an input area. In other words, the screen 1 is a touchscreen that can receive a user input.

Optionally, in some implementations of this application, the screen 1 includes a display area 1 and a display area 2, and a relative position between the display area 1 and the display area 2 is related to whether the screen 1 is split downward or left and right.

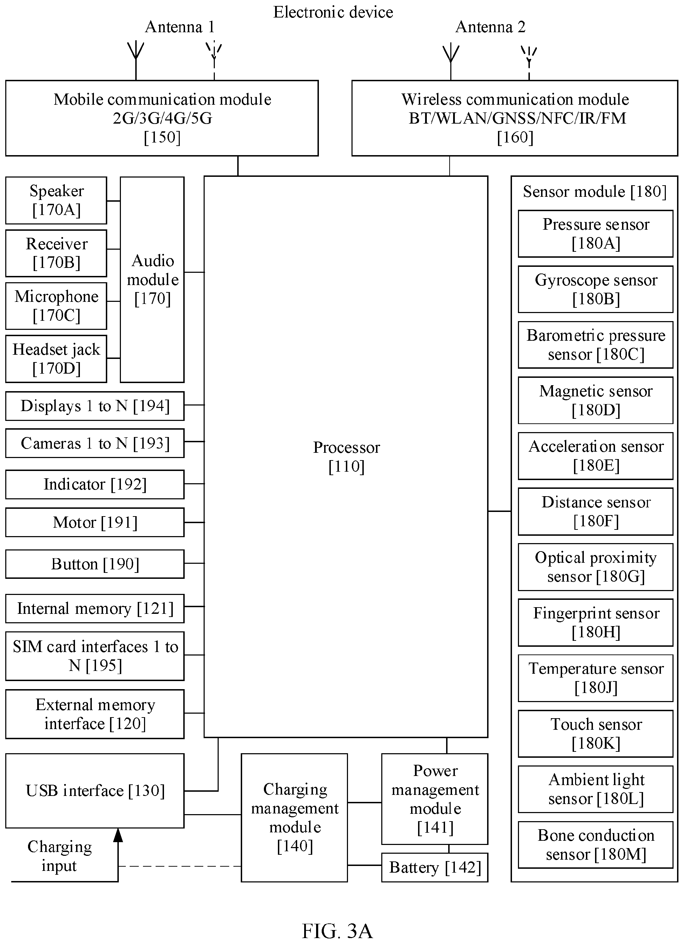

FIG. 3A is a diagram of an example of a hardware architecture of an electronic device according to an embodiment of this application.

The electronic device may be a mobile phone, a tablet computer, a desktop computer, a laptop computer, a handheld computer, a notebook computer, an ultra-mobile personal computer (ultra-mobile personal computer, UMPC), a netbook, a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device, a vehicle-mounted device, a smart household device, and/or a smart city device. A specific type of the electronic device is not limited in this embodiment of this application.

The electronic device may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the electronic device. In some other embodiments of this application, the electronic device may include more or fewer components than those shown in the figure, or combine some components, or split some components, or have different component arrangements. The components in the figure may be implemented by using hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent components, or may be integrated into one or more processors.

The controller may generate an operation control signal based on instruction operation code and a time sequence signal, to complete control of instruction fetching and instruction execution.

A memory may further be disposed in the processor 110, and is configured to store instructions and data. In some embodiments, the memory in the processor 110 is a cache memory. The memory may store instructions or data that has been used or cyclically used by the processor 110. If the processor 110 needs to use the instructions or the data again, the processor may directly invoke the instructions or the data from the memory. This avoids repeated access and reduces waiting time of the processor 110, so that system efficiency is improved.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronization serial bus, and includes one serial data line (serial data line, SDA) and one serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through the I2C interface, so that the processor 110 communicates with the touch sensor 180K through the I2C bus interface, to implement a touch function of the electronic device.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be used to perform audio communication, and sample, quantize, and code an analog signal. In some embodiments, the audio module 170 may be coupled to the wireless communication module 160 through a PCM bus interface. In some embodiments, the audio module 170 may also transmit an audio signal to the wireless communication module 160 through the PCM interface, to implement a function of answering a call through a Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral component such as the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a shooting function of the electronic device. The processor 110 communicates with the display 194 through the DSI interface, to implement a display function of the electronic device.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to the charger to charge the electronic device, or may be used for data transmission between the electronic device and a peripheral device, or may be configured to connect to a headset, to play an audio by using the headset. The interface may be further configured to connect to another electronic device like an AR device.

It may be understood that an interface connection relationship between the modules illustrated in this embodiment of the present invention is merely an example for description, and does not constitute any limitation on a structure of the electronic device. In some other embodiments of this application, the electronic device may alternatively use an interface connection manner different from that in the foregoing embodiment, or use a combination of a plurality of interface connection manners.

The charging management module 140 is configured to receive a charging input from the charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the electronic device. The charging management module 140 may further supply power to the electronic device by using the power management module 141 while charging the battery 142.

The power management module 141 is configured to connect to the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may be further configured to monitor parameters such as a battery capacity, a battery cycle count, and a battery health status (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the electronic device may be implemented by using the antenna 1, the antenna 2, the mobile communication module 150, the wireless communication module 160, the modem processor, the baseband processor, and the like.

The antenna 1 and the antenna 2 are configured to send and receive an electromagnetic wave signal. Each antenna of the electronic device may be configured to cover one or more communication frequency bands. Different antennas may further be multiplexed, to improve antenna utilization. For example, the antenna 1 may be multiplexed as a diversity antenna of a wireless local area network. In other embodiments, the antenna may be used in combination with a tuning switch.

The mobile communication module 150 may provide a wireless communication solution that includes 2G/3G/4G/5G or the like and that is applied to the electronic device. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in a same device as the mobile communication module 150 or another functional module.

The wireless communication module 160 may provide a solution to wireless communication applicable to the electronic device, for example, a wireless local area network (wireless local area networks, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more components integrating at least one communication processor module. The wireless communication module 160 receives an electromagnetic wave by the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments, in the electronic device, the antenna 1 is coupled to the mobile communication module 150, and the antenna 2 is coupled to the wireless communication module 160, so that the electronic device can communicate with a network and another device according to a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation systems, SBAS).

The electronic device implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flex light-emitting diode, FLED), a mini LED, a micro LED, a micro OLED, a quantum dot light emitting diode (quantum dot light emitting diode, QLED), or the like. In some embodiments, the electronic device may include one or N displays 194, where N is a positive integer greater than 1.

The electronic device may implement a shooting function through the camera 193, the ISP, the video codec, the GPU, the display 194, the application processor and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, and brightness of the image. The ISP may further optimize parameters such as exposure and a color temperature of a shooting scenario. In some embodiments, the ISP may be disposed in the camera 193.

The camera 193 may be configured to capture a static image or a video. An optical image of an object is generated through the lens, and is projected onto the photosensitive element. The photosensitive element may be a charge-coupled device (charge-coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device may include one or N cameras 193, where N is a positive integer greater than 1.

The digital signal processor is configured to process a digital signal, and may process another digital signal in addition to the digital image signal. For example, when the electronic device selects a frequency, the digital signal processor is configured to perform Fourier transform and the like on frequency energy.

The video codec is configured to compress or decompress a digital video. The electronic device may support one or more types of video codecs. Therefore, the electronic device may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transmission between human brain neurons, and may further continuously perform self-learning. Applications such as intelligent cognition of the electronic device may be implemented through the NPU, for example, image recognition, facial recognition, speech recognition, and text understanding.

The internal memory 121 may include one or more random access memories (random access memory, RAM) and one or more non-volatile memories (non-volatile memory, NVM).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM is usually referred to as a DDR5 SDRAM), and the like.

The non-volatile memory may include a magnetic disk storage device and a flash memory (flash memory).

The flash memory may be classified into an NOR flash, an NAND flash, a 3D NAND flash, and the like based on an operation principle; may be classified into a single-level cell (single-level cell, SLC), a multi-level cell (multi-level cell, MLC), a triple-level cell (triple-level cell, TLC), a quad-level cell (quad-level cell, QLC), and the like based on a quantity of electric potential levels of a cell; or may be classified into a universal flash storage (English: universal flash storage, UFS), an embedded multimedia card (embedded multimedia card, eMMC), and the like based on a storage specification.

The random access memory may be directly read and written by the processor 110, may be configured to store executable programs (such as machine instructions) of an operating system or another running program, and may also be configured to store data of users and applications.

The nonvolatile memory may also store executable programs, data of a user, data of an application, and the like, which may be loaded into the random access memory in advance for directly reading and writing by the processor 110.

The external memory interface 120 may be configured to connect to an external non-volatile memory, to extend a storage capability of the electronic device. The external non-volatile memory communicates with the processor 110 through the external memory interface 120, to implement a data storage function. For example, files such as music and videos are stored in the external non-volatile memory.

The electronic device may implement audio functions by using the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: encode and decode an audio signal. In some embodiments, the audio module 170 may be disposed in the processor 110, or some functional modules in the audio module 170 are disposed in the processor 110.

The speaker 170A, also referred to as a "horn", is configured to convert an electrical audio signal into a sound signal. The electronic device may listen to music or answer a hands-free call by using the speaker 170A.

The receiver 170B, also referred to as an "earpiece", is configured to convert an audio electrical signal into a sound signal. When a call is answered or audio information is listened to by using the electronic device, the receiver 170B may be put close to a human ear to listen to a voice.

The microphone 170C, also referred to as a "mike" or a "mic", is configured to convert a sound signal into an electrical signal. When making a call or sending a voice message, a user may make a sound near the microphone 170C through the mouth of the user, to input a sound signal to the microphone 170C. At least one microphone 170C may be disposed in the electronic device. In some other embodiments, two microphones 170C may be disposed in the electronic device, to collect a sound signal and further implement a noise reduction function. In some other embodiments, three, four, or more microphones 170C may alternatively be disposed in the electronic device, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A, such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The electronic device determines a pressure strength based on the change of the capacitance. When a touch operation is performed on the display 194, the electronic device detects intensity of the touch operation through the pressure sensor 180A. The electronic device may calculate a touch location based on a detection signal of the pressure sensor 180A. In some embodiments, touch operations that are performed at a same touch location but have different touch operation intensity may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to the first pressure threshold is performed on the SMS message application icon, an instruction for creating a new SMS message is performed.

The gyroscope sensor 180B may be configured to determine a motion posture of the electronic device. In some embodiments, angular velocities of the electronic device around the three axes (that is, the x-axis, the y-axis, and the z-axis) may be determined by using the gyroscope sensor 180B. The gyroscope sensor 180B may be configured to implement image stabilization during photographing. For example, when a shutter is pressed, the gyroscope sensor 180B detects a jitter angle of the electronic device, calculates, based on the angle, a distance for which a lens module needs to compensate, and enables the lens to offset jitter of the electronic device through reverse motion, to implement image stabilization. The gyroscope sensor 180B may also be used in a navigation scenario and a somatic game scenario.

In embodiments of this application, the display 194 of the electronic device may be folded to form a plurality of screens. The gyroscope sensor 180B may be disposed in each of the plurality of screens, and is configured to measure an orientation (that is, a direction vector of the orientation) of the corresponding screen. The electronic device may determine an included angle between adjacent screens (for example, an included angle between a screen A and a screen B) based on an angle change of the orientation that is of each screen and that is measured by the gyroscope sensor 180B.

It should be noted that in embodiments of this application, a foldable screen (for example, the display 194) of the electronic device may be folded to form a plurality of screens. Each screen may include a gyroscope sensor (for example, the gyroscope 180B), configured to measure an orientation (that is, a direction vector of the orientation) of the corresponding screen. For example, with reference to FIG. 1A to FIG. 3A, the display 194 of the electronic device may be folded to form the screen A (namely, a first screen) and the screen B (namely, a second screen). In this case, both the screen A and the screen B include gyroscope sensors 180B, configured to respectively measure orientations of the screen A and the screen B. The electronic device may determine an included angle between adjacent screens and an angle relationship between each screen and a horizontal plane based on an angle change of the measured orientation of each screen.

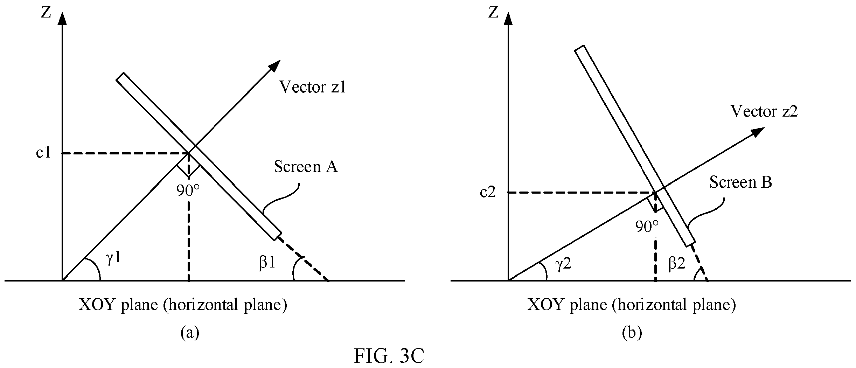

For example, the foldable screen of the electronic device may be folded to form the screen A and the screen B shown in FIG. 3C. A gyroscope sensor A is disposed on the screen A, and a gyroscope sensor B is disposed on the screen B. A principle of measuring an orientation (namely, a direction vector of an orientation) of the screen A by the gyroscope sensor A and measuring an orientation (namely, a direction vector of an orientation) of the screen B by the gyroscope sensor B, and a principle of calculating the included angle $\alpha$ between the screen A and the screen B by the electronic device based on the orientation of the screen A and the orientation of the screen B are described in embodiments of this application.

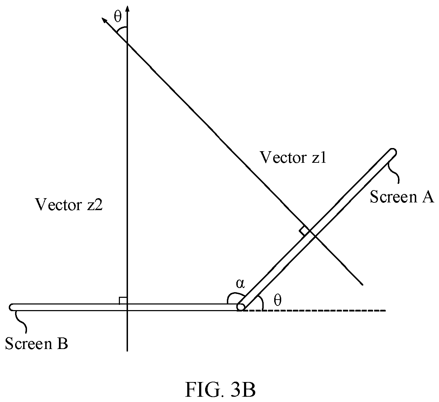

FIG. 3B and FIG. 3C are diagrams of an example of determining a physical form of the electronic device according to an embodiment of this application.

The electronic device 100 may learn, through measurement by using the gyroscope sensor disposed on each screen, a direction vector of an orientation of each screen in a coordinate system of the gyroscope sensor disposed on each screen. For example, refer to a side view of the electronic device 100 shown in FIG. 3B. The electronic device 100 learns, through measurement, that a direction vector of an orientation of the screen A in a coordinate system of the gyroscope sensor A is a vector $\vec{z1}$, and a direction vector of an orientation of the screen B in a coordinate system of the gyroscope sensor B is a vector z2. The electronic device 100 may calculate an included angle $\theta$ between the vector z1 and the vector z2 by using Formula (1):

$$\theta = \text{arc } \cos\left(\frac{\vec{z1}\cdot\vec{z2}}{\left|\vec{z1}\right|\times\left|\vec{z2}\right|}\right) \text{ Formula (1)}$$

It can also be learned from FIG. 3B that, because the vector $\vec{z1}$ is perpendicular to the screen A and the vector $\vec{z2}$ is perpendicular to the screen B, the included angle $\alpha$ between the screen A and the screen B may be equal to 180°-$\theta$. In other words, the electronic device 100 may determine the included angle $\alpha$ between the screen A and the screen B based on the measured direction vector (namely, the vector $\vec{z1}$) of the orientation of the screen A in the coordinate system of the gyroscope sensor A and the measured direction vector (namely, the vector $\vec{z2}$) of the orientation of the screen B in the coordinate system of the gyroscope sensor B.

It should be noted that, although locations of the gyroscope sensors disposed on the screen A and the screen B do not overlap, that is, origins of the coordinate systems of the gyroscope sensors on the screen A and the screen B do not overlap, axes X, axes Y, and axes Z in the two coordinate systems are parallel. Therefore, it may be considered that the coordinate systems of the gyroscope sensors disposed on the screen A and the screen B are parallel. In this way, although the vector z1 and the vector z2 are not in a same coordinate system, the included angle $\theta$ between the vector z1 and the vector z2 may still be calculated by using Formula (1) because axes in the two coordinate systems are parallel.

In some embodiments, the included angle $\alpha$ between the screen A and the screen B may alternatively be measured through cooperation with one or more other sensors. For example, one acceleration sensor may be disposed on each screen of the foldable screen. The electronic device 100 (for example, the processor 110) may measure, by using the acceleration sensor, a motion acceleration when each screen is rotated; and then calculate, based on the measured motion acceleration, an angle at which one screen rotates relative to another screen, that is, the included angle $\alpha$ between the screen A and the screen B.

In some other embodiments, the gyroscope sensor may be a virtual gyroscope sensor formed by cooperating with a plurality of other sensors. The virtual gyroscope sensor may be configured to calculate an included angle between adjacent screens of the foldable screen, namely, the included angle $\alpha$ between the screen A and the screen B.

In some other embodiments, an angle sensor is installed on a folded part (for example, a rotating shaft) of a folding line of the electronic device 100. The electronic device 100 may measure the included angle $\alpha$ between the screen A and the screen B by using the angle sensor disposed on the folded part of the foldable screen.

In some embodiments of this application, the electronic device 100 may further measure an included angle $\beta1$ between the screen A and the horizontal plane and an included angle $\beta2$ between the screen B and the horizontal plane by using the gyroscope 180B.

(a) in FIG. 3C shows the coordinate system of the gyroscope sensor of the screen A of the electronic device 100. A plane formed by the axis X and the axis Y is a local horizontal plane, and a plane formed by the axis Y and the axis Z is a local meridian plane. A direction vector of an orientation of the screen A of the electronic device 100 in the coordinate system of the gyroscope sensor is a vector $\vec{z1}$=(a1, b1, c1). An included angle $\gamma1$ between the vector z1 and an XOY plane (namely, the horizontal plane) has the following relationship: c1 = $|\vec{z1}|$ × $\sin\gamma1$. The screen A of the electronic device 100 is perpendicular to the vector $\vec{z1}$, and an included angle $\beta1$ between a plane on which the screen A of the electronic device 100 is located and the XOY plane (namely, the horizontal plane) and the included angle $\gamma1$ are complementary to each other, that is, $\beta1+\gamma1=90°$. It can be learned that the vector $\vec{z1}$ and an included angle $\beta$ between the plane on which the screen A of the electronic device 100 is located and the horizontal plane has the following relationship: $c1 = \vec{z1} \times \cos\beta1$.

$$\beta1 = \text{arc } \cos\left(\frac{c1}{|\vec{z1}|}\right) \text{ Formula (2)}$$

(b) in FIG. 3C shows the coordinate system of the gyroscope sensor of the screen B of the electronic device 100. A plane formed by the axis X and the axis Y is a local horizontal plane, and a plane formed by the axis Y and the axis Z is a local meridian plane. A direction vector of an orientation of the screen B of the electronic device 100 in the coordinate system of the gyroscope sensor is a vector z2=(a2, b2, c2). An included angle $\gamma2$ between the vector $\vec{z2}$ and an XOY plane (namely, the horizontal plane) has the following relationship: $c2 = \vec{z2} \times \sin\gamma2$. The screen B of the electronic device 100 is perpendcular to the vector $\vec{z2}$, and an included angle $\beta2$ between a plane on which the screen B of the electronic device 100 is located and the XOY plane (namely, the horizontal plane) and the included angle $\gamma2$ are complementary to each other, that is, $\beta2 + \gamma2 = 90°$. It can be learned that the vector z2 and the included angle $\beta2$ between the plane on which the screen B of the electronic device 100 is located and the horizontal plane has the following relationship: $c2 = \vec{z2} \times \cos\beta2$.

$$\beta2 = \text{arc } \cos\left(\frac{c2}{|\vec{z2}|}\right) \text{ Formula (3)}$$

In conclusion, the electronic device 100 may determine, by using Formula (2), the included angle $\beta1$ between the screen A of the electronic device 100 and the horizontal plane based on the measured direction vector $\vec{z1} = (a1, b1, c1)$ of the orientation of the screen A in the coordinate system of the gyroscope sensor. The electronic device 100 may determine, by using Formula (3), the included angle $\beta2$ between the screen B of the electronic device 100 and the horizontal plane based on the measured direction vector z2=(a2, b2, c2) of the orientation of the screen B in the coordinate system of the gyroscope sensor.

Optionally, in some implementations of this application, when the included angle between the orientation vector of the screen A or the screen B and the horizontal plane in the coordinate system of the gyroscope sensor is near 90°, and in a folded form in which the screen A and the screen B are bent face to face at a specific included angle, the electronic device is in the support state.

Optionally, in some implementations of this application, the electronic device determines a current physical form only when the included angle $\alpha$ between the screen A and the screen B does not change within threshold duration.

The barometric pressure sensor 180C is configured to measure barometric pressure. In some embodiments, the electronic device calculates an altitude based on a barometric pressure value measured by the barometric pressure sensor 180C, to assist in positioning and navigation.

Th magnetic sensor 180D includes a Hall effect sensor. The electronic device may detect opening and closing of a flip cover by using the magnetic sensor 180D. In some embodiments, when the electronic device is a flip phone, the electronic device may detect opening and closing of a flip cover based on the magnetic sensor 180D. Further, a feature, for example, automatic unlocking of the flip cover is set based on a detected opening or closing state of the flip cover.

The acceleration sensor 180E may detect accelerations in various directions (usually on three axes) of the electronic device. When the electronic device is static, magnitude and a direction of gravity may be detected. The acceleration sensor 180E may be further configured to identify a posture of the electronic device, and is used in an application such as switching between a landscape mode and a portrait mode or a pedometer.

The distance sensor 180F is configured to measure a distance. The electronic device may measure a distance through infrared or laser. In some embodiments, in a photographing scenario, the electronic device may measure a distance by using the distance sensor 180F, to implement quick focusing.

The optical proximity sensor 180G may include, for example, a light emitting diode (LED) and an optical detector, for example, a photodiode. The light emitting diode may be an infrared light emitting diode. The electronic device emits infrared light outwards through the light-emitting diode. The electronic device uses the photodiode to detect infrared reflected light from a nearby object. When detecting sufficient reflected light, the electronic device may determine that there is an object near the electronic device. When detecting insufficient reflected light, the electronic device may determine that there is no object near the electronic device. The electronic device may detect, by using the optical proximity sensor 180G, that a user holds the electronic device close to the ear for a call, to automatically turn off a screen to save power. The optical proximity sensor 180G may also be used in a smart cover mode or a pocket mode to automatically perform screen unlocking or locking.

The ambient light sensor 180L is configured to sense ambient light brightness. The electronic device may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device is in a pocket, to prevent an accidental touch.

The fingerprint sensor 180H is configured to collect a fingerprint. The electronic device may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the electronic device executes a temperature processing policy based on the temperature detected by the temperature sensor 180J. For example, when the temperature reported by the temperature sensor 180J exceeds a threshold, the electronic device reduces performance of a processor near the temperature sensor 180J, to reduce power consumption and implement thermal protection. In some other embodiments, when the temperature is lower than another threshold, the electronic device heats the battery 142 to avoid abnormal shutdown of the electronic device that is caused due to a low temperature. In some other embodiments, when the temperature is lower than still another threshold, the electronic device boosts an output voltage of the battery 142, to avoid an abnormal shutdown caused by a low temperature.

The touch sensor 180K is also referred to as a "touch component". The touch sensor 180K may be disposed on the display 194, and the touch sensor 180K and the display 194 constitute a touchscreen, which is also referred to as a "touchscreen". The touch sensor 180K is configured to detect a touch operation performed on or near the touch sensor 180K. The touch sensor may transfer the detected touch operation to the application processor, to determine a type of a touch event. A visual output related to the touch operation may be provided on the display 194. In some other embodiments, the touch sensor 180K may alternatively be disposed on a surface of the electronic device at a position different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a body pulse to receive a blood pressure beating signal. In some embodiments, the bone conduction sensor 180M may also be disposed in the headset, to obtain a bone conduction headset. The audio module 170 may obtain a speech signal through parsing based on the vibration signal that is of the vibration bone of the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch-sensitive button. The electronic device may receive a key input, and generate a key signal input related to user setting and function control of the electronic device.

The motor 191 may generate a vibration prompt. The motor 191 may be configured to provide an incoming call vibration prompt and a touch vibration feedback. For example, touch operations performed on different applications (for example, photographing and audio playing) may correspond to different vibration feedback effects. The motor 191 may also correspond to different vibration feedback effects for touch operations performed on different areas of the display 194. Different application scenarios (for example, a time reminder, information receiving, an alarm clock, a game) may also correspond to different vibration feedback effects. A touch vibration feedback effect may be further customized.

The indicator 192 may be an indicator light, and may indicate a charging status and a power change, or may indicate a message, a missed call, a notification, and the like.

The SIM card interface 195 is configured to connect to a SIM card. The SIM card may be inserted into the SIM card interface 195 or pulled out of the SIM card interface 195, to implement contact with or separation from the electronic device. The electronic device may support one or N SIM card interfaces, and N is a positive integer greater than 1. The SIM card interface 195 may support a nano-SIM card, a micro-SIM card, a SIM card, and the like. A plurality of cards may be inserted into a same SIM card interface 195. The plurality of cards may be of a same type or different types. The SIM card interface 195 may be compatible with different types of SIM cards. The SIM card interface 195 is also compatible with an external storage card. The electronic device interacts with a network through the SIM card, to implement functions such as a call and data communication. In some embodiments, the electronic device uses eSIM, that is, an embedded SIM card. The eSIM card may be embedded into the electronic device, and cannot be separated from the electronic device.

A software system of the electronic device may use a layered architecture, an event-driven architecture, a microkernel architecture, a microservice architecture, or a cloud architecture. In this embodiment of the present invention, an Android system of a layered architecture is used as an example to illustrate the software structure of the electronic device.

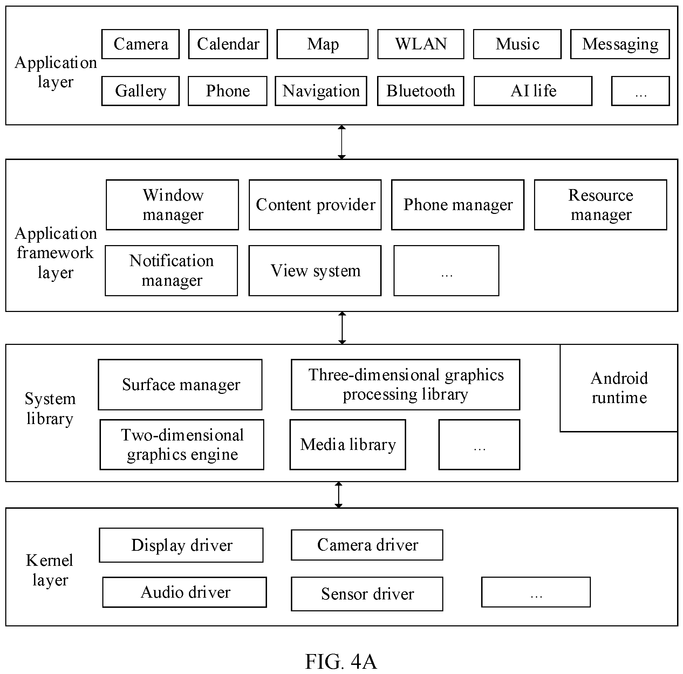

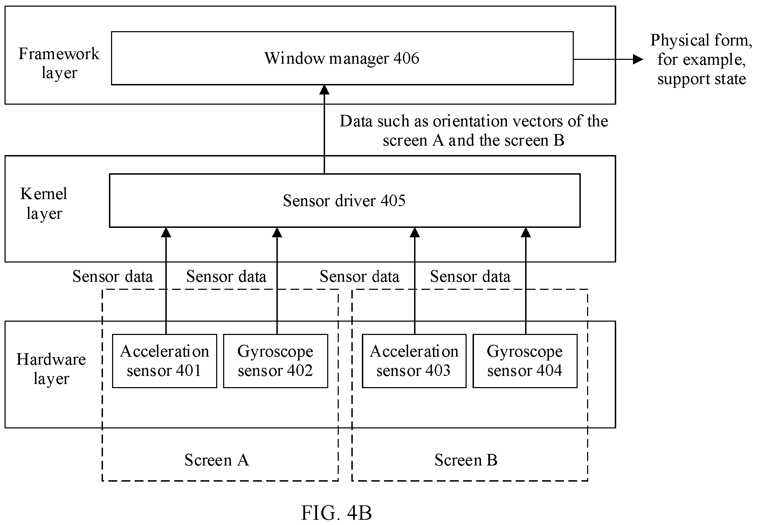

FIG. 4A and FIG. 4B are diagrams of examples of a software architecture of the electronic device according to an embodiment of this application.

In a hierarchical architecture, software is divided into several layers, and each layer has a clear role and task. The layers communicate with each other through a software interface. In some embodiments, the Android system is divided into four layers: an application layer, an application framework layer, Android runtime (Android runtime) and a system library, and a kernel layer from top to bottom.

The application layer may include a series of application packages.

As shown in FIG. 4A, the application packages may include applications such as Camera, Gallery, Calendar, Phone, Map, Navigation, WLAN, Bluetooth, Music, Videos, and Messaging.

The application framework layer provides an application programming interface (application programming interface, API) and a programming framework for an application at the application layer. The application framework layer includes some predefined functions.

As shown in FIG. 4A, an application framework layer may include a window manager, a content provider, a view system, a phone manager, a resource manager, a notification manager, and the like.

The window manager is configured to manage a window program. The window manager may obtain a size of a display, determine whether there is a status bar, perform screen locking, take a screenshot, and the like.

The content provider is configured to: store and obtain data, and enable the data to be accessed by an application. The data may include a video, an image, an audio, calls that are dialed and answered, a browsing history, a bookmark, a phone book, and the like.

The view system includes visual controls such as a control for displaying a text and a control for displaying a picture. The view system may be configured to construct an application. A display interface may include one or more views. For example, a display interface including a notification icon of Messaging may include a text display view and an image display view.

The phone manager is configured to provide a communication function of the electronic device, for example, management of a call status (including answering or declining).

The resource manager provides various resources such as a localized character string, an icon, a picture, a layout file, and a video file for an application.

The notification manager enables an application to display notification information in a status bar, and may be configured to convey a notification message. The notification manager may automatically disappear after a short pause without a user interaction. For example, the notification manager is configured to: notify download completion, give a message notification, and the like. The notification manager may alternatively be a notification that appears in a top status bar of the system in a form of a graph or a scroll bar text, for example, a notification of an application that is run on a background, or may be a notification that appears on the screen in a form of a dialog window. For example, text information is displayed in the status bar, an announcement is given, the electronic device vibrates, or the indicator light blinks.

The Android runtime includes a kernel library and a virtual machine. The Android runtime is responsible for scheduling and management of the Android system.

The kernel library includes two parts: a function that needs to be called in Java language and a kernel library of Android.

The application layer and the application framework layer run on the virtual machine. The virtual machine executes java files of the application layer and the application framework layer as binary files. The virtual machine is configured to implement functions such as object lifecycle management, stack management, thread management, security and exception management, and garbage collection.

The system library may include a plurality of function modules, such as a surface manager (surface manager), a media library (Media Library), a three-dimensional graphics processing library (for example, OpenGL ES), and a 2D graphics engine (for example, SGL).

The surface manager is configured to manage a display subsystem and provide fusion of 2D and 3D layers for a plurality of applications.

The media library supports playing and recording in a plurality of commonly used audio and video formats, and static image files. The media library may support a plurality of audio and video encoding formats, for example, MPEG-4, H.264, MP3, AAC, AMR, JPG, and PNG.

The three-dimensional graphics processing library is configured to implement three-dimensional graphics drawing, image rendering, composition, layer processing, and the like.

The 2D graphics engine is a drawing engine for 2D drawing.

The kernel layer is a layer between hardware and software. The kernel layer includes at least a display driver, a camera driver, an audio driver, and a sensor driver.

As shown in FIG. 4B, optionally, in some embodiments of this application, an acceleration sensor 401 and a gyroscope sensor 402 are disposed on the screen A, and an acceleration sensor 403 and a gyroscope sensor 404 are disposed on the screen B. The acceleration sensor 401, the gyroscope sensor 402, the acceleration sensor 403, and the gyroscope sensor 404 at the hardware layer report collected data to a sensor driver 405 at the kernel layer. After processing the data, the sensor driver 405 at the kernel layer reports processed data to a window manager 406. The data uploaded by the sensor driver 405 may be a normal vector of the screen A and an orientation vector of the screen B, or may be an included angle between the screen A and the screen B, or the like. This is not limited herein. The window manager determines, based on the data reported by the sensor driver 405, the current physical form of the electronic device, for example, the support state, the folded state, or the unfolded state.

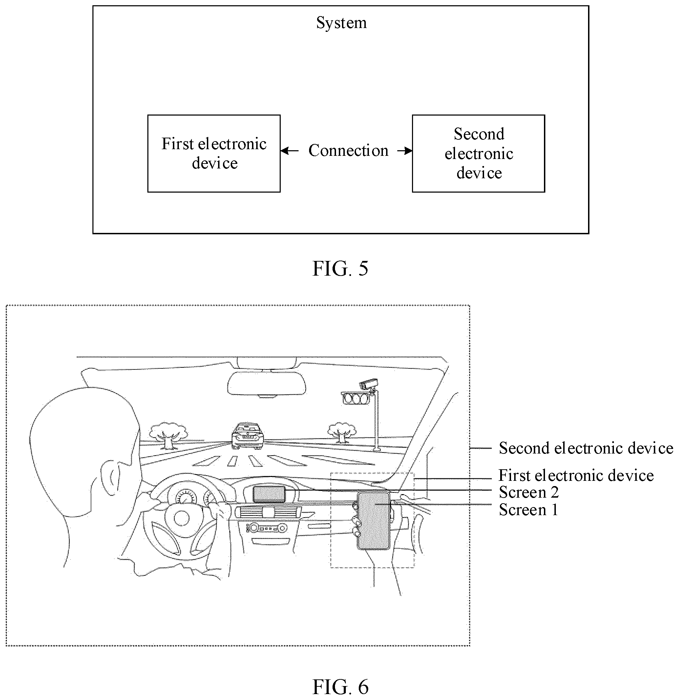

FIG. 5 is a diagram of an example of an architecture of a system according to an embodiment of this application.

The system provided in this embodiment of this application includes at least two electronic devices: a first electronic device and a second electronic device. For hardware structures and software architectures of the first electronic device and the second electronic device, refer to the foregoing text descriptions corresponding to FIG. 3A, FIG. 4A, and FIG. 4B. Details are not described herein again.

FIG. 6 is a diagram of an example of a system according to an embodiment of this application.

As shown in FIG. 6, the system may include a second electronic device and a first electronic device. The first electronic device may be a car, and the second electronic device may be a mobile phone or the like.

The first electronic device has a screen 1, and the second electronic device has a screen 2. The screen 1 is a display area and an input area, and the screen 2 is a display area.

Optionally, in some implementations of this application, the screen 2 is an input area.

Optionally, in some implementations of this application, the second electronic device and the first electronic device in the system may alternatively be an automobile and a tablet, a notebook computer and a tablet, a notebook computer and a mobile phone, a notebook computer and a handwriting tablet, a television and a mobile phone, a television and a tablet, or the like. This is not limited herein.

Second, the following describes an application scenario of the interface display method provided in embodiments of this application on an electronic device and an application scenario (a distributed scenario) of the interface display method on a system.

Application scenario 1: The electronic device is triggered, by using a screen splitting operation, to perform screen splitting, and the electronic device is triggered, by using a screen splitting cancellation operation, to perform screen splitting cancellation.

The following describes each sub-scenario.

Application scenario 1.1: The electronic device in an unfolded state performs screen splitting after receiving the screen splitting operation, and performs screen splitting cancellation after receiving the screen splitting cancellation operation. The screen splitting operation may also be referred to as a third swipe operation.

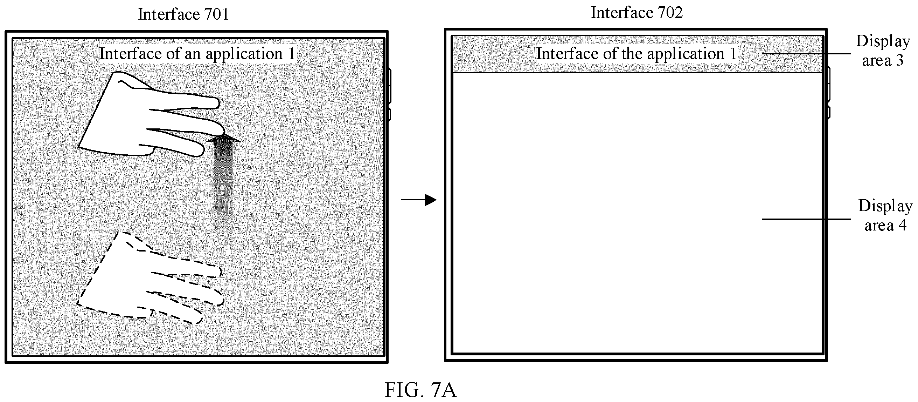

FIG. 7A to FIG. 7D-3 are diagrams of an example of a change of an interface displayed by the electronic device in the unfolded state before and after screen splitting according to an embodiment of this application.

After the screen splitting operation of a user is received, a full-screen display interface displayed by the electronic device changes to a to-be-split-screen interface. In FIG. 7A, an interface displayed by the electronic device changes from an interface 701 to an interface 702. The interface 701 is a full-screen display interface, the interface 702 is a to-be-split-screen interface, an interface of an application 1 is displayed on the interface 701, and the application 1 may be any application. The interface 702 includes a display area 3 and a display area 4. The interface of the application 1 is displayed in the display area 3, and the display area 3 is located on an upper side of the display area 4.

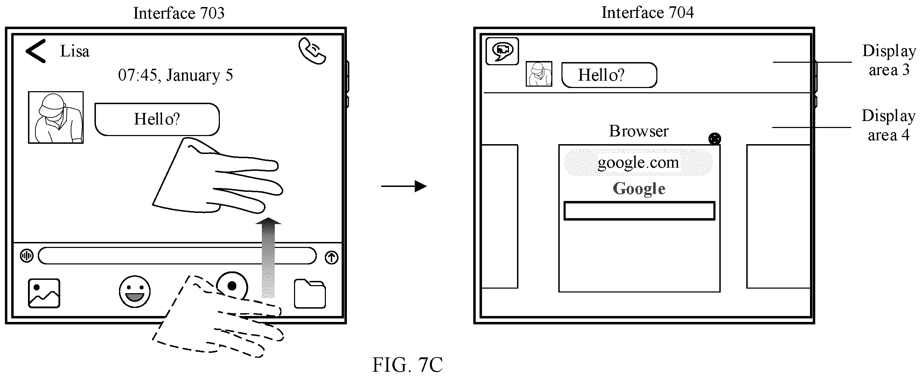

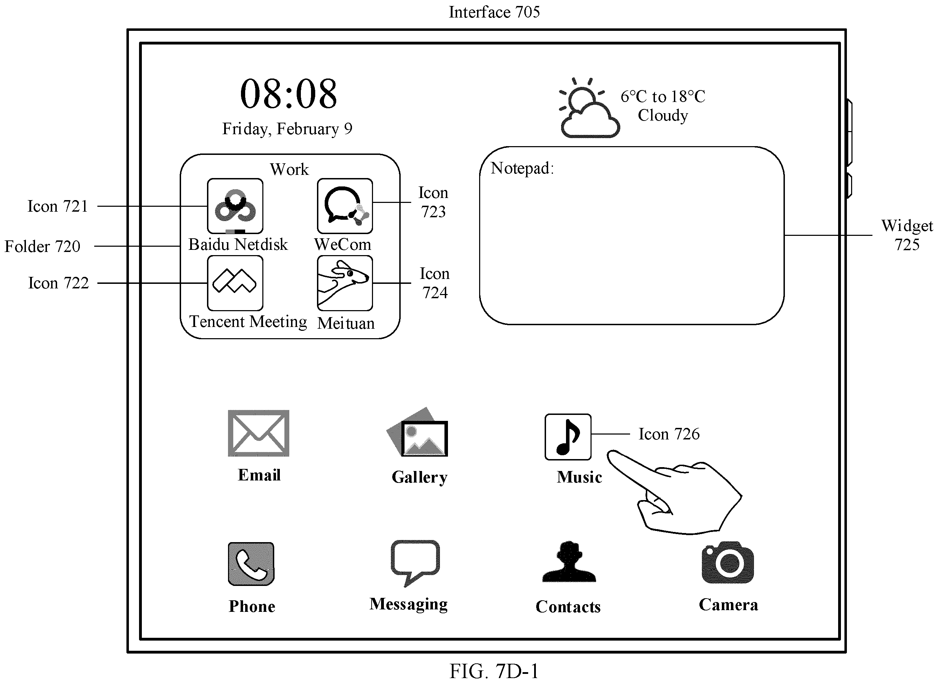

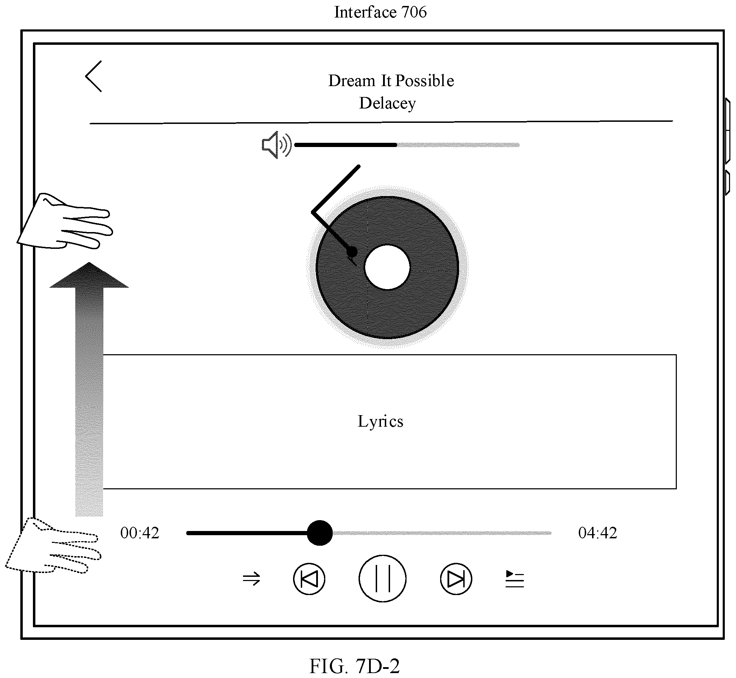

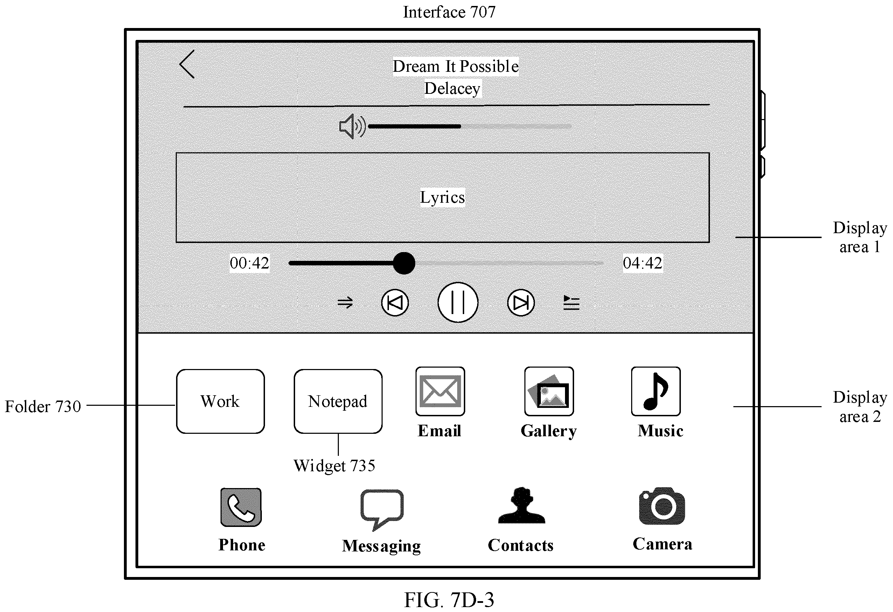

On the to-be-split-screen interface, a multi-task interface, an interface of a desktop application, or the like may be displayed in the display area 4. This is not limited herein. The multi-task interface may be content displayed in the display area 4 on an interface 704 in FIG. 7C, or may be content displayed in the display area 4 on an interface 1223 in FIG. 12F-1 and FIG. 12F-2. This is not limited herein. The interface of the desktop application may be content displayed in the display area 4 on an interface 707 in FIG. 7D-3. This is not limited herein.

In FIG. 7A, the screen splitting operation is swiping from bottom to top with three fingers.

Optionally, in some implementations of this application, the screen splitting operation is an interaction manner with a single finger, two fingers, more fingers, or the like. This is not limited herein.

Optionally, in some implementations of this application, the screen splitting operation may be swiping from left to right, from right to left, from top to bottom, from bottom to top, or the like with a plurality of fingers. This is not limited herein.

Optionally, in some implementations of this application, a location of the display area 3 may be related to a swiping direction of the screen splitting operation. For example, when the screen splitting operation is swiping from left to right, the display area 3 is located on a right side of a screen. When the screen splitting operation is swiping from right to left, the display area 3 is located on a left side of the screen.

Optionally, in some implementations of this application, a location of the display area 3 may occupy half of the screen.

After the interface displayed by the electronic device is a to-be-split-screen interface, and after receiving the screen splitting cancellation operation, the electronic device performs screen splitting cancellation, and displays a full-screen display interface. Optionally, in some implementations of this application, when the interface displayed by the electronic device is a split-screen interface (for example, the interface of the application 1 and an interface of an application 2 are displayed on the split-screen interface), after receiving a screen splitting operation, the electronic device may display a full-screen display interface, where the full-screen display interface may be the interface of the application 1, or may be the interface of the application 2.

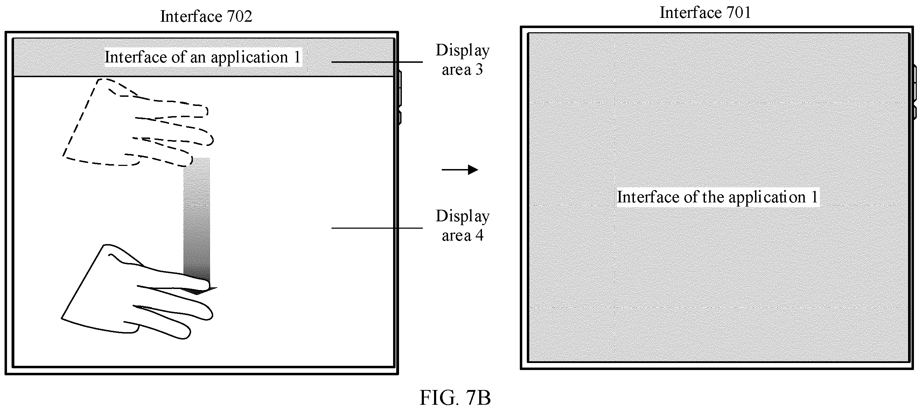

As shown in FIG. 7B, when the interface displayed by the electronic device is the interface 702, after the screen splitting cancellation operation is received, the display interface changes to the interface 701.

Optionally, in some implementations of this application, the screen splitting cancellation operation may be an operation in a direction opposite to a direction of the screen splitting operation.

Optionally, in some implementations of this application, start points of the screen splitting operation and the screen splitting cancellation operation are in the display area 3. It may be understood that, when the start point of the screen splitting cancellation operation is in the display area 3, expansion of the display area 3 may be consistent with a real-time location or a change trend of the screen splitting cancellation operation. In this way, an animation of screen splitting cancellation follows a finger, and smoothness of the animation of screen splitting cancellation is improved.

As shown in FIG. 7C, the interface displayed by the electronic device is the interface 703, the interface 703 is a full-screen display interface, and an interface of an instant messaging application (equivalent to the application 1 in FIG. 7A and FIG. 7B) is displayed on the interface 703. The instant messaging application may be an application like MeeTime® or WeChat®.

After the electronic device receives the screen splitting operation, the interface displayed by the electronic device changes to the interface 704, and the interface 704 includes the display area 3 and the display area 4. The interface of the application 1 is displayed in the display area 3, and the multi-task interface is displayed in the display area 4. The multi-task interface may include interfaces of one or more background applications. The interface 704 is a to-be-split-screen interface.

As shown in FIG. 7D-1 to FIG. 7D-3, the interface displayed by the electronic device is an interface 705, the interface 705 is a full-screen display interface, and an interface of a desktop application is displayed on the interface 705. The interface 705 includes a folder 720, a widget 725, and an icon 726. The folder 720 includes an icon 721, an icon 722, an icon 723, and an icon 724. The icon 721, the icon 722, the icon 723, and the icon 724 respectively correspond to different applications. An application corresponding to the icon 726 is Music. The interface 705 further includes widgets or icons corresponding to Time and Weather.

When the user taps the icon 726, the interface displayed by the electronic device changes from the interface 705 to an interface 706. An interface of the music application is displayed on the interface 706, and the interface 706 is also a full-screen display interface. When the electronic device displays the interface 706, when the screen splitting operation of the user is received, the interface displayed by the electronic device changes from the interface 706 to an interface 707. The interface 707 is a to-be-split-screen interface.

On the interface 707, content displayed in the display area 3 is an interface of the music application, and content displayed in the display area 4 is an interface of the desktop application. Display content of the desktop application in the display area 4 may be different from or the same as display content of the desktop application on the interface 705.

Optionally, in some implementations of this application, a height of the display area 3 may be equal to a height (or a width in a case in which the interface is a left-right split-screen interface) of the display area 4, or a height of the display area 3 may be different from a height of the display area 4. For example, the height of the display area 3 is greater than the height of the display area 4. For another example, the height of the display area 3 is less than the height of the display area 4.

Optionally, in some implementations of this application, when content displayed in the display area 4 on the to-be-split-screen interface is the desktop application, a widget or an application like Date, Clock, or Weather may be hidden or not displayed in the content displayed in the display area 4. It may be understood that, in a split-screen scenario, the user usually does not use the widget or the application like Date, Clock, or Weather as a split-screen application. Therefore, the widget or the application like Date, Clock, or Weather may not be displayed in the display area 4. In addition, because a size of the widget or the application like Date, Clock, or Weather is usually greater than a size of an icon corresponding to another application, hiding the widget like Date, Clock, or Weather helps fully use space of the display area 4 to display the icon of the another application.

Optionally, in some implementations of this application, when the content displayed in the display area 4 on the to-be-split-screen interface is the desktop application, the content displayed in the display area 4 may change an attribute of a folder, for example, change from a large folder to a small folder. Icons corresponding to N applications are displayed in the large folder, and startup of the applications may be triggered by tapping the icons. Icons corresponding to M applications may be displayed in the small folder, where M is less than or equal to N, or icons corresponding to applications are not displayed in the small folder. When the icons corresponding to the applications are not displayed in the small folder, after a tap operation of the user is received, the small folder may be expanded to display icons corresponding to a plurality of applications. Alternatively, when the icons corresponding to the M applications are displayed in the small folder, startup of the applications cannot be triggered by directly tapping the icons.

Optionally, in some implementations of this application, when the content displayed in the display area 4 on the to-be-split-screen interface is the desktop application, a service widget on the interface of the desktop application may be changed to an icon for display. This helps fully use space of the display area 4 to display an icon of another application.

Through comparison of content of the display area 4 on the interface 705 with content of the display area 4 on the interface 707, it may be found that changed content includes: the folder 720 changes to a folder 730, a size of the folder decreases, and an attribute changes from a large folder to a small folder; and the widget 725 changes to a widget 735, and a size of the widget decreases. Further, the content of the display area 4 on the interface 707 may not include display content corresponding to Clock or display content corresponding to Weather.

Scenario 1.2: The screen splitting operation and the screen splitting cancellation operation are used for switching between an unfolded state and a support state.

Optionally, in some implementations of this application, the screen splitting operation may alternatively be performed when the electronic device detects that the electronic device is switched from the unfolded state to the support state.

Optionally, in some implementations of this application, the screen splitting cancellation operation may alternatively be performed when the electronic device detects that the electronic device is switched from the support state to the unfolded state.

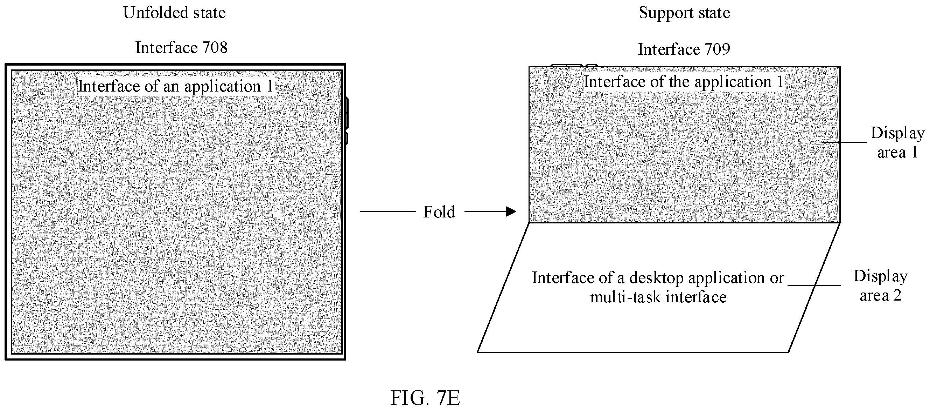

FIG. 7E is a diagram of another example of a change of an interface displayed by the electronic device before and after screen splitting according to an embodiment of this application.

As shown in FIG. 7E, when the electronic device is in the unfolded state, the interface displayed by the electronic device is an interface 708, where the interface 708 is a full-screen display interface, and an interface of an application 1 is displayed on the interface 708. After the electronic device changes from the unfolded state to the support state, the interface displayed by the electronic device changes from the interface 708 to an interface 709, where the interface 709 is a to-be-split-screen interface, display areas on the interface 709 include a display area 1 and a display area 2, the interface of the application 1 is displayed in the display area 1, and a multi-task interface, an interface of a desktop application, or the like is displayed in the display area 2.

Optionally, in some implementations of this application, in scenarios including other scenarios described below, the display area 1 may be referred to as a first display area, and the display area 2 may be referred to as a second display area. A relative location between the first display area and the second display area is: The first display area is in upper space and the second display area is in lower space.

Scenario 1.3: After receiving a screen splitting operation, the electronic device in a support state performs a screen splitting operation, or after receiving a screen splitting cancellation operation, the electronic device in a support state performs a screen splitting cancellation operation.

Optionally, in some implementations of this application, the screen splitting operation and the screen splitting cancellation operation of the electronic device in the support state are the same as a screen splitting operation and a screen splitting cancellation operation of the electronic device in an unfolded state.

Different from the electronic device in the unfolded state, a display area 2 of the electronic device in the support state is more suitable as an input area for receiving a user input than a display area 1.

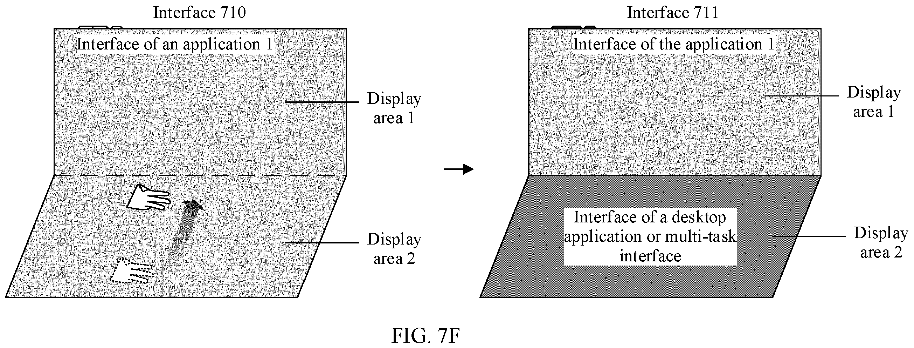

FIG. 7F to FIG. 7I are diagrams of an example of a change of an interface displayed by the electronic device in the support state before and after screen splitting according to an embodiment of this application.

As shown in FIG. 7F, after the screen splitting operation is received, the interface displayed by the electronic device changes from an interface 710 to an interface 711. The interface 711 is a to-be-split-screen interface, the interface 710 may be an interface of an application 1, and the application 1 may be any application. Display areas on the interface 711 include a display area 1 and a display area 2. The interface of the application 1 is displayed in the display area 1, an interface of a desktop application or a multi-task interface is displayed in the display area 2, and the display area 1 is located on an upper side of the display area 2.

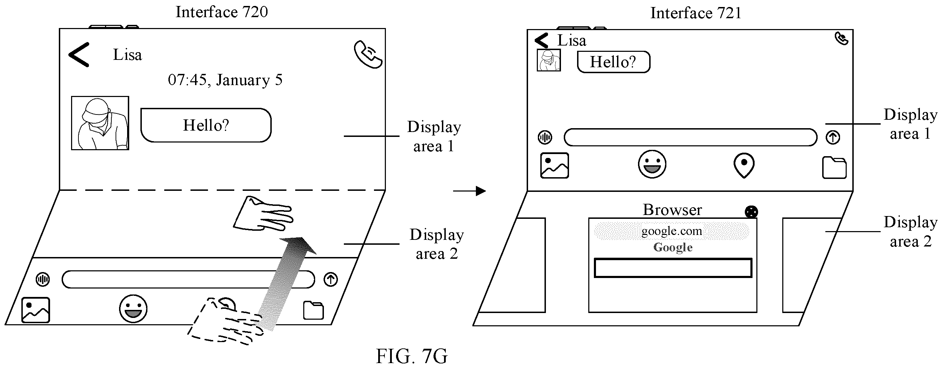

As shown in FIG. 7G, after the screen splitting operation is received, the interface displayed by the electronic device changes from an interface 720 to an interface 721. The interface 720 is a full-screen display interface, the interface 721 is a to-be-split-screen interface, and an interface of an instant messaging application is displayed on the interface 720. Display areas on the interface 721 include a display area 1 and a display area 2. The interface of the instant messaging application is displayed in the display area 1, and a multi-task interface is displayed in the display area 2.

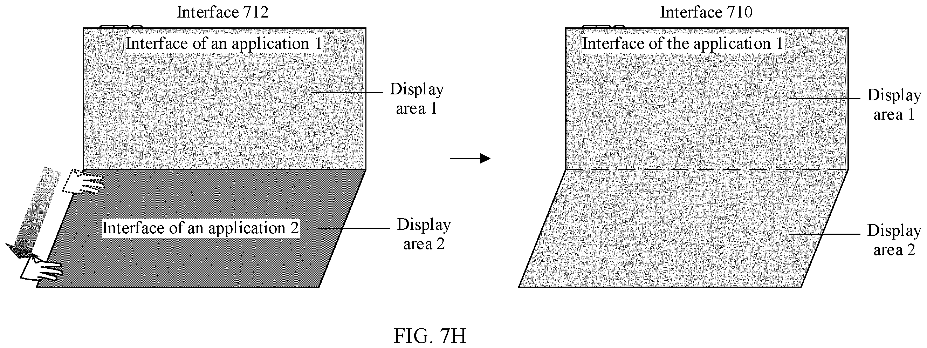

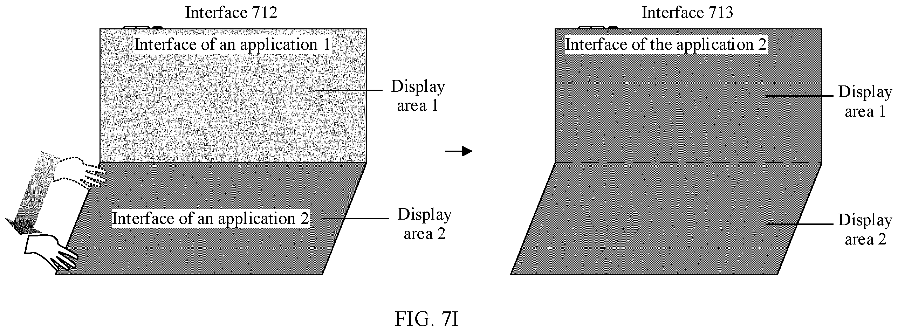

Optionally, in some embodiments of this application, the screen splitting operation may include a same-screen screen splitting cancellation operation and a different-screen screen splitting cancellation operation, as shown in FIG. 7H and FIG. 7I.

As shown in FIG. 7H, after the same-screen screen splitting cancellation operation is received, the interface displayed by the electronic device changes from an interface 712 to the interface 710. The interface 712 is a split-screen interface. Display areas on the interface 712 include a display area 1 and a display area 2. The interface of the application 1 is displayed in the display area 1, and an interface of an application 2 is displayed in the display area 2.

As shown in FIG. 7I, after the different-screen screen splitting cancellation operation is received, the interface displayed by the electronic device changes from the interface 712 to an interface 713. The interface of the application 2 is displayed on the interface 713, and the interface 713 is a full-screen display interface.

Through comparison of content shown in FIG. 7H and FIG. 7I, it can be found that the same-screen screen splitting cancellation operation is different from the different-screen screen splitting cancellation operation. After receiving the same-screen screen splitting cancellation operation in the display area 2, the electronic device restores an interface of an application displayed in the display area 1 to full-screen display. After receiving the different-screen screen splitting cancellation operation in the display area 2, the electronic device restores an interface of an application displayed in the display area 2 to full-screen display.

Optionally, in some embodiments of this application, different from the content shown in FIG. 7H and FIG. 7I, when the electronic device displays a split-screen interface, after receiving the screen splitting cancellation operation, the electronic device may display a to-be-split-screen interface. For example, in the content displayed in FIG. 7H, when the electronic device displays the interface 712, after receiving the screen splitting cancellation operation, the electronic device displays the to-be-split-screen interface, where the interface of the application 1 or the interface of the application 2 is displayed in a display area 1 on the to-be-split-screen interface, and the interface of the desktop application or the multi-task interface is displayed in a display area 2.

Optionally, in some implementations of this application, when the same-screen screen splitting cancellation operation is a three-finger vertical swipe operation, the different-screen screen splitting cancellation operation is a four-finger vertical swipe operation. When a same-screen screen splitting operation is a three-finger vertical swipe operation, the different-screen screen splitting operation is a four-finger vertical swipe operation.

Optionally, in some implementations of this application, the same-screen screen splitting operation or the different-screen screen splitting operation is another customized operation like a four-finger horizontal swipe operation or a three-finger horizontal swipe operation. The same-screen screen splitting cancellation operation or the different-screen screen splitting cancellation operation is another customized operation like a four-finger horizontal swipe operation or a three-finger horizontal swipe operation.

Optionally, in some implementations of this application, when the electronic device supports both the same-screen screen splitting operation or the different-screen screen splitting operation, the same-screen screen splitting operation is different from the different-screen screen splitting operation. Similarly, when the electronic device supports both the same-screen screen splitting cancellation operation or the different-screen screen splitting cancellation operation, the same-screen screen splitting cancellation operation is different from the different-screen screen splitting cancellation operation.

Optionally, in some implementations of this application, the electronic device may receive the same-screen screen splitting cancellation operation and the different-screen screen splitting cancellation operation in the display area 1.

Scenario 1.4: When displaying a split-screen interface, the electronic device in a support state adjusts display locations of a display-type application and an interactive application.

After determining two applications participating in screen splitting, the electronic device may determine an application that is more suitable to be displayed in a display area 1, or may determine an application that is more suitable to be displayed in a display area 2. The display-type application or an application that is more likely to be a display-type application is suitable to be displayed in the display area 1, and the interactive application or an application that is more likely to be an interactive application is suitable to be displayed in the display area 2. An application type includes a display type or an interactive type.

Optionally, in some implementations of this application, an operating system of the electronic device may determine whether an application is a display-type application or an interactive application. For example, the electronic device locally stores data used to determine whether an application is a display-type application or an interactive application, for example, a table including a correspondence between an application and an application type. This is not limited herein.

Optionally, in some implementations of this application, an operating system of the electronic device may determine, based on current display content of an application, whether the application is a display-type application or an interactive application. For example, when the current display content of the application includes a multimedia stream or a large-size (for example, occupying more than 70% of a display area) text, it is considered that the application is currently a display-type application.

Optionally, in some implementations of this application, an operating system of the electronic device may determine an application that is in applications participating in screen splitting and that is more likely to be a display-type application, or may determine an application that is in applications participating in screen splitting and that is more likely to be an interactive application.

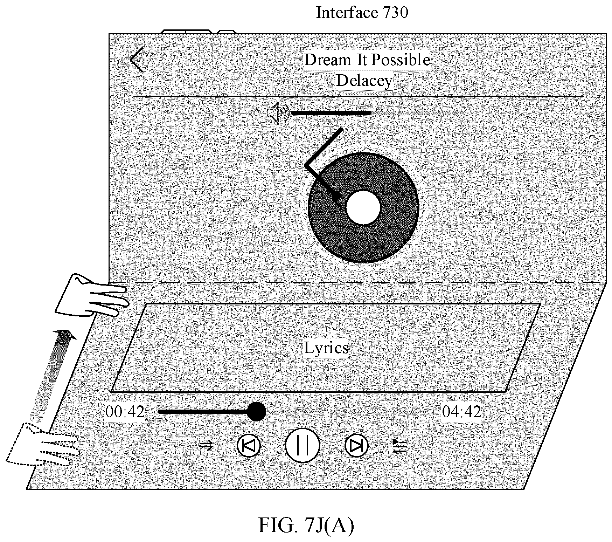

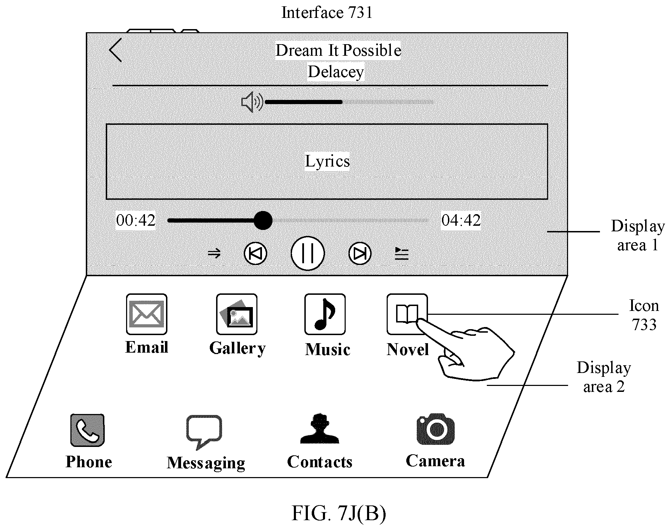

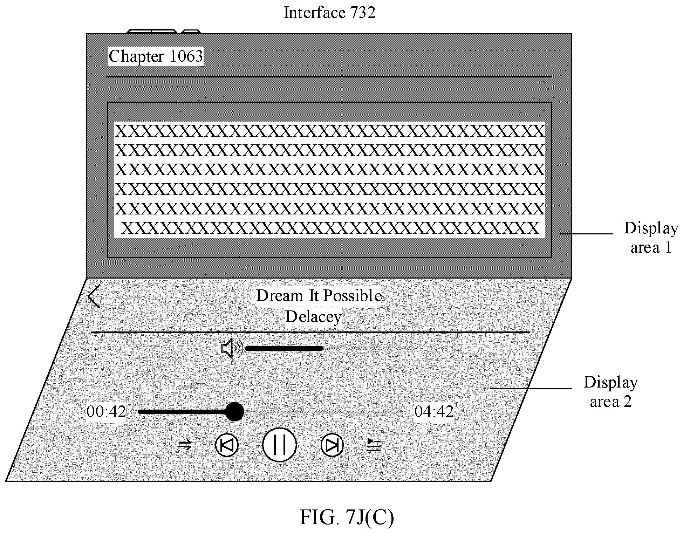

FIG. 7J(A) to FIG. 7J(C) are diagrams of an example in which the electronic device in the support state adjusts a display location of an application when displaying a split-screen interface according to an embodiment of this application.

As shown in FIG. 7J(A) to FIG. 7J(C), an interface displayed by the electronic device changes from an interface 730 to an interface 731, and then changes from the interface 731 to an interface 732. The interface 730 is a full-screen display interface, the interface 731 is a to-be-split-screen interface, and the interface 732 is the split-screen interface.

An interface of a music application is displayed on the interface 730 in full screen. Display areas on the interface 731 include a display area 1 and a display area 2, the interface of the music application is displayed in the display area 1, an interface of a desktop application is displayed in the display area 2, the interface of the desktop application includes an icon 733, and the icon 733 is an icon of a novel application. An interface of the novel application is displayed in a display area 1 of the interface 732, and the interface of the music application is displayed in a display area 2 of the interface 732.

After a user taps the control icon 733, the electronic device determines that applications participating in screen splitting are respectively the novel application and the music application. The electronic device may further determine that the novel application is a display-type application, or the electronic device may determine that the novel application is an application that is more likely to be a display-type application, or the electronic device may determine that the music application is an interactive application, or the electronic device may determine that the music application is an application that is more likely to be an interactive application. Then, the electronic device determines that the novel application is displayed in the display area 1, and the music application is displayed in the display area 2.

Scenario 1.5: After the electronic device in an unfolded state and/or a support state receives a screen splitting operation, displayed interfaces include interfaces of a plurality of applications.

Optionally, in some implementations of this application, a to-be-split-screen interface may include interfaces of a plurality of applications.

Optionally, in some implementations of this application, after receiving the screen splitting operation, the electronic device may directly display a split-screen interface.

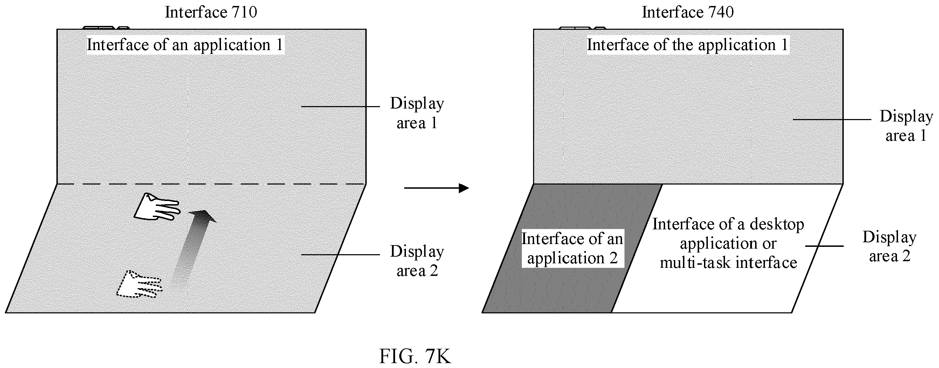

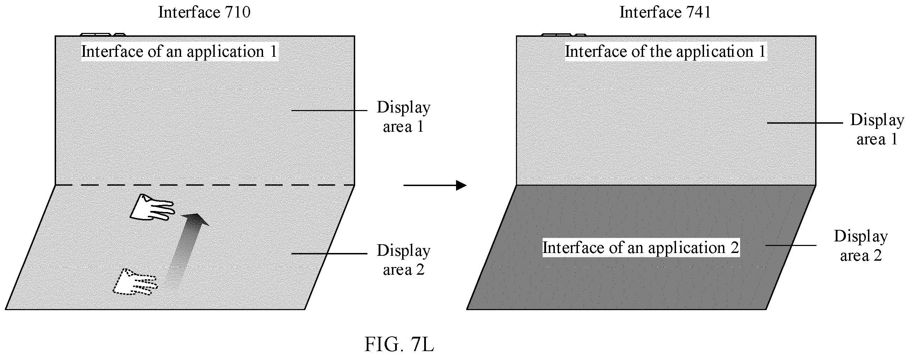

FIG. 7K and FIG. 7L are diagrams of an example in which the electronic device displays the to-be-split-screen interface or displays the split-screen interface after receiving the screen splitting operation according to an embodiment of this application.

As shown in FIG. 7K, after the screen splitting operation is received, an interface displayed by the electronic device changes from an interface 710 to an interface 740. The interface 740 is a to-be-split-screen interface.

Display areas included on the interface 740 are a display area 1 and a display area 2. An interface of an application 1 is displayed in the display area 1, an interface of an application 2 is displayed in the display area 2, and an interface of a desktop application or a multi-task interface is further displayed in the display area 2.

Optionally, in some embodiments of this application, the application 2 is an application recently opened on the electronic device other than the application 1.

Optionally, in some embodiments of this application, the application 2 is an application in split-screen association with the application 1. Split-screen association means that a frequency at which the application 1 and the application 2 are applications in the split-screen interface is higher than a threshold, that is, a user usually uses the two applications after screen splitting, for example, Jingdong® and Taobao®. Alternatively, Split-screen association means that a user manually configures two applications as split-screen combined applications. For example, the user may specify, on the split-screen interface, two applications currently participating in screen splitting as split-screen combined applications.

As shown in FIG. 7K, after the screen splitting operation is received, the interface displayed by the electronic device changes from the interface 710 to the interface 740. The interface 740 is a to-be-split-screen interface.

The display areas included on the interface 740 are the display area 1 and the display area 2. The interface of the application 1 is displayed in the display area 1, the interface of the application 2 is displayed in the display area 2, and the interface of the desktop application or the multi-task interface is further displayed in the display area 2.

As shown in FIG. 7L, after the screen splitting operation is received, the interface displayed by the electronic device changes from the interface 710 to an interface 741. The interface 741 is a split-screen interface.

Display areas included on the interface 740 are a display area 1 and a display area 2. The interface of the application 1 is displayed in the display area 1, and the interface of the application 2 is displayed in the display area 2.

Optionally, in some embodiments of this application, when there is an application in split-screen association with the application 1, after receiving the screen splitting operation, the electronic device skips displaying the to-be-split-screen interface, and directly displays the split-screen interface. An application displayed in the display area 2 (or the display area 1) on the split-screen interface is the application in split-screen association with the application 1, for example, the application 2 in FIG. 7K. For whether the application 1 is displayed in the display area 1 or the display area 2, refer to text descriptions in Scenario 1.4: When displaying the split-screen interface, the electronic device in the support state adjusts the display locations of the display-type application and the interactive application. Details are not described herein again.

Application scenario 2: After displaying a split-screen interface, the electronic device in an unfolded state switches display content at an application level.

Optionally, in some implementations of this application, when an interface displayed by the electronic device is an up-down split-screen interface (for example, an interface 801), an application switching operation (including an operation of switching to a next application and an operation of switching to a previous application) is a three-finger horizontal swipe operation, or another customized operation like a two-finger horizontal swipe operation.

Optionally, in some implementations of this application, when an interface displayed by the electronic device is a left-right split-screen interface, an application switching operation (the application switching operation includes an operation of switching to a next application and an operation of switching to a previous application) is a three-finger vertical swipe operation, or another customized operation like a two-finger vertical swipe operation.

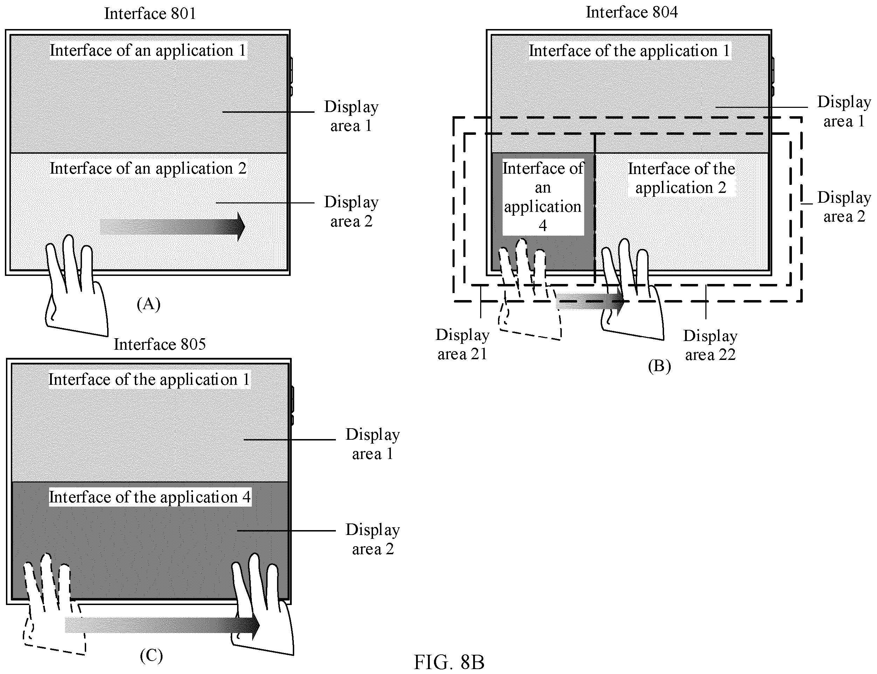

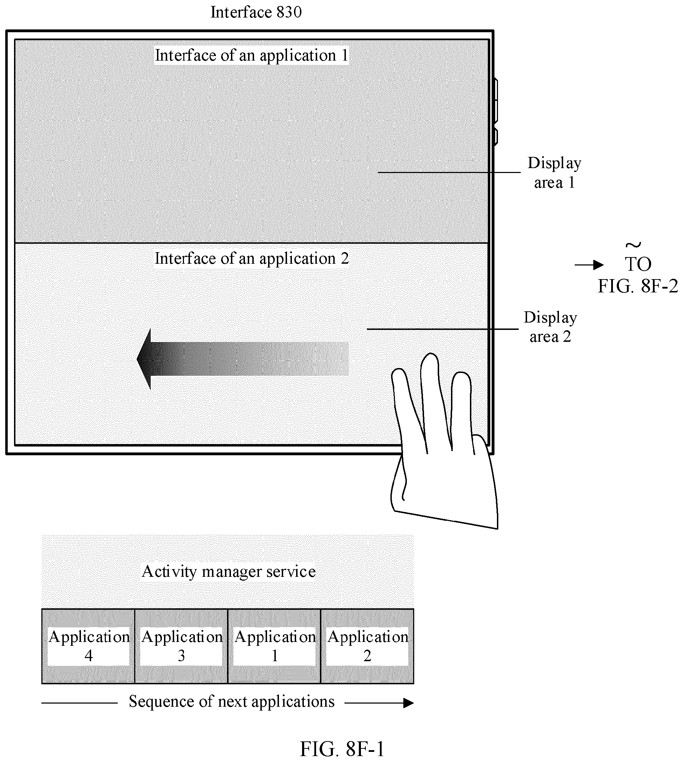

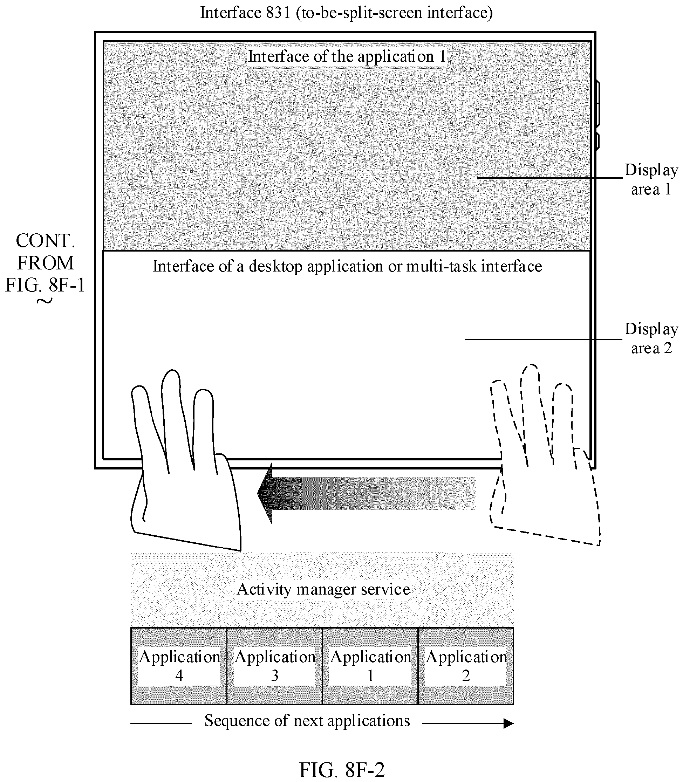

Optionally, in some implementations of this application, when an interface displayed by the electronic device is an up-down split-screen interface, and an operation of switching to a next application is a three-finger horizontal swipe operation from right to left, an operation of switching to a previous application is a three-finger horizontal swipe operation from left to right, as shown in FIG. 8B. Alternatively, when an operation of switching to a previous application is a three-finger horizontal swipe operation from right to left, an operation of switching to a next application is a three-finger horizontal swipe operation from left to right.

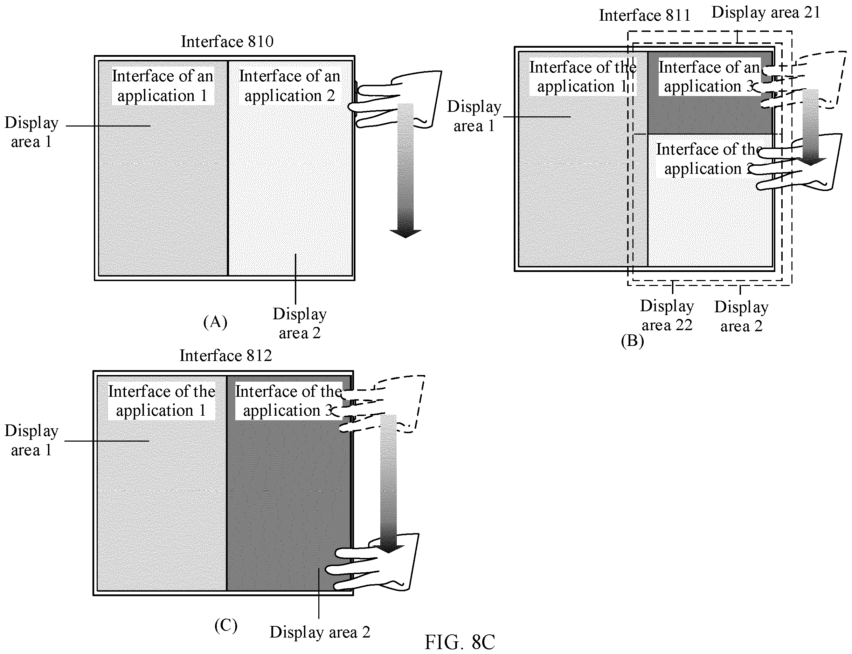

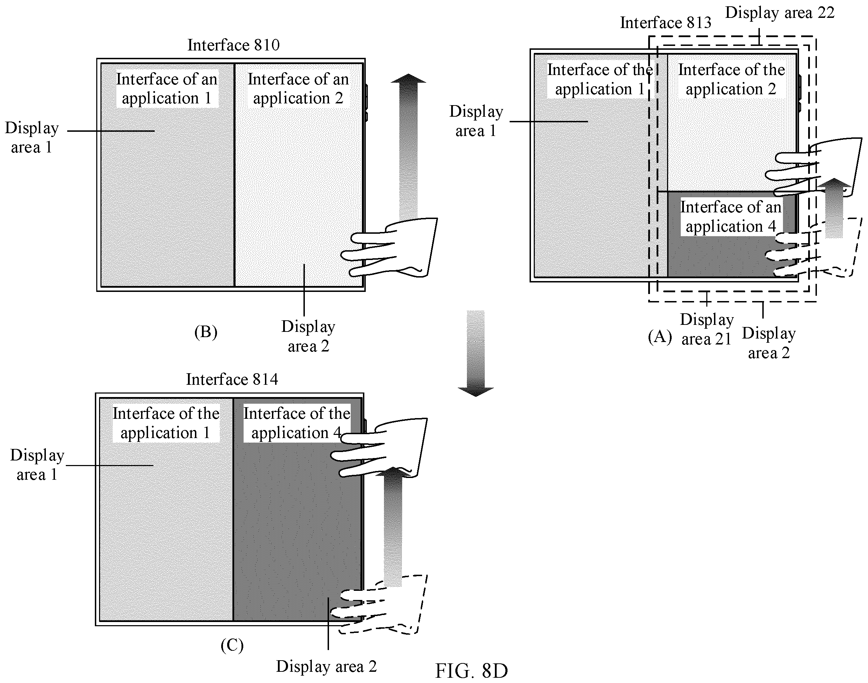

Optionally, in some implementations of this application, when an interface displayed by the electronic device is a left-right split-screen interface, and an operation of switching to a next application is a three-finger vertical swipe operation from top to bottom, an operation of switching to a previous application is a three-finger vertical swipe operation from bottom to top, as shown in FIG. 8C and FIG. 8D. Alternatively, when an operation of switching to a previous application is a three-finger vertical swipe operation from top to bottom, an operation of switching to a next application is a vertical swipe operation from bottom to top.

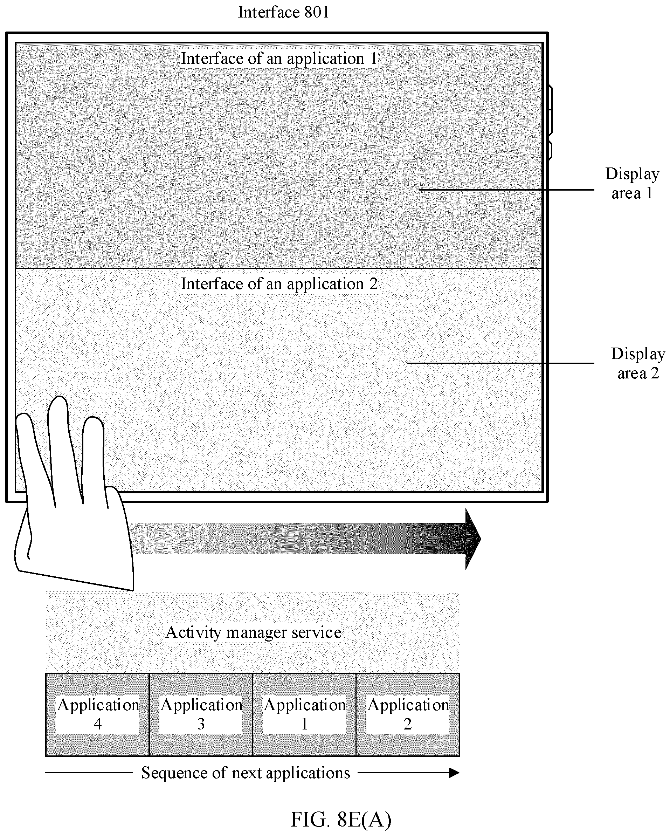

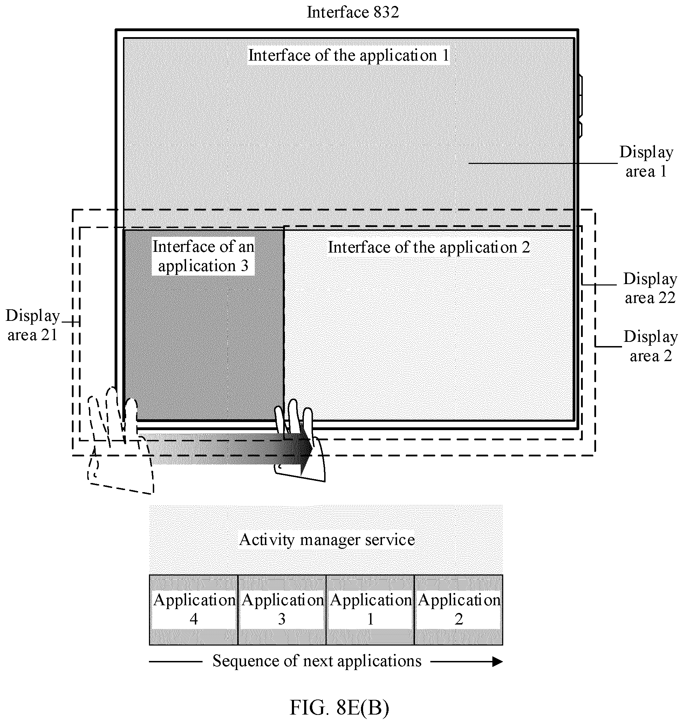

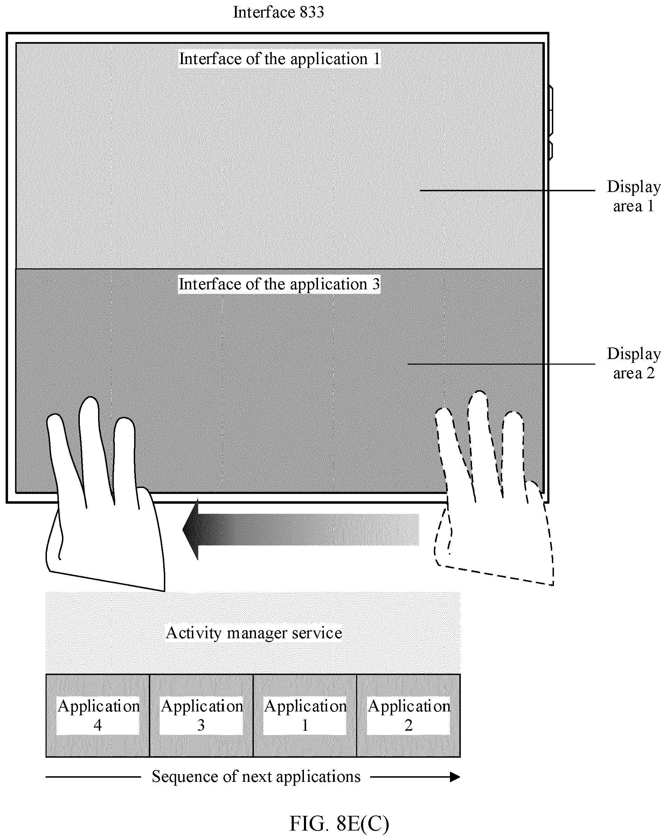

Optionally, in some implementations of this application, when an interface displayed by the electronic device is a split-screen interface, if a user operation received by the electronic device is an operation of switching to a previous application, and the electronic device determines that there is no previous application, the electronic device may switch to an application that is opened earliest (a last application), as shown in FIG. 8E(A) to FIG. 8E(C). Similarly, when the interface displayed by the electronic device is a split-screen interface, if a user operation received by the electronic device is an operation of switching to a next application, and the electronic device determines that there is no next application, the electronic device may switch to an application that is opened latest (a 1st application). A sequential relationship between applications may be a sequence in which the user opens the applications, or a sequential relationship between applications is a sequence of the applications in an activity manager service (Activity Manager Service, AMS), or a sequential relationship between applications is a sorting sequence of the applications on a multi-task interface (in this case, a newly displayed application may not have a previous application, or a previous application is considered as an application whose display interface is last closed; and a next application of the newly displayed application may be considered as an application whose display interface is first closed).

Optionally, in some implementations of this application, when an interface displayed by the electronic device is a split-screen interface (for example, an interface 801), if a user operation received by the electronic device is an operation of switching to a previous application, and the electronic device determines that there is no previous application, a to-be-split-screen interface is displayed. Similarly, if a user operation received by the electronic device is an operation of switching to a next application, and the electronic device determines that there is no next application, a to-be-split-screen interface is displayed, as shown in FIG. 8F-1 and FIG. 8F-2.

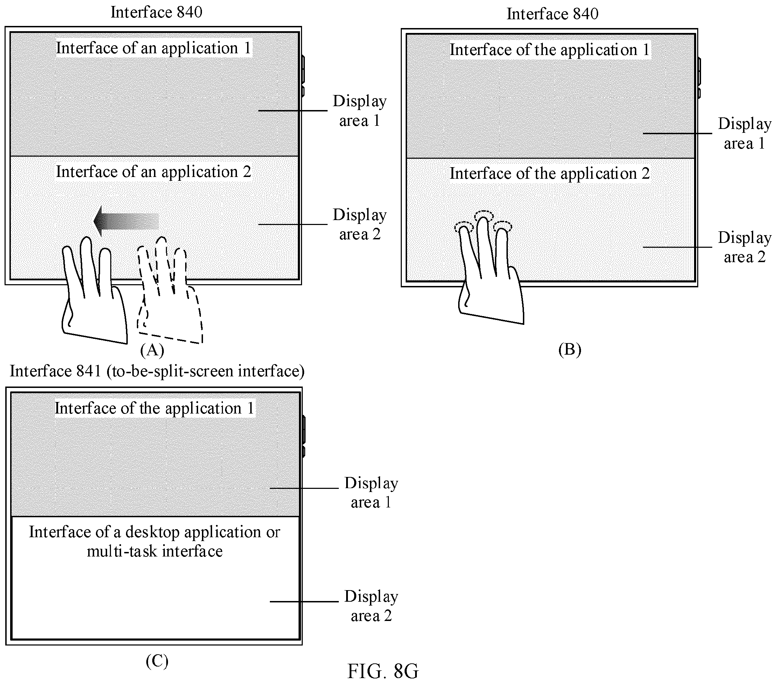

Optionally, in some implementations of this application, when the electronic device displays the split-screen interface, after receiving an operation of displaying the to-be-split-screen interface from the user, the electronic device displays the to-be-split-screen interface, where content displayed in some display areas on the to-be-split-screen interface and the split-screen interface is the same, as shown in FIG. 8G.

The following describes each sub-scenario.

Scenario 2.1: After displaying the split-screen interface, the electronic device in the unfolded state switches any displayed application.

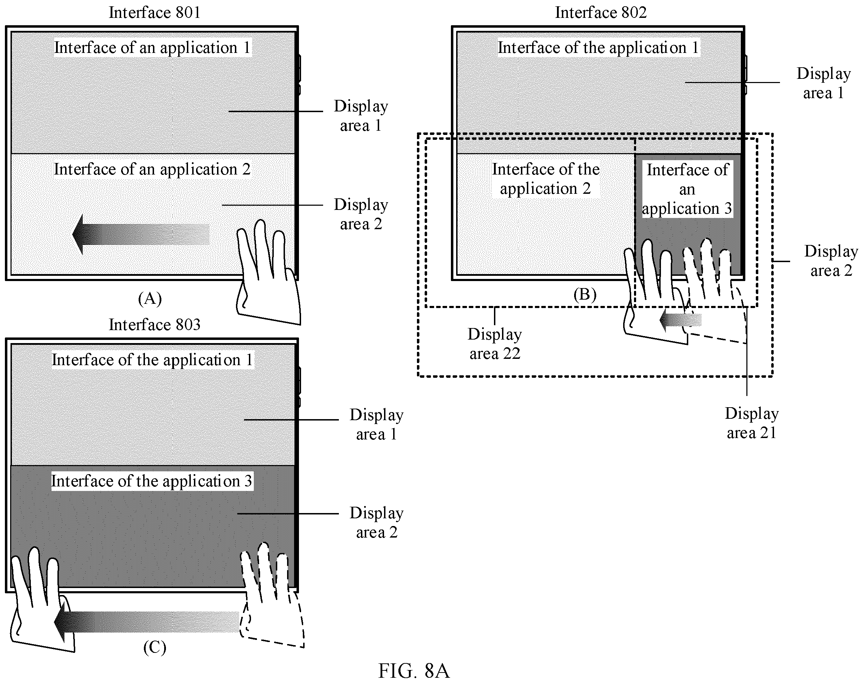

FIG. 8A to FIG. 8G are diagrams of an example of a change of an interface before and after switching of an application on the split-screen interface according to an embodiment of this application.

As shown in FIG. 8A, when the interface displayed by the electronic device is the interface 801, if an operation of switching to a next application by the user is received, the interface displayed by the electronic device changes from the interface 801 to an interface 802, and then changes to an interface 803, or the interface changes from the interface 801 to an interface 803.

The interface 801 is an up-down split-screen interface. Display areas on each of the interface 801, the interface 802, and the interface 803 include a display area 1 and a display area 2. The display area 1 and the display area 2 are in an up-down relationship. An interface of an application 1 is displayed in the display area 1 on the interface 801, and an interface of an application 2 is displayed in the display area 2 on the interface 801.

If an operation of switching to a next application by the user in the display area 2 on the interface 801 is received, an interface of an application 3 is displayed in a display area 21 on the interface 802, and the interface of the application 2 is displayed in a display area 22 on the interface 802, where the display area 2 on the interface 802 includes the display area 21 and the display area 22. Then, on the interface 802, as a switching animation of an application changes, the display area 21 is continuously expanded, and the display area 22 is continuously reduced. Finally, content displayed in the display area 2 on the interface displayed by the electronic device is the interface of the application 3. In this case, sizes of the display area 2 and the display area 21 are equal. On the interface 803, the interface of the application 3 is displayed in the display area 2.

Optionally, in some implementations of this application, a location of the operation of switching to a next application by the user is a boundary location between the display area 21 and the display area 22.

As shown in FIG. 8B, after an operation of switching to a previous application by the user is received, the interface displayed by the electronic device changes from the interface 801 to an interface 804, and then changes from the interface 804 to an interface 805, or the interface displayed by the electronic device changes from the interface 801 to an interface 805. Display areas on the interface 804 and the interface 805 include a display area 1 and a display area 2, and the display area 1 and the display area 2 are in an up-down relationship.

If an operation of switching to a previous application by the user in the display area 2 on the interface 801 is received, an interface of an application 4 is displayed in the display area 21 on the interface 804, and the interface of the application 2 is displayed in the display area 22 on the interface 804, where the display area 2 on the interface 804 includes the display area 21 and the display area 22. Then, on the interface 804, as a switching animation of an application changes, the display area 21 is continuously expanded, and the display area 22 is continuously reduced. Finally, content displayed in the display area 2 on the interface displayed by the electronic device is the interface of the application 4. In this case, sizes of the display area 2 and the display area 21 are equal. On the interface 805, the interface of the application 4 is displayed in the display area 2.

In content shown in FIG. 8A and FIG. 8B, a next application of the application 2 is the application 3, and a previous application of the application 2 is an application 4.

As shown in FIG. 8C, when the interface displayed by the electronic device is an interface 810, if an operation of switching to a next application by the user is received, the interface displayed by the electronic device changes from the interface 810 to an interface 811, and then changes to an interface 812, or the interface changes from the interface 810 to an interface 812.

The interface 810 is an up-down split-screen interface. Display areas on each of the interface 810, the interface 811, and the interface 812 include a display area 1 and a display area 2. The display area 1 and the display area 2 are in an up-down relationship. An interface of an application 1 is displayed in the display area 1 on the interface 810, and an interface of an application 2 is displayed in the display area 2 on the interface 810.

If an operation of switching to a next application by the user in the display area 2 on the interface 810 is received, an interface of an application 3 is displayed in the display area 21 on the interface 811, and the interface of the application 2 is displayed in the display area 22 on the interface 811, where the display area 2 on the interface 811 includes the display area 21 and the display area 22. Then, on the interface 811, as a switching animation of an application changes, the display area 21 is continuously expanded, and the display area 22 is continuously reduced. Finally, content displayed in the display area 2 on the interface displayed by the electronic device is the interface of the application 3. In this case, sizes of the display area 2 and the display area 21 are equal. On the interface 812, the interface of the application 3 is displayed in the display area 2.

Optionally, in some implementations of this application, a location of the operation of switching to a next application by the user is a boundary location between the display area 21 and the display area 22.

As shown in FIG. 8D, when the interface displayed by the electronic device is an interface 810, if an operation of switching to a previous application in a display area 2 on the interface 810 by the user is received, the interface displayed by the electronic device changes from the interface 810 to an interface 813, and then changes to an interface 814, or the interface changes from the interface 810 to an interface 814.

If an operation of switching to a previous application by the user in the display area 2 on the interface 810 is received, an interface of an application 4 is displayed in the display area 21 on the interface 813, and the interface of the application 2 is displayed in the display area 22 on the interface 813, where the display area 2 on the interface 813 includes the display area 21 and the display area 22. Then, on the interface 813, as a switching animation of an application changes, the display area 21 is continuously expanded, and the display area 22 is continuously reduced. Finally, content displayed in the display area 2 on the interface displayed by the electronic device is the interface of the application 4. In this case, sizes of the display area 2 and the display area 21 are equal. On the interface 814, the interface of the application 4 is displayed in the display area 2.

Optionally, in some implementations of this application, a location of the operation of switching to a previous application by the user is a boundary location between the display area 21 and the display area 22.

As shown in FIG. 8E(A) to FIG. 8E(C), when the interface displayed by the electronic device is an interface 801, after an operation of switching to a previous application by the user is received in a display area 2, the interface of the electronic device changes from the interface 801 to an interface 832, and changes from the interface 832 to an interface 833, or the interface of the electronic device directly changes from the interface 801 to an interface 833.

In content shown in FIG. 8E(A) to FIG. 8E(C), a previous application of the application 2 is the application 1 (the application 1 is already displayed on the interface 801, and therefore it may be considered that a previous application of the application 1 is the application 3), a previous application of the application 2 is the application 3, and a previous application of the application 3 is the application 4. Therefore, after receiving the operation of switching to a previous application, the electronic device may determine that an application displayed in the display area 2 is the application 3.

On the interface 832, display areas on the interface 832 include a display area 1 and the display area 2, and the display area 2 includes a display area 21 and a display area 22. The interface of the application 3 is displayed in the display area 21, and the interface of the application 2 is displayed in the display area 22. On the interface 833, the interface of the application 3 is displayed in the display area 2.

Optionally, in some implementations of this application, a location of the operation of switching to a next application by the user is a boundary location between the display area 21 and the display area 22.

Similarly, when the interface displayed by the electronic device is the interface 801, after the operation of switching to a next application by the user is received in the display area 2, the interface displayed by the electronic device in the display area 2 is the interface of the application 4. Because both the application 1 and the application 2 are displayed on the screen, it may be considered that both a next application of the application 2 and a next application of the application 1 are the application 4.

In the content shown in FIG. 8A to FIG. 8E(C), the application 3 and the application 4 may be referred to as third applications.

Application scenario 2.2: After displaying the split-screen interface, the electronic device in the unfolded state switches to the to-be-split-screen interface.

As shown in FIG. 8F-1 and FIG. 8F-2, when the interface displayed by the electronic device is an interface 830, if an operation of switching to a next application by the user is received, and the electronic device determines that there is no next application, the interface displayed by the electronic device changes to an interface 831, where the interface 831 is a to-be-split-screen interface. The interface 830 is the same as the interface 801. Refer to the foregoing descriptions. Details are not described herein again.

On the interface 831, display areas of the interface 831 include a display area 1 and a display area 2. An interface of an application 1 is displayed in the display area 1, and an interface of a desktop application or a multi-task interface is displayed in the display area 2.

The electronic device displays the split-screen interface, and after receiving an operation of displaying the to-be-split-screen interface, the electronic device displays the to-be-split-screen interface. As shown in FIG. 8G, when the interface displayed by the electronic device is an interface 840, when the operation of displaying the to-be-split-screen interface by the user is received, the interface displayed by the electronic device changes from the interface 840 to an interface 841. The interface 841 is a to-be-split-screen interface.

The interface 830 is the same as the interface 801. Refer to the foregoing descriptions. Details are not described herein again. Content displayed in a display area 2 on the interface 841 is an interface of a desktop application or a multi-task interface.

Optionally, in some implementations of this application, the operation of displaying the to-be-split-screen interface may be a touch and hold operation after an operation of switching to a next application, or the operation of displaying the to-be-split-screen interface may be a touch and hold operation after an operation of switching to a previous application. For example, the operation of displaying the to-be-split-screen interface may be a touch and hold operation after a three-finger horizontal swipe operation, a touch and hold operation after a three-finger vertical swipe operation, a touch and hold operation after a two-finger horizontal swipe operation, a touch and hold operation after a two-finger vertical swipe operation, or the like. This is not limited herein.

Application scenario 3: After displaying a split-screen interface, the electronic device in a support state switches a displayed application.

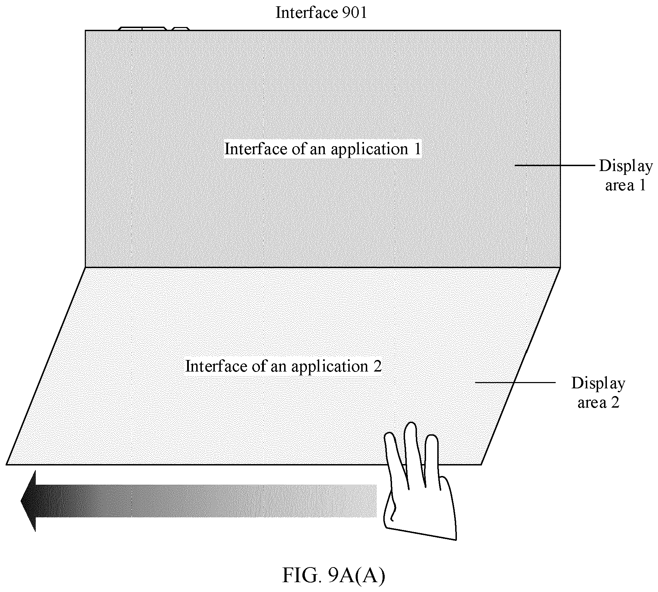

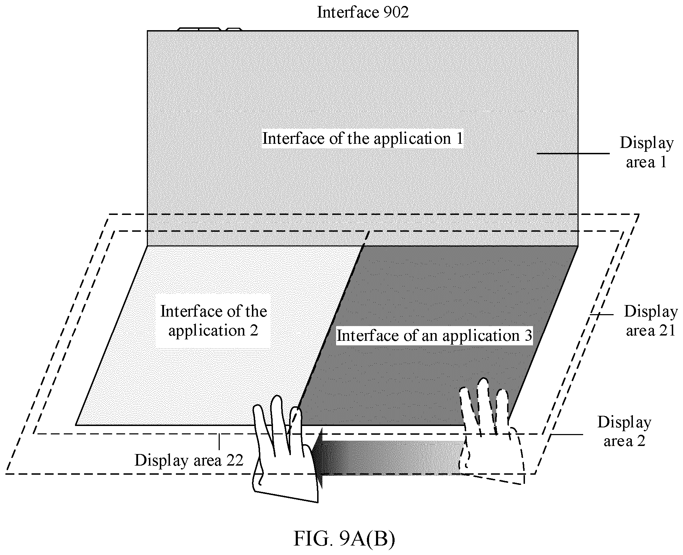

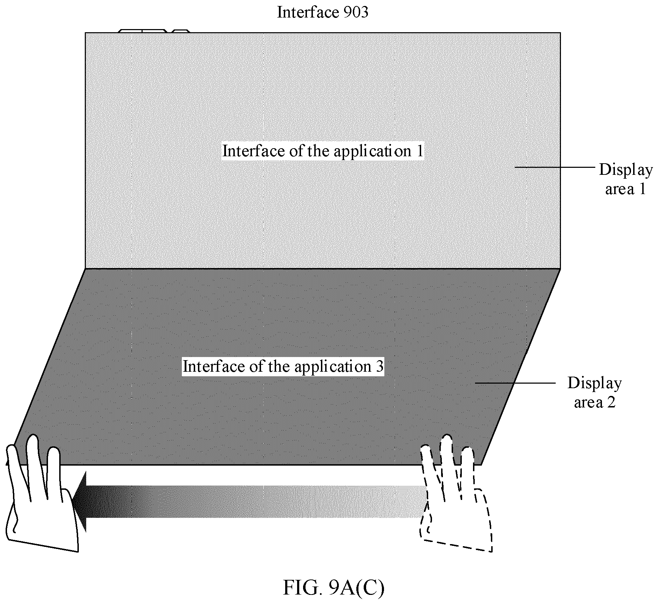

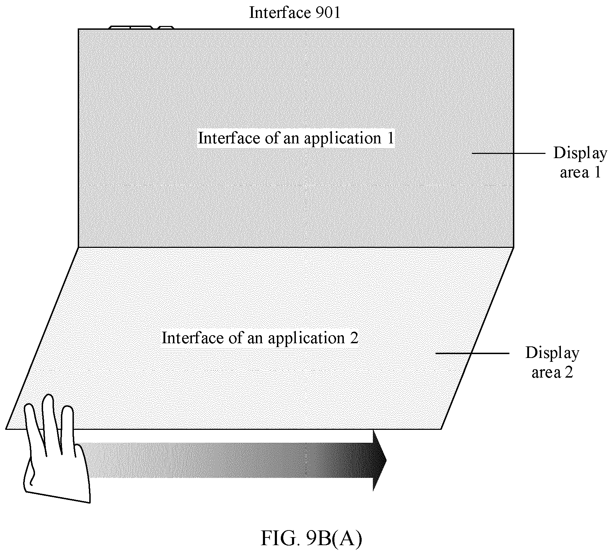

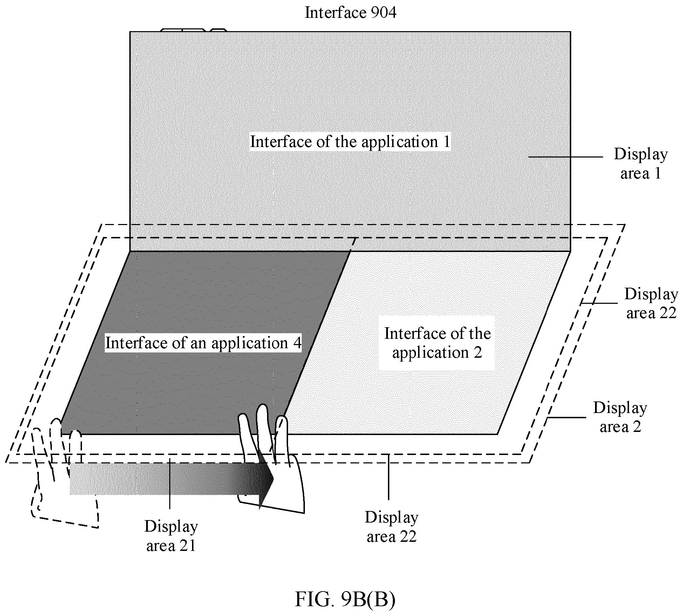

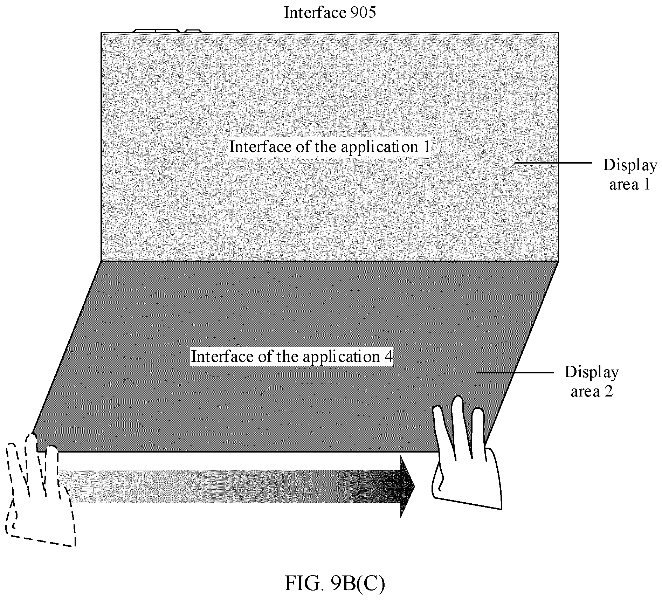

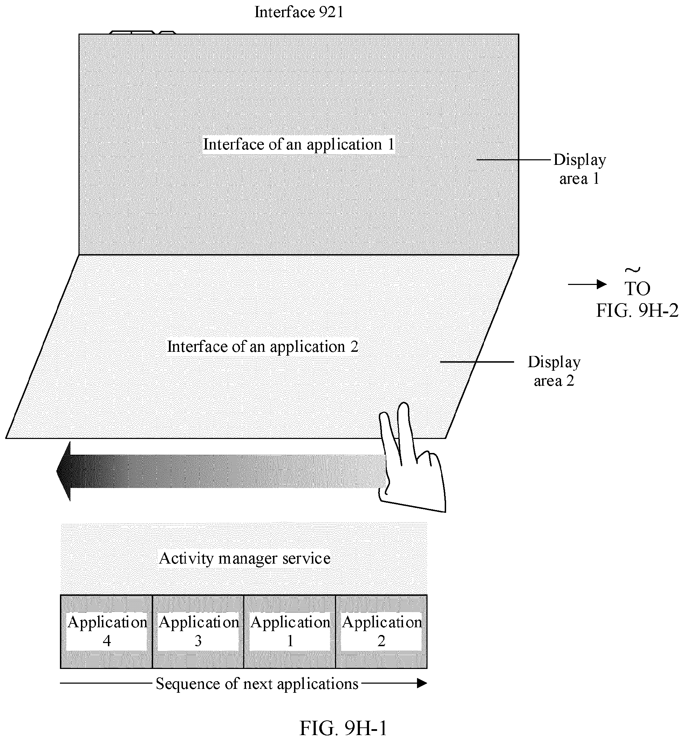

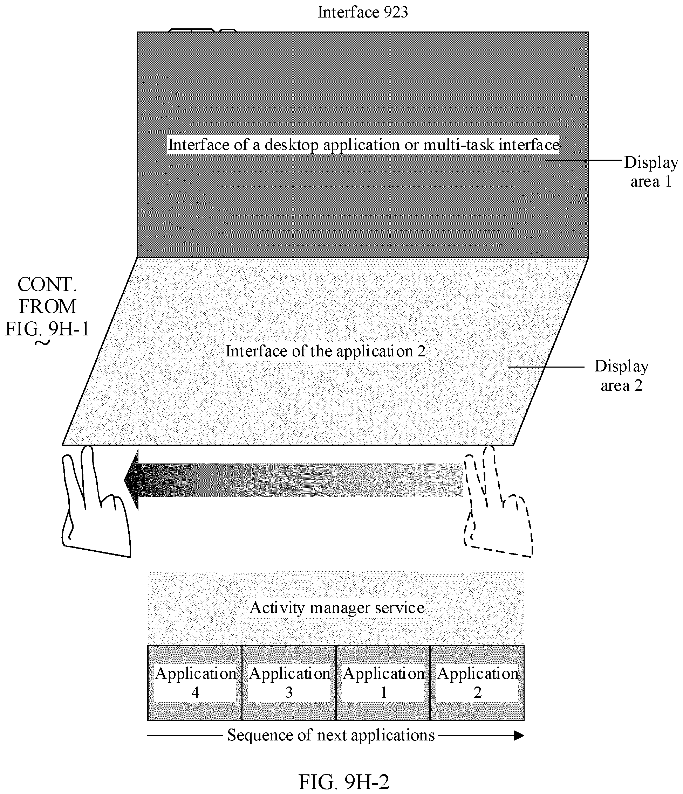

Optionally, in some implementations of this application, when an interface displayed by the electronic device in the support state is an up-down split-screen interface, an application same-screen switching operation (including an operation of same-screen switching to a next application and an operation of same-screen switching to a previous application) is a three-finger horizontal swipe operation, or another customized operation like a two-finger horizontal swipe operation, as shown in FIG. 9A(A) to FIG. 9B(C). The application same-screen switching operation may be referred to as a first swipe operation.

Optionally, in some implementations of this application, when an interface displayed by the electronic device in the support state is a left-right split-screen interface, an application same-screen switching operation (including an operation of same-screen switching to a next application and an operation of same-screen switching to a previous application) is a three-finger vertical swipe operation, or another customized operation like a two-finger vertical swipe operation. The application same-screen switching operation may be referred to as a first swipe operation.

Optionally, in some implementations of this application, when an interface displayed by the electronic device in the support state is an up-down split-screen interface, an application different-screen switching operation (including an operation of different-screen switching to a next application and an operation of different-screen switching to a previous application) is a three-finger horizontal swipe operation, or another customized operation like a two-finger horizontal swipe operation. The application different-screen switching operation may be referred to as a second swipe operation.

Optionally, in some implementations of this application, when an interface displayed by the electronic device in the support state is a left-right split-screen interface, an application different-screen switching operation (including an operation of different-screen switching to a next application and an operation of different-screen switching to a previous application) is a three-finger vertical swipe operation, or another customized operation like a two-finger vertical swipe operation. The application different-screen switching operation may be referred to as a second swipe operation.

Optionally, in some implementations of this application, when an interface displayed by the electronic device in the support state is an up-down split-screen interface, and an operation of same-screen switching to a next application is a three-finger horizontal swipe operation from right to left, an operation of same-screen switching to a previous application is a three-finger horizontal swipe operation from left to right. Alternatively, when an operation of same-screen switching to a previous application is a three-finger horizontal swipe operation from right to left, an operation of same-screen switching to a next application is a three-finger horizontal swipe operation from left to right.

Optionally, in some implementations of this application, when an interface displayed by the electronic device in the support state is a left-right split-screen interface, and an operation of same-screen switching to a next application is a three-finger vertical swipe operation from top to bottom, an operation of same-screen switching to a previous application is a three-finger vertical swipe operation from bottom to top. Alternatively, when an operation of same-screen switching to a previous application is a three-finger vertical swipe operation from top to bottom, an operation of same-screen switching to a next application is a vertical swipe operation from bottom to top.

Optionally, in some implementations of this application, when an interface displayed by the electronic device in the support state is an up-down split-screen interface, and an operation of different-screen switching to a next application is a three-finger horizontal swipe operation from right to left, an operation of different-screen switching to a previous application is a three-finger horizontal swipe operation from left to right. Alternatively, when an operation of different-screen switching to a previous application is a three-finger horizontal swipe operation from right to left, an operation of different-screen switching to a next application is a three-finger horizontal swipe operation from left to right.

Optionally, in some implementations of this application, when an interface displayed by the electronic device in the support state is a left-right split-screen interface, and an operation of different-screen switching to a next application is a three-finger vertical swipe operation from top to bottom, an operation of different-screen switching to a previous application is a three-finger vertical swipe operation from bottom to top. Alternatively, when an operation of different-screen switching to a previous application is a three-finger vertical swipe operation from top to bottom, an operation of different-screen switching to a next application is a vertical swipe operation from bottom to top.

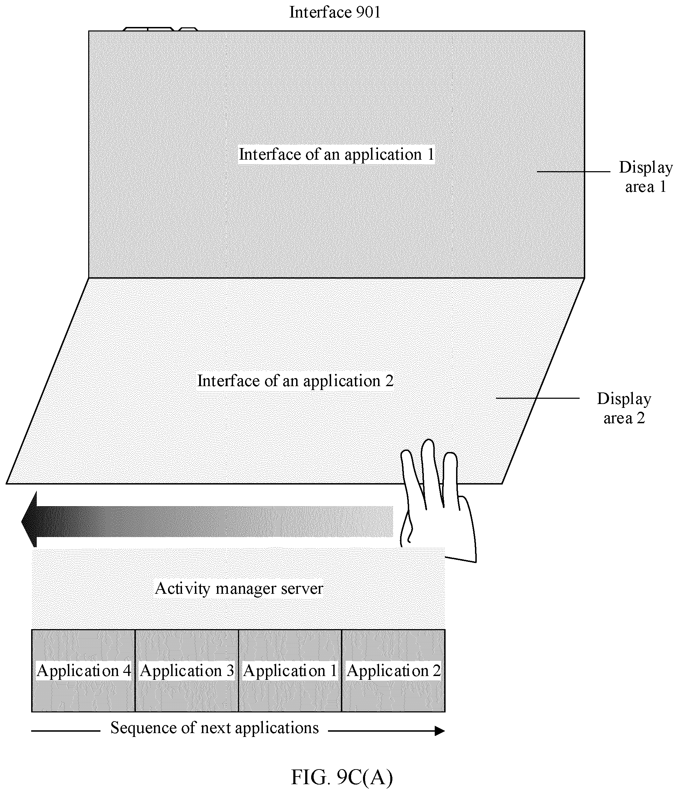

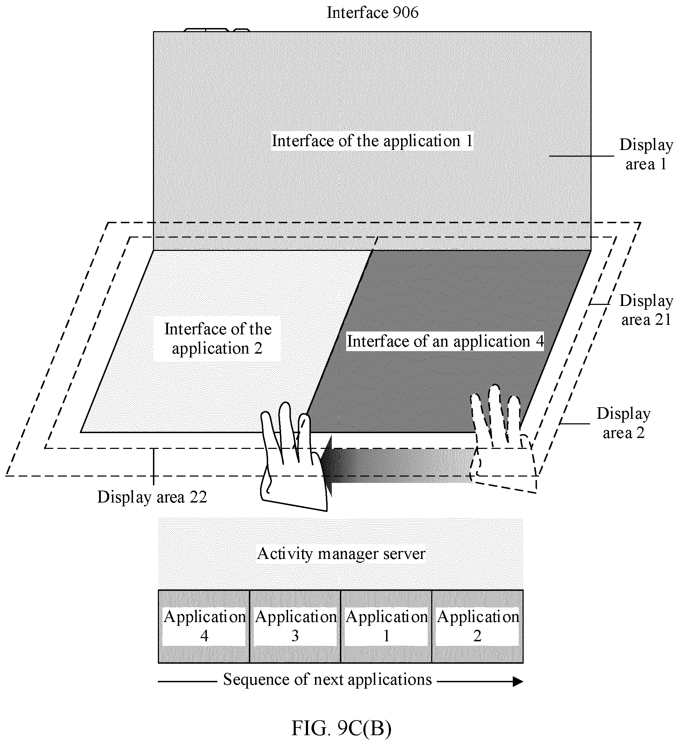

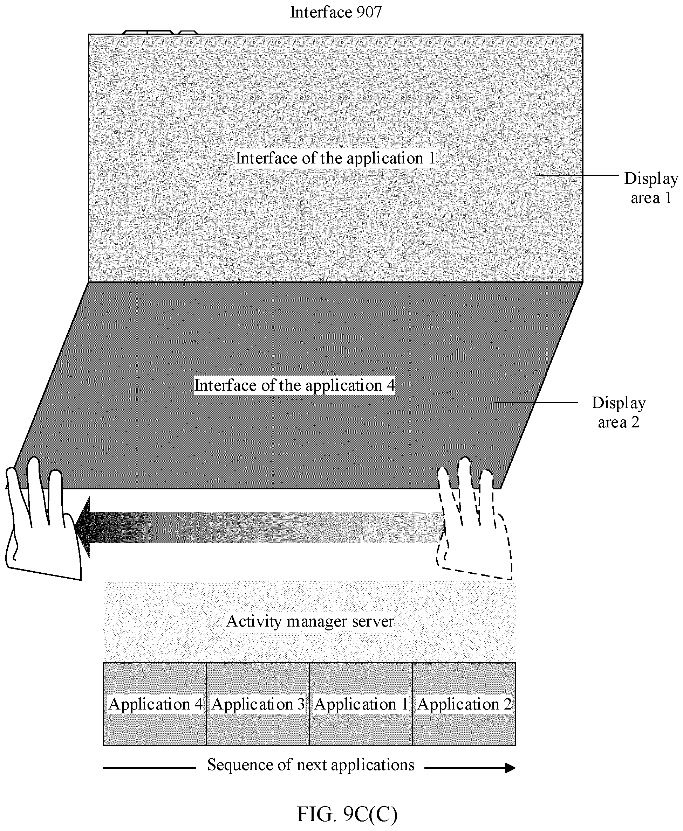

Optionally, in some implementations of this application, when an interface displayed by the electronic device in the support state is a split-screen interface, if a user operation received by the electronic device is an operation of same-screen switching to a previous application or an operation of different-screen switching to a previous application, and the electronic device determines that there is no previous application, the electronic device may switch to an application that is opened earliest (a last application). Similarly, when the interface displayed by the electronic device is a split-screen interface, if a user operation received by the electronic device is an operation of same-screen switching to a next application or an operation of different-screen switching to a next application, and the electronic device determines that there is no next application, the electronic device may switch to an application that is opened latest (a 1st application). A sequential relationship between applications may be a sequence in which a user opens the applications, or a sequential relationship between applications is a sequence of the applications in an activity manager service (Activity Manager Service, AMS). This is not limited herein. A case in which the user operation received by the electronic device is an operation of same-screen switching to a next application, and the electronic device determines that there is no next application is shown in FIG. 9C(A) to FIG. 9C(C).

Optionally, in some implementations of this application, when an interface displayed by the electronic device in the support state is a split-screen interface, if a user operation received by the electronic device is an operation of same-screen switching to a previous application or an operation of different-screen switching to a previous application, and the electronic device determines that there is no previous application, a to-be-split-screen interface is displayed. Similarly, if a user operation received by the electronic device is an operation of same-screen switching to a next application or an operation of different-screen switching to a next application, and the electronic device determines that there is no next application, a to-be-split-screen interface is displayed.

Optionally, in some implementations of this application, when the electronic device in the support state displays the split-screen interface, after receiving an operation of displaying the to-be-split-screen interface from the user, the electronic device displays the to-be-split-screen interface, where content displayed in some display areas on the to-be-split-screen interface and the split-screen interface is the same.

A difference between the application different-screen switching operation and the application same-screen switching operation lies in whether an application switching operation received by the electronic device in a display area 2 is used to trigger switching of an application displayed in a display area 1 or is used to trigger switching of an application displayed in the display area 2. When the application switching operation received by the electronic device in the display area 2 is used to trigger switching of the application displayed in the display area 1, the operation is an application different-screen switching operation. When the application switching operation received by the electronic device in the display area 2 is used to trigger switching of the application displayed in the display area 2, the operation is an application same-screen switching operation.

Optionally, in some implementations of this application, when the electronic device supports both the operation of different-screen switching to a previous application and the operation of same-screen switching to a previous application, the operation of different-screen switching to a previous application is different from the operation of same-screen switching to a previous application. Similarly, when the electronic device supports both the operation of different-screen switching to a next application and the operation of same-screen switching to a next application, the operation of different-screen switching to a next application is different from the operation of same-screen switching to a next application.

The following describes each sub-scenario.

Application scenario 3.1: After displaying the split-screen interface, the electronic device in the support state performs same-screen switching on the application displayed in the display area 2.

When the electronic device displays the split-screen interface (the split-screen interface includes an up-down split-screen interface and a left-right split-screen interface), after the electronic device receives, in the display area 1, an operation of same-screen switching to a next application from the user, the electronic device switches the application displayed in the display area 1. Similarly, after the electronic device receives, in the display area 2, an operation of same-screen switching to a next application from the user, the electronic device switches the application displayed in the display area 2.

FIG. 9A(A) to FIG. 9C(C) are diagrams of an example of an interface change after switching of an application on the split-screen interface according to an embodiment of this application.

As shown in FIG. 9A(A) to FIG. 9A(C), when the interface displayed by the electronic device is an interface 901, if an operation of same-screen switching to a next application by the user is received, the interface displayed by the electronic device changes from the interface 901 to an interface 902, and then changes to an interface 903, or the interface changes from the interface 901 to an interface 903.

The interface 901 is an up-down split-screen interface. Display areas on the interface 901 include a display area 1 and a display area 2. The display area 1 and the display area 2 are in an up-down relationship. An interface of an application 1 is displayed in the display area 1, and an interface of an application 2 is displayed in the display area 2.

If an operation of same-screen switching to a next application by the user in the display area 2 on the interface 901 is received, an interface of an application 3 is displayed in the display area 21 on the interface 902, and the interface of the application 2 is displayed in the display area 22, where the display area 2 on the interface 902 includes the display area 21 and the display area 22. Then, on the interface 902, as a same-screen switching animation of an application changes, the display area 21 is continuously expanded, and the display area 22 is continuously reduced. Finally, content displayed in the display area 2 on the interface displayed by the electronic device is the interface of the application 3. In this case, sizes of the display area 2 and the display area 21 are equal. On the interface 903, the interface of the application 3 is displayed in the display area 2.

Optionally, in some implementations of this application, a location of the operation of same-screen switching to a next application by the user is a boundary location between the display area 21 and the display area 22.

As shown in FIG. 9B(A) to FIG. 9B(C), when the interface displayed by the electronic device is an interface 901, if an operation of same-screen switching to a previous application by the user is received, the interface displayed by the electronic device changes from the interface 901 to an interface 904, and then changes to an interface 905, or the interface changes from the interface 901 to an interface 905.

If an operation of same-screen switching to a previous application by the user in the display area 2 on the interface 901 is received, an interface of an application 4 is displayed in a display area 21 on the interface 904, and the interface of the application 2 is displayed in a display area 22, where the display area 2 includes the display area 21 and the display area 22. Then, on the interface 904, as a same-screen switching animation of an application changes, the display area 21 is continuously expanded, and the display area 22 is continuously reduced. Finally, content displayed in the display area 2 on the interface displayed by the electronic device is the interface of the application 4. In this case, sizes of the display area 2 and the display area 21 are equal. On the interface 905, the interface of the application 4 is displayed in the display area 2.

Optionally, in some implementations of this application, a location of the operation of same-screen switching to a previous application by the user is a boundary location between the display area 21 and the display area 22.

As shown in FIG. 9C(A) to FIG. 9C(C), when the interface displayed by the electronic device is an interface 901, if an operation of same-screen switching to a next application by the user is received, the interface displayed by the electronic device changes from the interface 901 to an interface 906, and then changes to an interface 907, or the interface changes from the interface 901 to an interface 907.

The electronic device may determine, by using the AMS, whether there is a next application. In content shown in FIG. 9C(A) to FIG. 9C(C), the application 2 does not have a next application, a previous application of the application 2 is the application 1 (the application 1 is already displayed on the interface 830, and therefore it may be considered that a previous application of the application 1 is the application 3), a previous application of the application 1 is the application 3, and a previous application of the application 3 is the application 4. Because both the application 1 and the application 2 are displayed on the screen, it may be considered that both a next application of the application 2 and a next application of the application 1 are the application 4.

On the interface 906, display areas on the interface 906 include a display area 1 and the display area 2, and the display area 2 includes a display area 21 and a display area 22. The interface of the application 4 is displayed in the display area 21, and the interface of the application 2 is displayed in the display area 22. On the interface 907, the interface of the application 4 is displayed in the display area 2.

Optionally, in some implementations of this application, a location of the operation of same-screen switching to a previous application by the user is a boundary location between the display area 21 and the display area 22.

Similarly, when the interface displayed by the electronic device is the interface 901, after the operation of same-screen switching to a previous application by the user is received in the display area 2, an interface displayed in the display area 21 on the interface 902 is the interface of the application 3.

The foregoing mainly describes a change of an interface displayed on the electronic device by using an example in which the split-screen interface is an up-down split-screen interface and the electronic device receives an application same-screen switching operation in the display area 2. For a case in which the split-screen interface is a left-right split-screen interface, correspondingly refer to the foregoing text descriptions. Details are not described herein again. After the electronic device receives an application same-screen switching operation in the display area 1, for a change of the interface displayed by the electronic device, refer to the foregoing text descriptions. Details are not described herein again.

In the content shown in FIG. 9A(A) to FIG. 9C(C), the application 4 and the application 3 may be referred to as third applications.

Application scenario 3.2: After displaying the split-screen interface, the electronic device in the support state performs different-screen switching on the application displayed in the display area 1.

When the electronic device displays the split-screen interface (the split-screen interface includes an up-down split-screen interface and a left-right split-screen interface), after the electronic device receives, in the display area 1, an operation of different-screen switching to a next application from the user, the electronic device switches the application displayed in the display area 2. Similarly, after the electronic device receives, in the display area 2, an operation of different-screen switching to a next application from the user, the electronic device switches the application displayed in the display area 1.

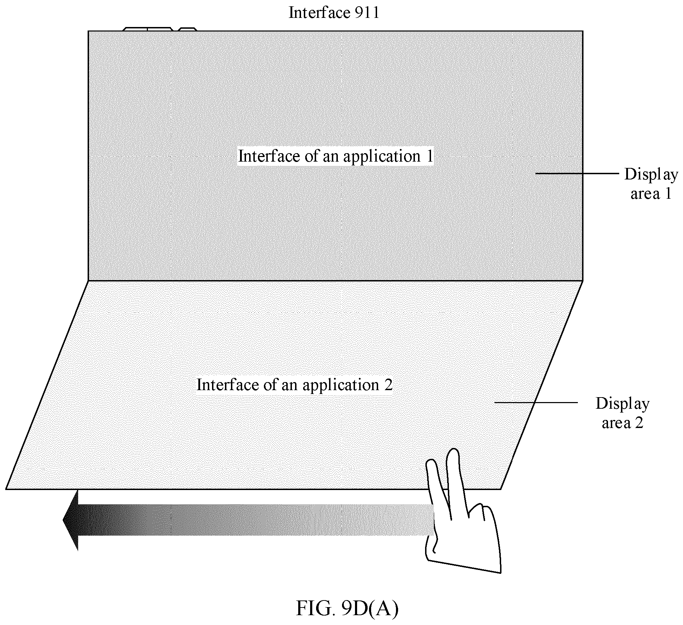

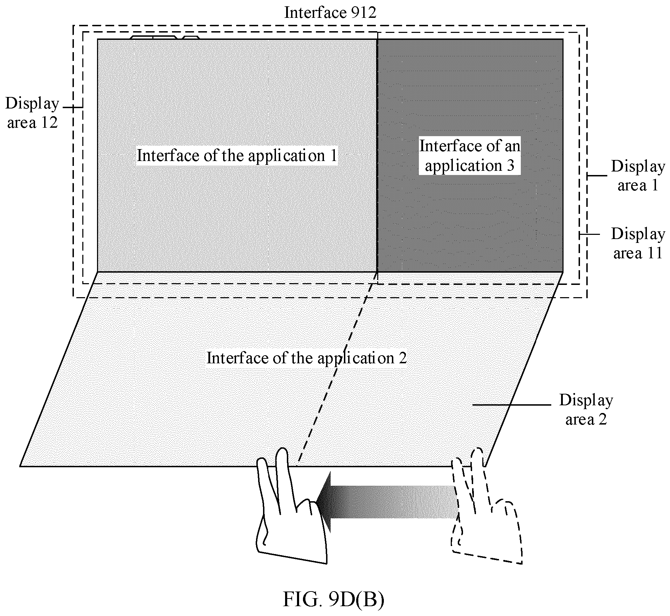

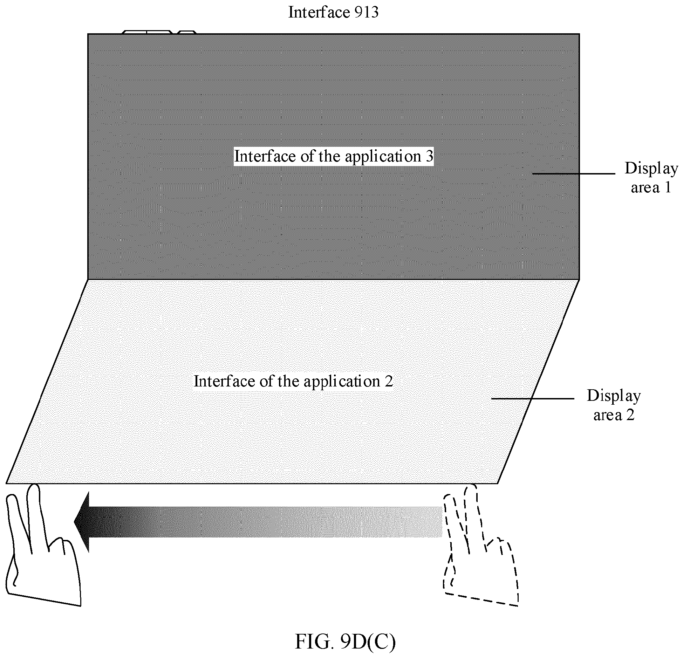

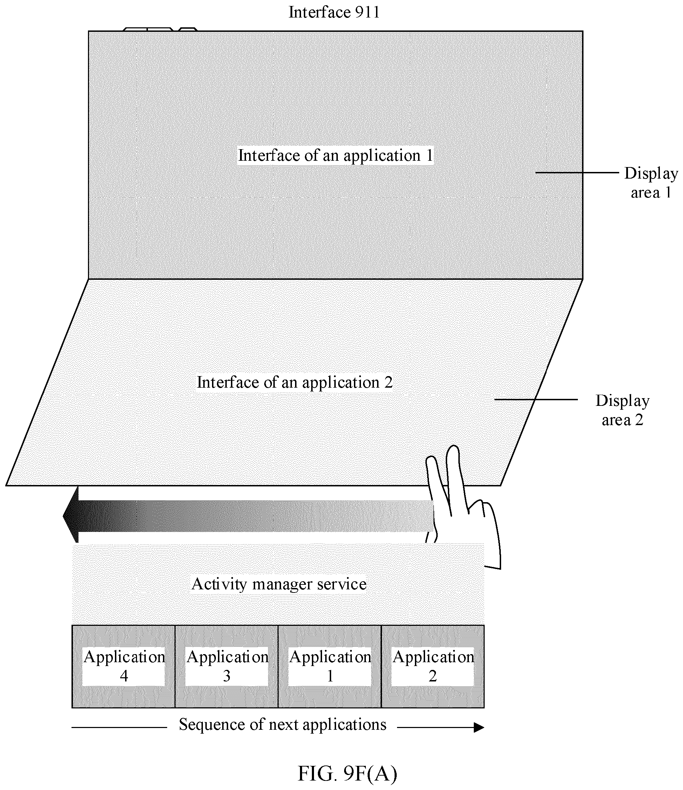

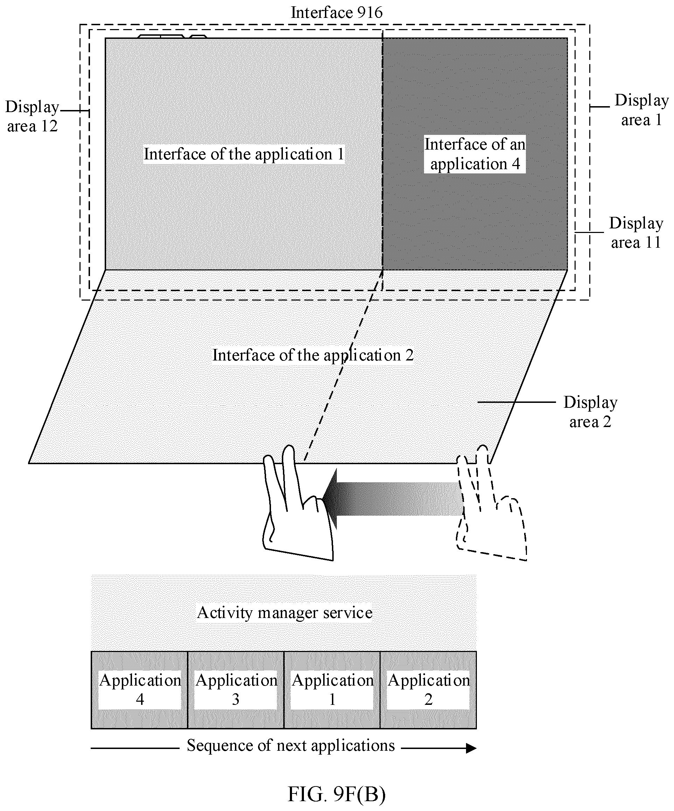

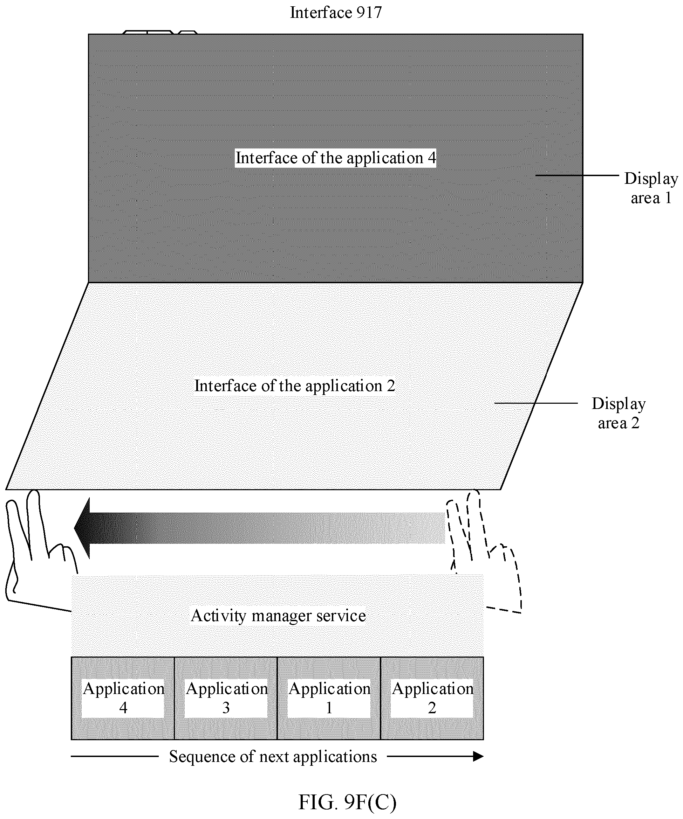

FIG. 9D(A) to FIG. 9F(C) are diagrams of an example of an interface change after switching of an application on the split-screen interface according to an embodiment of this application.

As shown in FIG. 9D(A) to FIG. 9F(C), when the interface displayed by the electronic device is an interface 911, if an operation of different-screen switching to a next application by the user is received in a display area 2, the interface displayed by the electronic device changes from the interface 911 to an interface 912, and then changes to an interface 913, or the interface changes from the interface 911 to an interface 913. The interface 911 is the same as the interface 901.

If an operation of different-screen switching to a next application by the user in the display area 2 on the interface 911 is received, an interface of an application 3 is displayed in a display area 11 on the interface 912, and an interface of an application 1 is displayed in a display area 12 on the interface 912, where the display area 1 on the interface 912 includes the display area 11 and the display area 12. Then, on the interface 912, as a switching animation of an application changes, the display area 11 is continuously expanded, and the display area 12 is continuously reduced. Finally, content displayed in a display area 1 on the interface displayed by the electronic device is the interface of the application 3. In this case, sizes of the display area 1 and the display area 11 are equal. On the interface 913, the interface of the application 3 is displayed in the display area 2.

Optionally, in some implementations of this application, an operation of different-screen switching to a next application is an interaction manner with a single finger, two fingers, more fingers, or the like. This is not limited herein.

Optionally, in some implementations of this application, when the electronic device supports both the operation of different-screen switching to a next application and the operation of same-screen switching to a next application, the operation of different-screen switching to a next application is different from the operation of same-screen switching to a next application.

Optionally, in some implementations of this application, a location of the operation of different-screen switching to a next application by the user is a boundary location between the display area 11 and the display area 12.

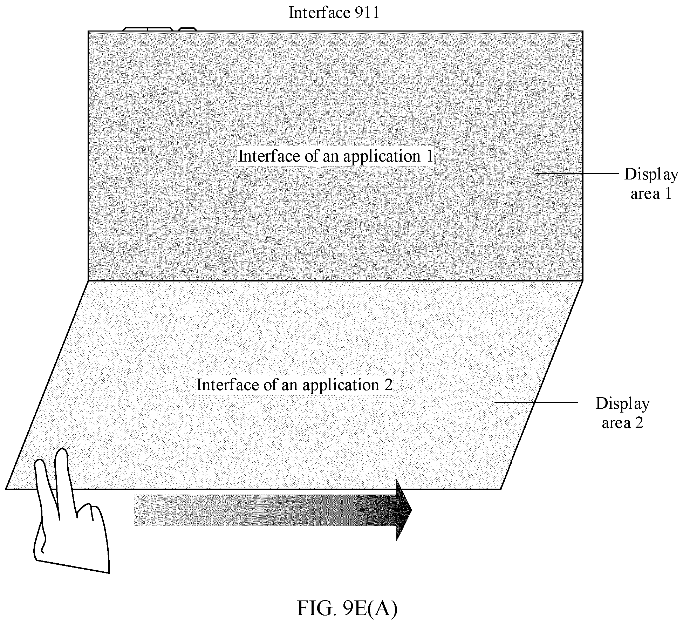

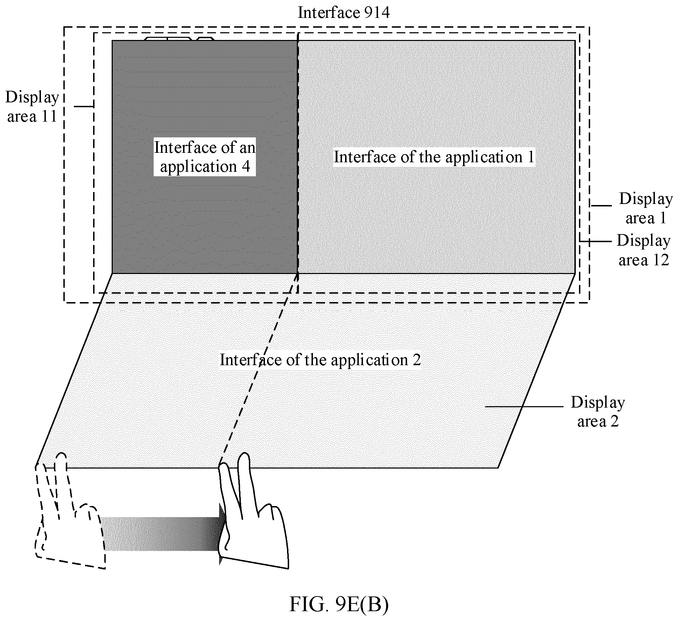

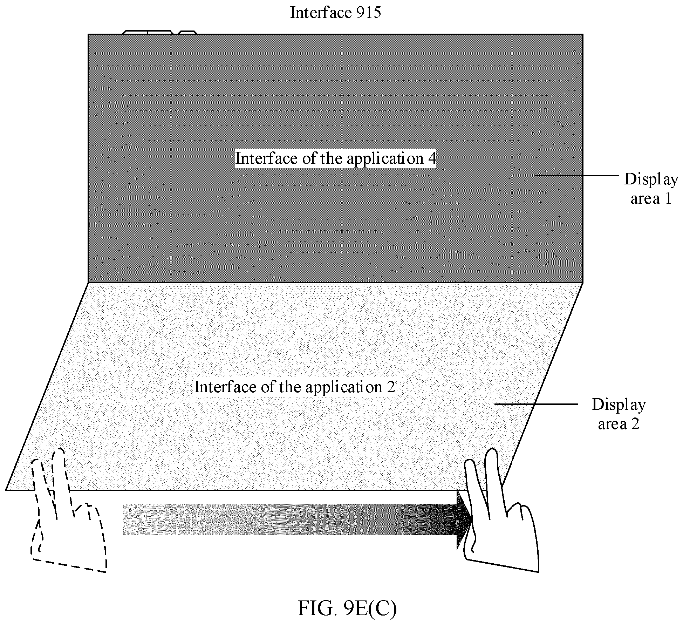

As shown in FIG. 9E(A) to FIG. 9E(C), when the interface displayed by the electronic device is an interface 911, after an operation of different-screen switching to a previous application by the user is received in a display area 2, the interface displayed by the electronic device changes from the interface 911 to an interface 914, and then changes to an interface 915, or the interface changes from the interface 911 to an interface 915.

If an operation of different-screen switching to a previous application by the user in the display area 2 on the interface 911 is received, an interface of an application 4 is displayed in a display area 11 on the interface 914, and an interface of an application 1 is displayed in a display area 12 on the interface 914, where the display area 1 on the interface 914 includes the display area 11 and the display area 12. Then, on the interface 914, as a switching animation of an application changes, the display area 11 is continuously expanded, and the display area 12 is continuously reduced. Finally, content displayed in a display area 1 on the interface displayed by the electronic device is the interface of the application 4. In this case, sizes of the display area 1 and the display area 11 are equal. On the interface 915, the interface of the application 4 is displayed in the display area 2.

Optionally, in some implementations of this application, an operation of different-screen switching to a previous application is an interaction manner with a single finger, two fingers, more fingers, or the like. This is not limited herein.

Optionally, in some implementations of this application, a location of the operation of different-screen switching to a previous application by the user is a boundary location between the display area 11 and the display area 12.

As shown in FIG. 9F(A) to FIG. 9F(C), when the interface displayed by the electronic device is an interface 911, if an operation of different-screen switching to a next application in a display area 2 on the interface 911 by the user is received, the interface displayed by the electronic device changes from the interface 911 to an interface 916, and then changes to an interface 917, or the interface changes from the interface 911 to an interface 917.

The electronic device may determine, by using the AMS, whether there is a next application. In content shown in FIG. 9F(A) to FIG. 9F(C), the application 2 does not have a next application, a previous application of the application 1 is the application 3, and a previous application of the application 3 is the application 4. Because both the application 1 and the application 2 are displayed on the screen, and the application 1 does not have a next application, it may be considered that a next application of the application 1 is the application 4.

On the interface 916, display areas of the screen of the electronic device include a display area 1 and a display area 2, and the display area 2 includes a display area 21 and a display area 22. The interface of the application 4 is displayed in the display area 11, and the interface of the application 1 is displayed in the display area 12. On the interface 917, the interface of the application 4 is displayed in the display area 1.

In the content shown in FIG. 9D(A) to FIG. 9F(C), the application 4 and the application 3 may be referred to as fourth applications.

Application scenario 3.3: After displaying the split-screen interface, the electronic device in the support state switches to the to-be-split-screen interface.

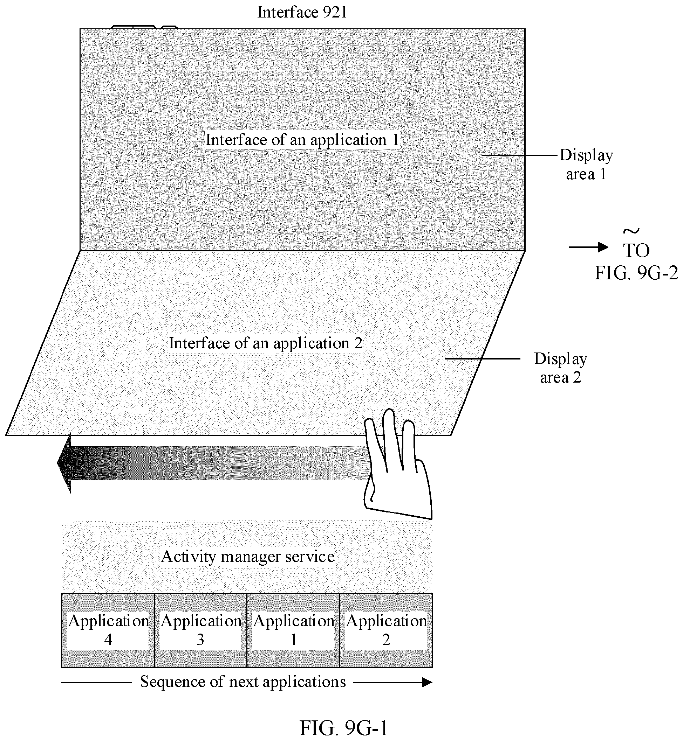

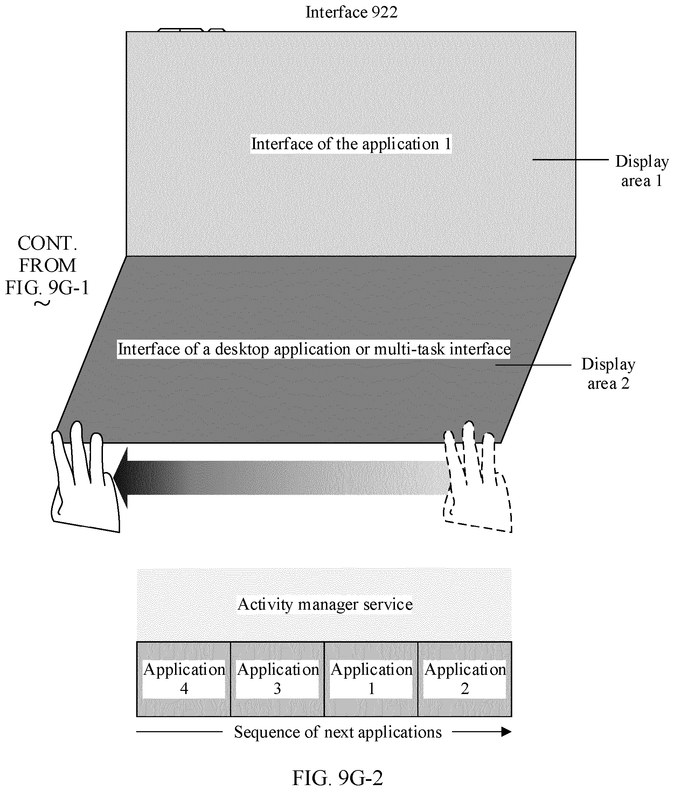

FIG. 9G-1 to FIG. 9J are diagrams of an example of switching from the split-screen interface to the to-be-split-screen interface according to an embodiment of this application.

As shown in FIG. 9G-1 and FIG. 9G-2, when the interface displayed by the electronic device is an interface 921, if an operation of same-screen switching to a next application by the user is received in a display area 2, and the electronic device determines that the application 1 does not have a next application, the interface displayed by the electronic device changes to an interface 922, where the interface 922 is a to-be-split-screen interface. The interface 921 is the same as the interface 901.

On the interface 922, display areas of the interface 922 include a display area 1 and the display area 2. An interface of an application 1 is displayed in the display area 1, and an interface of a desktop application or a multi-task interface is displayed in the display area 2.

As shown in FIG. 9H-1 and FIG. 9H-2, when the interface displayed by the electronic device is an interface 921, after receiving an operation of different-screen switching to a next application in a display area 2 on the interface 921 by the user, when the electronic device determines that the application 1 does not have a next application, the interface displayed by the electronic device changes to an interface 923, where the interface 923 is a to-be-split-screen interface.

On the interface 923, display areas of the interface 923 include a display area 1 and the display area 2. An interface of an application 2 is displayed in the display area 2, and an interface of a desktop application or a multi-task interface is displayed in the display area 1.

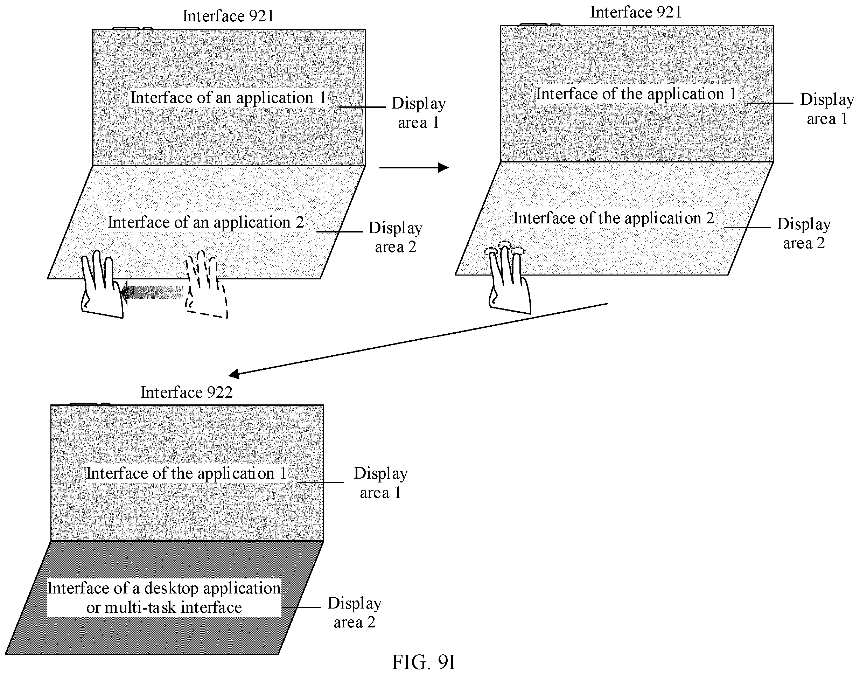

As shown in FIG. 9I, when the interface displayed by the electronic device is an interface 921, after receiving an operation of same-screen displaying the to-be-split-screen interface by the user in a display area 2, the electronic device displays an interface 922.

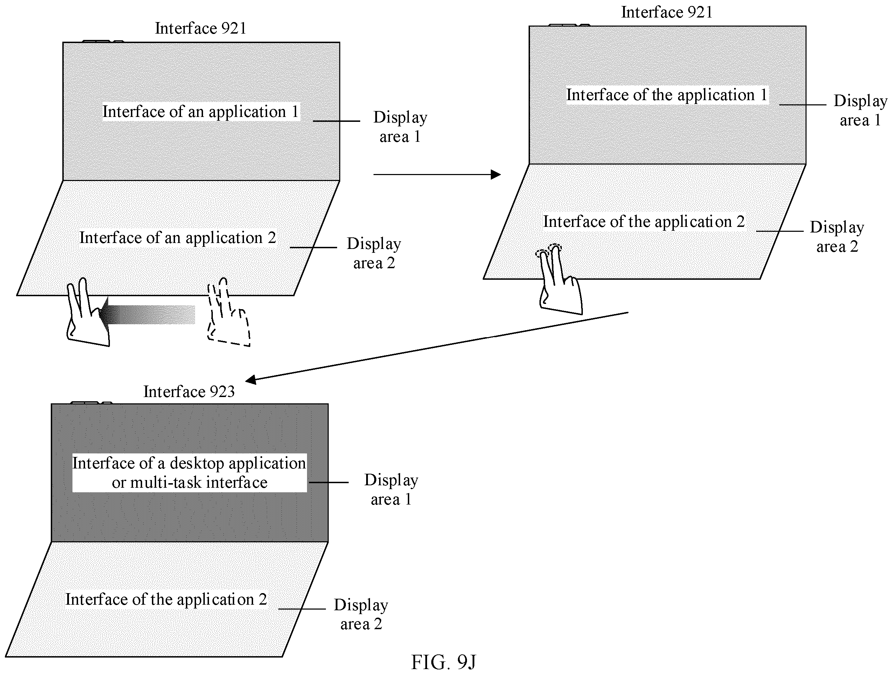

As shown in FIG. 9J, when the interface displayed by the electronic device is an interface 921, after receiving an operation of different-screen displaying the to-be-split-screen interface by the user in a display area 2 on the interface 921, the electronic device displays an interface 923.

Optionally, in some implementations of this application, the operation of same-screen displaying the to-be-split-screen interface is a touch and hold operation after an operation of same-screen switching to a next application, or the operation of same-screen displaying the to-be-split-screen interface is a touch and hold operation after an operation of same-screen switching to a previous application. For example, the operation of same-screen displaying the to-be-split-screen interface may be a touch and hold operation after a three-finger horizontal swipe operation, a touch and hold operation after a three-finger vertical swipe operation, or the like. This is not limited herein.

Optionally, in some implementations of this application, the operation of different-screen displaying the to-be-split-screen interface is a touch and hold operation after an operation of different-screen switching to a next application, or the operation of different-screen displaying the to-be-split-screen interface is a touch and hold operation after an operation of different-screen switching to a previous application. For example, the operation of different-screen displaying the to-be-split-screen interface may be a touch and hold operation after a two-finger horizontal swipe operation, a touch and hold operation after a two-finger vertical swipe operation, or the like. This is not limited herein.

Scenario 4: After displaying a split-screen interface, the electronic device in a support state switches display content of an application.

Optionally, in some embodiments of this application, switching the display content of the application is switching between parent and child pages of the application.

Optionally, in some embodiments of this application, switching the display content of the application is switching between sibling pages of the application.

The following describes each sub-scenario.

Scenario 4.1: After displaying the split-screen interface, the electronic device in the support state switches between parent and child pages that are different of the application.

Optionally, in some embodiments of this application, the parent and child pages may be a relationship between a home page, a level-1 page, and a level-2 page of the application. The home page is a parent page of the level-1 page, the level-1 page is a parent page of the level-2 page, the level-2 page is a child page of the level-1 page, and the level-1 page is a child page of the home page. When any page has a plurality of parent pages or child pages, a parent page that needs to be jumped to may be determined from the plurality of parent pages by using a focus (focus), and similarly, a child page that needs to be jumped to may be determined from the plurality of child pages by using the focus. The electronic device may determine the focus in a plurality of manners. For example, a control on which a user gazes is a control for obtaining the focus.

Optionally, in some embodiments of this application, the parent page is a page previous to a current page entered by the user. For example, if the user enters a page 2 from the home page, the home page may be a parent page of the page 2.

Optionally, in some embodiments of this application, the parent and child pages may be content in different partitions on one page of the application. For example, for a news application, a comment area is a child page of news content, and correspondingly, the news content is a parent page of the comment area.

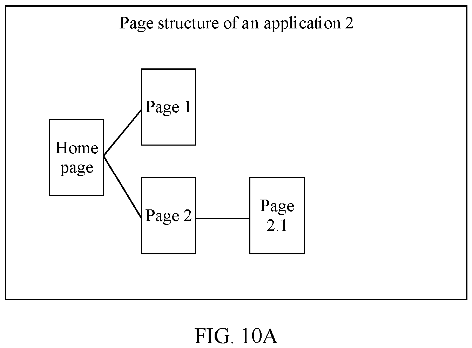

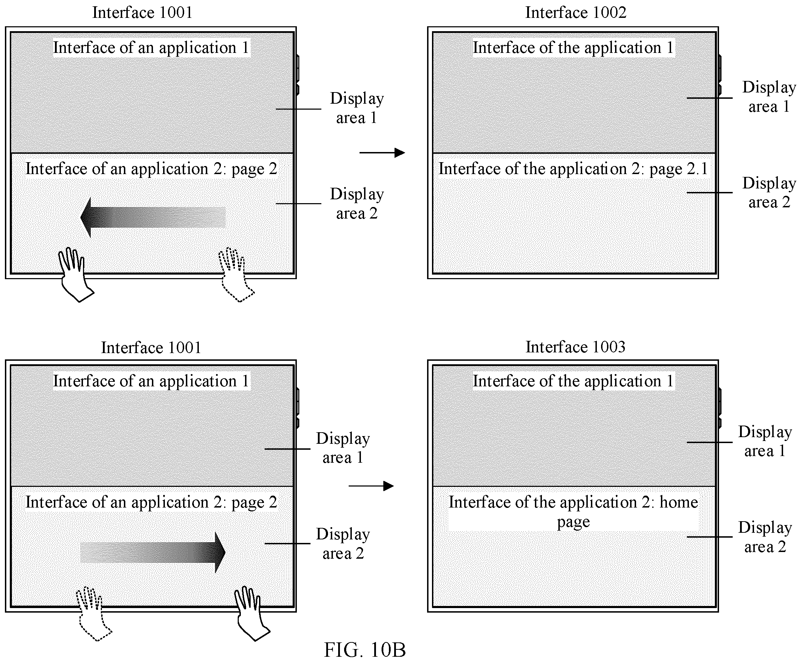

FIG. 10A and FIG. 10B are diagrams of an example of switching between parent and child pages that are different of an application after the electronic device in an unfolded state displays a split-screen interface according to an embodiment of this application.

As shown in FIG. 10A, a page structure of an application 2 includes a home page, a page 1, a page 2, and a page 2.1. The home page is a parent page of the page 1 and the page 2, and the page 2 is a parent page of the page 2.1.

If a first page is the home page, a second page is the page 1 or the page 2. If a first page is the page 1, a second page is the home page. If a first page is the page 2, a second page is the home page or the page 2.1. If a first page is page 2.1, a second page is page 2.

If a third page is the home page, a fourth page is the page 1 or the page 2. If a third page is the page 1, a fourth page is the home page. If a third page is the page 2, a fourth page is the home page or the page 2.1. If the third page is page 2.1, the fourth page is page 2.

As shown in FIG. 10B, after the user enters the page 2 through the home page of the application 2, an interface displayed by the electronic device is an interface 1001. The interface 1001 is a split-screen interface. Display areas on the interface 1001 include a display area 1 and a display area 2. An interface of an application 1 is displayed in the display area 1, and an interface of the application 2: the page 2, is displayed in the display area 2.

After receiving an operation of same-screen switching to a child page in the display area 2 by the user, the interface displayed by the electronic device is an interface 1002. The interface 1002 is a split-screen interface. Display areas on the interface 1002 include the display area 1 and the display area 2. The interface of the application 1 is displayed in the display area 1, and an interface of the application 2: the page 2.1, is displayed in the display area 2.

Alternatively, after the user enters the page 2 through the home page of the application 2, an interface displayed by the electronic device is an interface 1001. After receiving an operation of switching to a parent page by the user in a display area 2, the interface displayed by the electronic device is an interface 1003. The interface 1003 is a split-screen interface. Display areas on the interface 1003 include a display area 1 and the display area 2. An interface of an application 1 is displayed in the display area 1, and an interface of the application 2: the home page, is displayed in the display area 2.

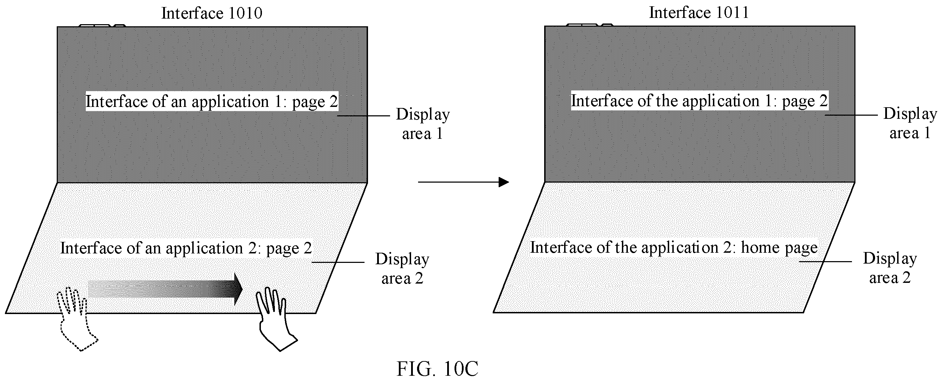

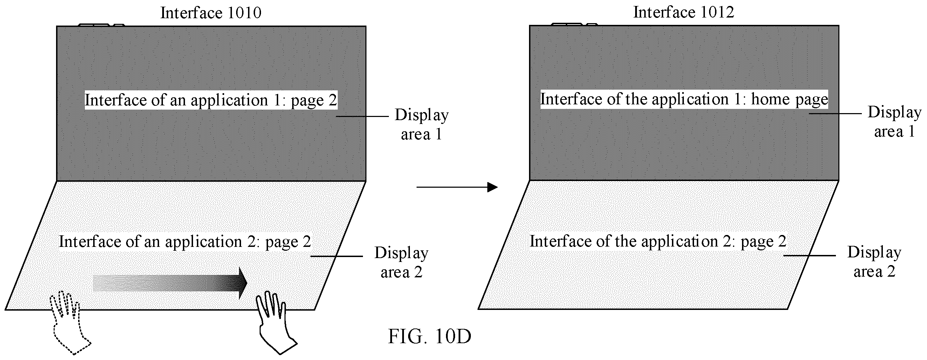

FIG. 10C and FIG. 10D are diagrams of another example of switching between parent and child pages that are different of an application after the electronic device in the support state displays the split-screen interface according to an embodiment of this application.

As shown in FIG. 10C, content displayed by the electronic device in the support state is shown in an interface 1010. Display areas on the interface 1010 include a display area 1 and a display area 2. An interface of an application 1: a page 2, is displayed in the display area 1, and an interface of the application 2: the page 2, is displayed in the display area 2.

After an operation of same-screen switching to a parent page by the user in the display area 2 on the interface 1010 is received, an interface displayed by the electronic device changes to an interface 1011. Display areas on the interface 1011 include a display area 1 and a display area 2. The interface of the application 1: the page 2 is displayed in the display area 1, and an interface of the application 2: the home page, is displayed in the display area 2.

Optionally, in some implementations of this application, after the electronic device receives an operation of same-screen switching to a child page by the user in the display area 2 on the interface 1010, an interface of the application 2: a level-3 page, is displayed in the display area 2 on the interface 1011.

As shown in FIG. 10D, in content shown in FIG. 10D, a parent/child page relationship of the application 1 is the same as a parent/child page relationship of the application 2.

After receiving an operation of different-screen switching to a parent page in the display area 2 on the interface 1010 by the user, the interface displayed by the electronic device is an interface 1012. Display areas on the interface 1012 include a display area 1 and a display area 2. An interface of the application 1: a home page, is displayed in the display area 1, and an interface of the application 2: the page 2, is displayed in the display area 2.

Optionally, in some implementations of this application, after the electronic device receives an operation of different-screen switching to a child page by the user in the display area 2, the interface of the application 1: the level-3 page, is displayed in the display area 1.

Optionally, in some implementations of this application, when the electronic device supports both the operation of different-screen switching to a parent page and the operation of same-screen switching to a parent page, the operation of different-screen switching to a parent page is different from the operation of same-screen switching to a parent page. Similarly, when the electronic device supports both the operation of different-screen switching to a child page and the operation of same-screen switching to a child page, the operation of different-screen switching to a child page is different from the operation of same-screen switching to a child page.

The operation of same-screen switching to a parent page and/or the operation of same-screen switching to a child page may be referred to as a fifth swipe operation, and the operation of different-screen switching to a parent page and/or the operation of different-screen switching to a child page may be referred to as a fourth swipe operation.

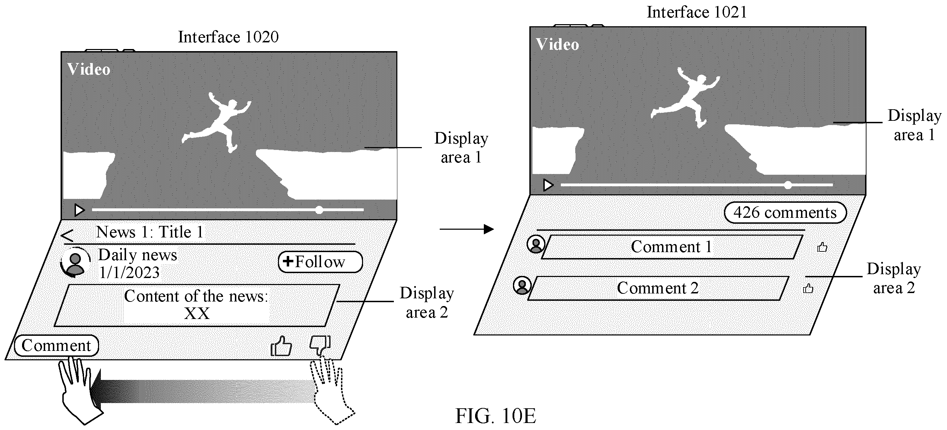

FIG. 10E is a diagram of another example of switching between parent and child pages that are different of an application after the electronic device in the support state displays the split-screen interface according to an embodiment of this application.

In FIG. 10E, an interface displayed by the electronic device is an interface 1020. Display areas on the interface 1020 include a display area 1 and a display area 2. An interface of a video application is displayed in the display area 1, and an interface of a news application is displayed in the display area 2. In other words, a news details page is displayed in the display area 2, and the news details page includes content of news.

After receiving an operation of same-screen switching to a child page of the application by the user in the display area 2, the electronic device displays an interface 1021. Content of a display area 1 on the interface 1021 is the same as content of the display area 1 on the interface 1020. A news comment page is displayed in a display area 2 on the interface 1021. The news comment page includes comments on news, for example, comment content 1 and comment content 2 on the interface 1021.

In content shown in FIG. 10E, the news details page is a parent page of the news comment page, and the news comment page is a child page of the news details page. In an actual layout of the application, the news details page and the news comment page may have various view nesting relationships. This is not limited herein. If a first page is the news details page, a second page is the news comment page. If a first page is the news comment page, a second page is the news details page.

Optionally, in some embodiments of this application, a lyrics page of Music and a comment page of Music may be considered as parent and child pages.

Optionally, in some implementations of this application, an operation of (same-screen or different-screen) switching to a child page or an operation of (same-screen or different-screen) switching to a parent page is another customized operation like a four-finger horizontal swipe operation or a three-finger horizontal swipe operation.

The operation of same-screen switching to a child page and the operation of same-screen switching to a parent page may be referred to as fifth swipe operations. The operation of different-screen switching to a parent page and the operation of different-screen switching to a child page are fourth swipe operations.

Optionally, in some implementations of this application, when an operation of switching to a child page is a four-finger horizontal swipe operation from left to right, an operation of switching to a parent page is a four-finger horizontal swipe operation from right to left, that is, the operation of switching to a child page may be an operation in a direction opposite to a direction of the operation of switching to a parent page.

Optionally, in some implementations of this application, when the interface displayed by the electronic device is an up-down split-screen interface, an operation of switching to a parent page or an operation of switching to a child page is a horizontal swipe operation. When the interface displayed by the electronic device is a left-right split-screen interface, an operation of switching to a parent page or an operation of switching to a child page is a vertical swipe operation.

Scenario 4.2: After displaying the split-screen interface, the electronic device in the support state switches between sibling pages of the application.

Optionally, in some embodiments of this application, the sibling pages may be pages that are provided by the application and that have a same function or similar functions.

Optionally, in some embodiments of this application, the sibling pages may be pages located at a same level in a page nesting structure of the application. For example, if the page nesting structure of the application is a tree structure, pages corresponding to nodes of a same depth are sibling pages. For another example, if the page nesting structure of the application is a tree structure, pages corresponding to nodes that are brother nodes of each other are sibling pages.

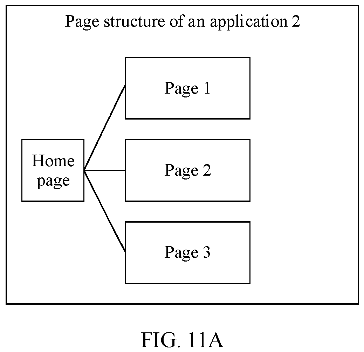

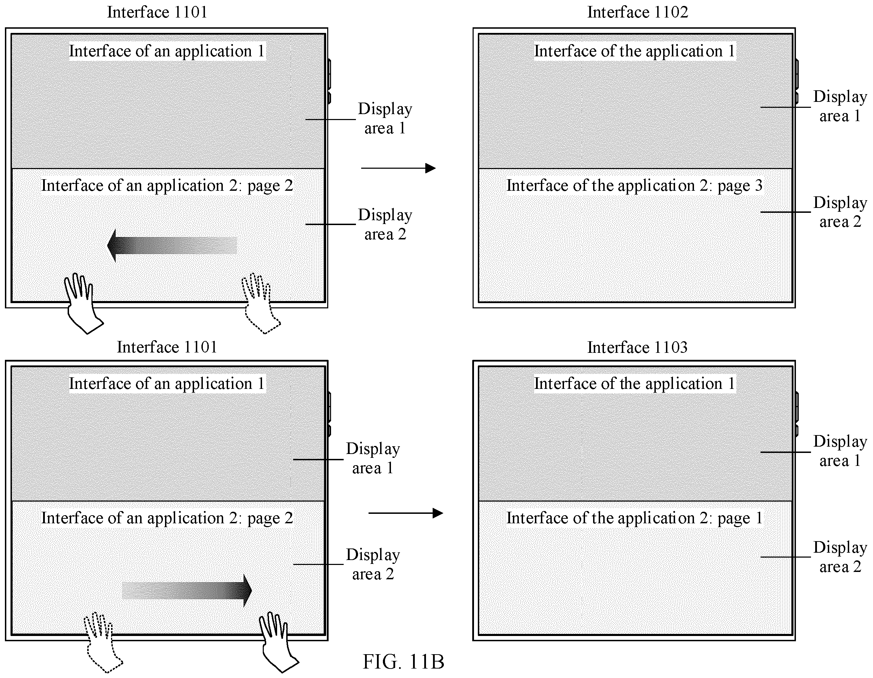

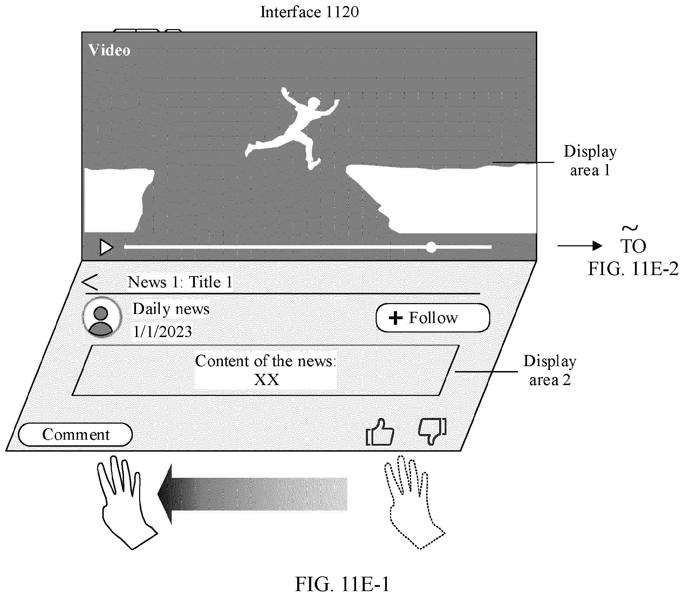

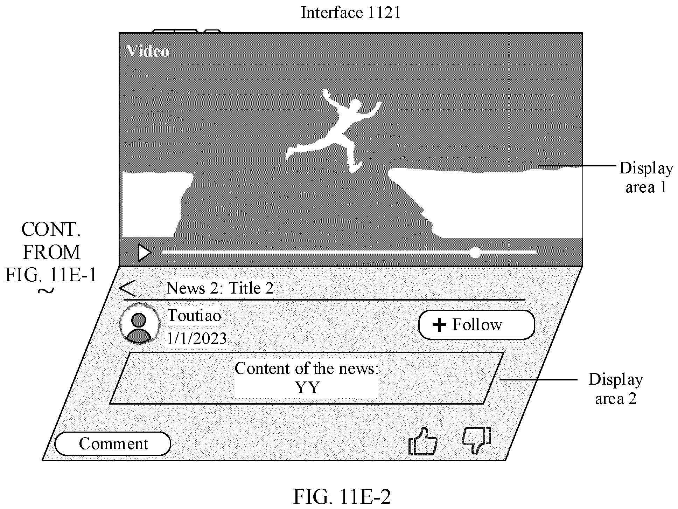

FIG. 11A and FIG. 11B are diagrams of an example of switching between the sibling pages of the application after the split-screen interface is displayed according to an embodiment of this application.

As shown in FIG. 11A, a page structure of an application 2 includes a home page, a page 1, a page 2, and a page 3. The page 1, the page 2, and the page 3 are sibling pages, and an internal sequence (upper-lower sequence) of the sibling pages is the page 1, the page 2, and the page 3.

If the page 1 is a first page, the page 2 or the page 3 is a fifth page. If the page 2 is a first page, the page 3 or the page 1 is a fifth page. If the page 2 is a first page, the page 3 or the page 1 is a fifth page.

If the page 1 is a third page, the page 2 or the page 3 is a sixth page. If the page 2 is a third page, the page 3 or the page 1 is a sixth page. If the page 2 is a third page, the page 3 or the page 1 is a sixth page.

As shown in FIG. 11B, an interface 1101 is a split-screen interface. Display areas on the interface 1101 include a display area 1 and a display area 2. An interface of an application 1 is displayed in the display area 1, and an interface of the application 2: the page 2, is displayed in the display area 2.

After receiving an operation of downward switching to a sibling page in the display area 2 on the interface 1101 by the user, an interface displayed by the electronic device is an interface 1102. The interface 1102 is a split-screen interface. Display areas on the interface 1102 include a display area 1 and a display area 2. The interface of the application 1 is displayed in the display area 1, and an interface of the application 2: the page 3, is displayed in the display area 2.

Alternatively, after receiving an operation of upward switching to a sibling page in the display area 2 by the user, the interface displayed by the electronic device is an interface 1103. The interface 1103 is a split-screen interface. Display areas on the interface 1103 include a display area 1 and a display area 2. The interface of the application 1 is displayed in the display area 1, and an interface of the application 2: the page 3, is displayed in the display area 2.

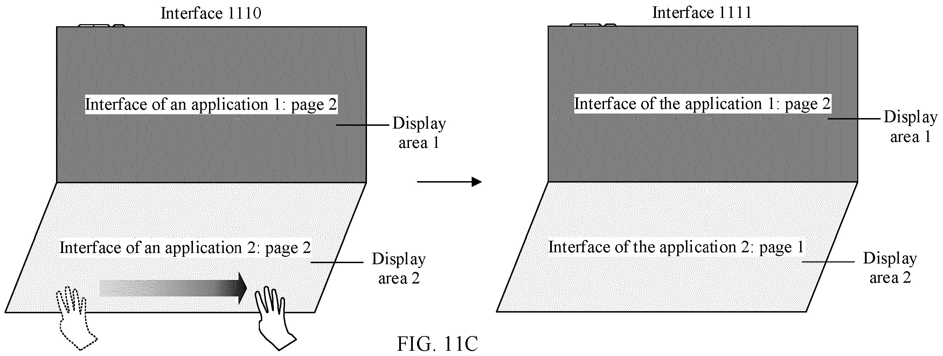

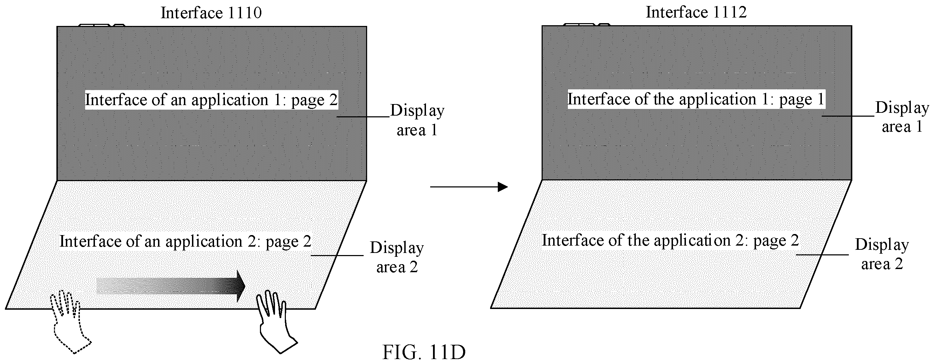

FIG. 11C and FIG. 11D are diagrams of another example of switching between the sibling pages of the application after the electronic device in the support state displays the split-screen interface according to an embodiment of this application.

As shown in FIG. 11C, content displayed by the electronic device in the support state is shown in an interface 1110. Display areas on the interface 1110 include a display area 1 and a display area 2. An interface of an application 1: a page 2, is displayed in the display area 1, and an interface of the application 2: the page 2, is displayed in the display area 2.

After receiving an operation of same-screen upward switching to a sibling page in the display area 2 by the user, an interface displayed by the electronic device is an interface 1111. Display areas on the interface 1111 include a display area 1 and a display area 2. An interface of the application 1: a page 2, is displayed in the display area 1, and an interface of the application 2: the page 1, is displayed in the display area 2.

Optionally, in some implementations of this application, after the electronic device receives an operation of same-screen downward switching to a sibling page by the user in the display area 2, the interface of the application 2: the page 3, is displayed in the display area 2 on the interface 1111.

As shown in FIG. 11D, in content shown in FIG. 11D, a sibling page relationship of the application 1 is the same as a sibling page relationship of the application 2.

After an operation of different-screen upward switching to a sibling page by the user in the display area 2 on the interface 1110 is received, the interface displayed by the electronic device is an interface 1112. Display areas on the interface 1112 include a display area 1 and a display area 2. An interface of an application 1: a page 1, is displayed in the display area 1, and the interface of the application 2: the page 2, is displayed in the display area 2.

Optionally, in some implementations of this application, after the electronic device receives an operation of different-screen downward switching to a sibling page by the user in the display area 2 on the interface 1110, an interface of the application 1: a page 3, is displayed in the display area 1 on the interface 1112.

Optionally, in some implementations of this application, when the electronic device supports both the operation of different-screen upward switching to a sibling page and the operation of same-screen upward switching to a sibling page, the operation of different-screen upward switching to a sibling page is different from the operation of same-screen upward switching to a sibling page. Similarly, when the electronic device supports both the operation of different-screen downward switching to a sibling page and the operation of same-screen downward switching to a sibling page, the operation of different-screen downward switching to a sibling page is different from the operation of same-screen downward switching to a sibling page.

The operation of different-screen downward switching to a sibling page and/or the operation of different-screen upward switching to a sibling page may be referred to as a sixth swipe operation, and the operation of same-screen downward switching to a sibling page and/or the operation of same-screen upward switching to a sibling page may be referred to as a seventh swipe operation.

FIG. 11E-1 and FIG. 11E-2 are a diagram of another example of switching between the sibling pages of the application after the electronic device in the support state displays the split-screen interface according to an embodiment of this application.

In FIG. 11E-1 and FIG. 11E-2, an interface displayed by the electronic device is an interface 1120. Display areas on the interface 1120 include a display area 1 and a display area 2. An interface of a video application is displayed in the display area 1, and an interface of a news application is displayed in the display area 2. In other words, a news details page 1 is displayed in the display area 2, and the news details page 1 includes content of news 1.

After receiving an operation of same-screen downward switching to a sibling page of the application by the user in the display area 2 on the interface 1120, the electronic device displays an interface 1121. Content of a display area 1 on the interface 1121 is the same as content of the display area 1 on the interface 1120. A news details page 2 is displayed in a display area 2 on the interface 1021, and the news details page 2 includes content of news 2.

In content shown in FIG. 11E-1 and FIG. 11E-2, the news details page 1 and the news details page 2 are sibling pages of each other, and an internal sequence (upper-lower sequence) of the news details page 1 and the news details page 2 is the news details page 1 and the news details page 2.

Optionally, in some implementations of this application, an operation of downward switching to a sibling page or an operation of upward switching to a sibling page is another customized operation like a four-finger horizontal swipe operation or a three-finger horizontal swipe operation.

Optionally, in some implementations of this application, when an operation of downward switching to a sibling page is a four-finger horizontal swipe operation from left to right, an operation of upward switching to a sibling page is a four-finger horizontal swipe operation from right to left, that is, the operation of downward switching to a sibling page may be an operation in a direction opposite to a direction of the operation of upward switching to a sibling page.

Optionally, in some implementations of this application, when the interface displayed by the electronic device is an up-down split-screen interface, an operation of upward switching to a sibling page or an operation of downward switching to a sibling page is a horizontal swipe operation. When the interface displayed by the electronic device is a left-right split-screen interface, an operation of upward switching to a sibling page or an operation of downward switching to a sibling page is a vertical swipe operation.

Scenario 5: A manner of processing of a control like a floating window, a small window, a notification, or a sidebar on a to-be-split-screen interface and/or a split-screen interface.

The following describes each sub-scenario.

Scenario 5.1: The manner of processing of the control like the floating window or the small window on the to-be-split-screen interface and/or the split-screen interface.

In a process in which the electronic device determines to display the to-be-split-screen interface and/or the split-screen interface, the electronic device may move a location of the control like the floating window or the small window, so that the control like the floating window or the small window does not cross two display areas. This improves visual perception of a user.

Optionally, in some implementations of this application, in a process in which the electronic device determines to display the to-be-split-screen interface and/or the split-screen interface, the electronic device may alternatively determine a location of the control like the floating window or the small window on the to-be-split-screen interface and/or the split-screen interface based on an original location of the control like the floating window or the small window.

Optionally, in some implementations of this application, the electronic device may alternatively adjust a size of the control like the floating window or the small window, so that the control like the floating window or the small window is suitable to be displayed on the to-be-split-screen interface and/or the split-screen interface.

Optionally, in some implementations of this application, the electronic device may alternatively determine a location of the control like the floating window or the small window on the to-be-split-screen interface and/or the split-screen interface based on whether the control like the floating window or the small window is an interactive control.

Optionally, in some implementations of this application, the electronic device may alternatively determine a location of the control like the floating window or the small window on the to-be-split-screen interface and/or the split-screen interface based on whether the control like the floating window or the small window is a display control. When the control like the floating window or the small window is a display control, the control is preferentially displayed in a display area 1. When the control like the floating window or the small window is an interactive control, the control is preferentially displayed in a display area 2. Because the floating window and the small window are controls for displaying an interface of an application, whether the control like the floating window or the small window is an interactive control may be determined in the foregoing manner of determining whether the application is an interactive application. Alternatively, whether the control like the floating window or the small window is a display control may be determined in the foregoing manner of determining whether the application is a display-type application. Details are not described herein again.

Before the electronic device adjusts the location/locations of the floating window and/or the small window, the location/locations of the floating window and/or the small window are/is a first position. The electronic device adjusts the location/locations of the floating window and/or the small window to a second position.

FIG. 12A to FIG. 12F-2 are diagrams of examples of manners of processing the controls such as the floating window and the small window on the to-be-split-screen interface and/or the split-screen interface according to an embodiment of this application.

As shown in FIG. 12A, an interface displayed by the electronic device is an interface 1201, and content displayed on the interface 1201 is an interface of an application 1 and an interface of an application 2. The interface of the application 2 is displayed above the interface of the application 1 in a form of a floating window or a small window in a floating manner.

After receiving a screen splitting operation, the electronic device displays a to-be-split-screen interface, as shown in an interface 1202 in FIG. 12A. Display areas on the interface 1202 include a display area 1 and a display area 2. The interface of the application 1 is displayed in the display area 1, an interface of a desktop application or a multi-task interface is displayed in the display area 2, and the interface of the application 2 is further displayed in the display area 2. The interface of the application 2 is displayed above the interface of the desktop application in a floating manner, or the interface of the application 2 is displayed above the multi-task interface in a floating manner, that is, the interface of the application 2 is displayed in the form of the floating window or the small window.

Optionally, in some implementations of this application, on the interface 1202, the interface of the application 2 may alternatively appear in the display area 1.

Optionally, in some implementations of this application, in a process in which the interface displayed by the electronic device changes from the interface 1201 to the interface 1202, after the screen splitting operation is received, and it is determined that there is a small window or a floating window on a current interface like the interface 1201, it may be determined whether a location occupied by the small window or the floating window on the interface is close to an upper side or a lower side. If the location occupied by the small window or the floating window on the interface is close to the upper side, the small window or the floating window is displayed in the display area 1 (the display area 1 is on an upper side of the display area 2). If the location occupied by the small window or the floating window on the interface is close to the lower side, the small window or the floating window is displayed in the display area 2. Whether the location occupied by the small window or the floating window on the interface is close to the upper side or the lower side may be determined based on the location of the small window or the floating window.

Optionally, in some implementations of this application, the location of the small window or the floating window may be determined based on sizes occupied by the small window or the floating window in the display area 1 and the display area 2 respectively. After the electronic device changes from an unfolded state to a support state, if a size occupied by the small window or the floating window in the display area 1 is greater than a size occupied by the small window or the floating window in the display area 2, after the electronic device is switched to the support state, the location of the small window or the floating window is adjusted to be displayed in the display area 1, and vice versa. The size occupied by the small window or the floating window in the display area 1 may be referred to as a first size, and the size occupied by the small window or the floating window in the display area 2 may be referred to as a second size.

Optionally, in some implementations of this application, in a process in which the interface displayed by the electronic device changes from the interface 1201 to the interface 1202, when it is determined that a small window or a floating window exists on a current interface like the interface 1201, a screen that is on the foldable screen and on which the small window or the floating window is displayed may be determined (in this case, it may be considered that the foldable screen in the unfolded state have two screens), and the small window or the floating window is displayed on the corresponding screen on the split-screen interface or the to-be-split-screen interface.

As shown in FIG. 12B-1 and FIG. 12B-2, an interface displayed by the electronic device is an interface 1203, and content displayed on the interface 1201 is an interface of a music application and an interface of an instant messaging application. The interface of the instant messaging application is displayed above the interface of the music application in a floating manner in a form of a small window or a floating window, and the interface of the instant messaging application is a floating window 1205 or a small window 1205 in FIG. 12B-1 and FIG. 12B-2.

After receiving a screen splitting operation, the electronic device displays a to-be-split-screen interface, as shown in an interface 1204 in FIG. 12B-1 and FIG. 12B-2. Display areas on the interface 1204 include a display area 1 and a display area 2. The interface of the music application is displayed in the display area 1, and the interface of the desktop application and the interface of the instant messaging application are displayed in the display area 2. The interface of the instant messaging application is displayed above the interface of the desktop application in a floating manner, and the interface of the instant messaging application is a floating window 1205 or a small window 1205 in FIG. 12B-1 and FIG. 12B-2.

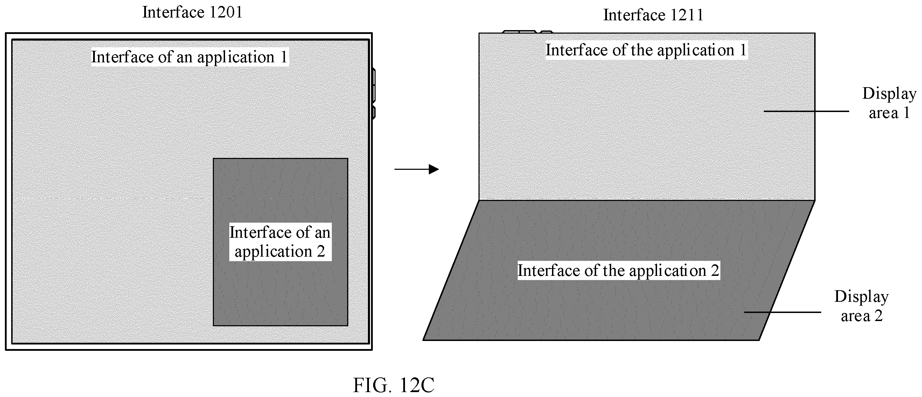

As shown in FIG. 12C, an interface displayed by the electronic device is an interface 1201. After receiving a screen splitting operation, the electronic device displays a split-screen interface, as shown in an interface 1211 in FIG. 12C. The interface 1211 includes a display area 1 and a display area 2. The interface of the application 1 is displayed in the display area 1, and the interface of the application 2 is displayed in the display area 2.

As shown in FIG. 12D-1 and FIG. 12D-2, an interface displayed by the electronic device is an interface 1212. The interface 1212 includes an interface of video playing software and the interface of the instant messaging application. The interface of the instant messaging application is displayed above the interface of the video playing software in a floating manner in a form of a small window or a floating window, for example, a floating window 1214 or a small window 1214 on the interface 1212.

After the electronic device receives a screen splitting operation, the interface displayed by the electronic device is an interface 1213. Display areas on the interface 1213 include a display area 1 and a display area 2. The interface of the video application is displayed in the display area 1 and the interface of the instant messaging application is displayed in the display area 2.

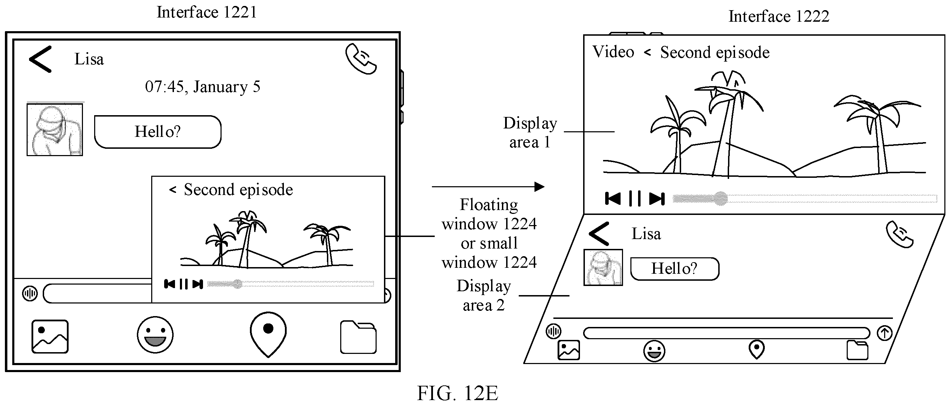

As shown in FIG. 12E, an interface displayed by the electronic device is an interface 1221. The interface 1221 includes the interface of the instant messaging application and an interface of the video application. The interface of the video application is displayed above the interface of the instant messaging application in a floating manner in a form of a floating window or a small window, namely, a floating window 1224 or a small window 1224 on the interface 1221.

After the electronic device receives a screen splitting operation, the interface displayed by the electronic device is an interface 1222. Display areas on the interface 1222 include a display area 1 and a display area 2. The interface of the video application is displayed in the display area 1 and the interface of the instant messaging application is displayed in the display area 2.

As shown in FIG. 12F-1 and FIG. 12F-2, an interface displayed by the electronic device is an interface 1221.

After the electronic device receives a screen splitting operation, the interface displayed by the electronic device is an interface 1223. The interface 1223 is a to-be-split-screen interface. Display areas on the interface 1223 include a display area 1 and a display area 2. The interface of the video application and the interface of the instant messaging application are displayed in the display area 1, and a multi-task interface or the interface of the desktop application is displayed in the display area 2. In the display area 2, the interface of the video application is displayed in a form of a floating window or a small window, for example, a floating window 1224 or a small window 1224 on the interface 1223.

In content shown in FIG. 12F-1 and FIG. 12F-2, when participating in screen splitting, the video application and the instant messaging application are in a binding relationship, and are displayed together in one display area.

Scenario 52: The manner of processing of the control like the sidebar on the to-be-split-screen interface and/or the split-screen interface.

In a process in which the electronic device determines to display the to-be-split-screen interface and/or the split-screen interface, the electronic device may move a location of the control like the sidebar, so that the control like the sidebar does not cross two display areas. This improves visual perception of a user.

FIG. 13A and FIG. 13B are a diagram of an example of the manner of processing the control like the sidebar on the to-be-split-screen interface and/or the split-screen interface according to an embodiment of this application.

As shown in FIG. 13A and FIG. 13B, an interface displayed by the electronic device is an interface 1301, and the interface 1301 includes an interface of a video application and a sidebar 1303. The sidebar may include icons of applications that are quickly opened, or include controls corresponding to some functions. For example, on the interface 1301, the sidebar includes a control for enabling or disabling an AI subtitling function, an icon of a Taobao® application, a control corresponding to a screenshot function, and a control corresponding to a settings function.

After a screen splitting operation is received, an interface displayed by the electronic device is an interface 1302, and display areas on the interface 1302 include a display area 1 and a display area 2. An interface of a video application is displayed in the display area 1, and the display area 2 includes a multi-task interface and the sidebar 1303. The sidebar 1303 is displayed in the display area 2 in a floating manner.

It may be understood that, because the sidebar is an interactive control, it is more convenient for the user to perform an operation when the sidebar is displayed in the display area 2.

Optionally, in some embodiments of this application, the sidebar 1303 may alternatively be displayed in the display area 1 on the interface 1302 in a floating manner.

Scenario 53: A manner of processing of a notification on the to-be-split-screen interface and/or the split-screen interface.

When the electronic device displays the to-be-split-screen interface and/or the split-screen interface, the electronic device may move a location of a control like the notification, or split content of the notification, so that an interactive notification (or a part that is in the notification and that needs to be interacted) appears in a display area 2, and a display notification (or a part that is in the notification and that needs to be displayed for the user to view) appears in a display area 1.

Optionally, in some implementations of this application, the operating system on the electronic device may agree on an API with an application. The API may be used by the application to specify whether the notification is an interactive notification or a display notification. Function implementation of the API may depend on a specific function module, and the function module may be located at the application framework layer.

Optionally, in some implementations of this application, the operating system on the electronic device may agree on an API with an application. The API may be used by the application to specify which content in the notification is interactive content, and is further used to specify which content in the notification is display content. Function implementation of the API may depend on a specific function module, and the function module may be located at the application framework layer. Optionally, in some implementations of this application, further, the operating system may reorganize a display form of interactive content and/or display content.

Optionally, in some implementations of this application, the operating system on the electronic device may directly analyze the notification, to further determine whether the notification is an interactive notification or a display notification. For example, a view structure of the notification may be analyzed. When it is determined that the notification does not include a click event listener (for example, On Click Listener), the notification is considered as a display notification. Correspondingly, when it is determined that the notification includes a click event listener (for example, On Click Listener), it is considered that the notification is an interactive notification. For another example, text content in the notification may be analyzed through natural language understanding, to determine whether the notification is an interactive notification or a display notification. For another example, the electronic device locally stores classified data of different notifications, and may determine, based on the data, whether the notification is an interactive notification or a display notification.

Optionally, in some implementations of this application, the operating system on the electronic device may directly analyze the notification, to determine whether the content in the notification is interactive content or display content. For example, a view structure of the notification may be analyzed, to determine that content that is in the notification and that includes a click event listener (for example, On Click Listener) is interactive content, and correspondingly determine that content that is in the notification and that does not include the click event listener (for example, On Click Listener) is display content. For another example, text content in the notification may be analyzed through natural language understanding, to further determine display content and/or interactive content in the notification.

Optionally, in some implementations of this application, the notification may be a cellular SMS message prompt, a cellular phone prompt, a message pushed by an application, a prompt sent by the operating system (a battery level prompt, a security risk warning, or the like), a network phone prompt, a network SMS message prompt, an audio and video call prompt, or the like. This is not limited herein.

The notification is a first notification.

FIG. 14(A) to FIG. 14(D) are diagrams of an example of the manner of processing the notification by the electronic device on the to-be-split-screen interface and/or the split-screen interface according to an embodiment of this application.

As shown in FIG. 14(A) to FIG. 14(D), the split-screen interface displayed by the electronic device is an interface 1401. The interface 1401 is the same as the interface 1120. Refer to the foregoing text descriptions. Details are not described herein again.

When the electronic device displays the interface 1401, interfaces displayed after the electronic device receives the notification are respectively, for example, an interface 1402, an interface 1403, and an interface 1404.

On the interface 1402, because a notification 1410 is a display notification, the notification 1410 is displayed in a display area 1.

On the interface 1403, because a notification 1411 is an interactive notification, the notification 1411 is displayed in a display area 2. The notification is a cellular phone prompt or a network phone prompt. The notification 1411 includes the following content: "Answer the call from Lisa", "Yes", and "No".

On the interface 1404, because the notification includes interactive content and display content, the display content is displayed in a display area 1 by using a notification 1412, and the interactive content is displayed in a display area 2 by using a notification 1413. The notification includes a control 1415 and a control 1416. A text displayed on the notification 1412 is "Answer the call from Lisa", a text displayed on the control 1415 is "Answer", and a text displayed on the control 1416 is "Decline".

The first notification is equivalent to the notification 1411, a second notification may be the notification 1412, and a third notification may be the notification 1413.

Scenario 6: Rotation of a split-screen interface and/or a to-be-split-screen interface.

Optionally, in some implementations of this application, after the split-screen interface and/or the to-be-split-screen interface are/is rotated, an up-down split-screen interface changes to a left-right split-screen interface, and an up-down to-be-split-screen interface changes to a left-right to-be-split-screen interface.

Optionally, in some implementations of this application, after the split-screen interface is rotated, a display-type application is displayed in a display area 1, and an interactive application is displayed in a display area 2. For how to determine whether the application is a display-type application or an interactive application, refer to the foregoing descriptions. Details are not described herein again.

FIG. 15A and FIG. 15B are diagrams of an example of rotating the split-screen interface according to an embodiment of this application.

As shown in FIG. 15A, an interface 1501 is a split-screen interface before rotation of the electronic device, and an interface 1502 is a split-screen interface after rotation of the electronic device. Display areas on each of the interface 1501 and the interface 1502 include a display area 1 and a display area 2.

An interface of an application 1 is displayed in the display area 1 on the interface 1501 and the display area 1 on the interface 1502, and an interface of an application 2 is displayed in the display area on the interface 1501 and the display area on the display interface 1502. The interface 1501 is a left-right split-screen interface, and the interface 1502 is an up-down split-screen interface.

As shown in FIG. 15A, the interface 1501 is a split-screen interface before rotation of the electronic device, and the interface 1502 is a split-screen interface after rotation of the electronic device. The display areas on each of the interface 1501 and the interface 1502 include the display area 1 and the display area 2.

After detecting rotation, the electronic device may determine that the application 1 is an interactive application, or may determine that the application 2 is a display-type application. Therefore, after rotating, the electronic device displays the interface of the application 1 in the display area 2, and displays the interface of the application 2 in the display area 1.

The interface of the application 1 is displayed in the display area 2 on the interface 1502, and the interface of the application 1 is displayed in the display area 1 on the interface 1502.

Similarly, for a change of the to-be-split-screen interface before and after rotation, also refer to the corresponding text descriptions in FIG. 15A and FIG. 15B. Details are not described herein again.

Scenario 7: When the electronic device is a notebook computer or the like, a screen splitting operation, an application switching operation, an application content switching operation, or the like is entered by using a screen 2 or a touchpad, so that the electronic device displays a corresponding interface.

Because the notebook computer may be considered as an electronic device in a support state, the foregoing operation manner may also be applicable to the notebook computer. The electronic device may receive an input of the user by using the screen 2 or the touchpad. The following uses an example in which the touchpad is used as an input area for description.

FIG. 16A to FIG. 16D are diagrams of examples in which, when the electronic device is a notebook computer, the screen splitting operation, the application switching operation, the application content switching operation, or the like is entered by using the screen 2 or the touchpad, so that the electronic device displays the corresponding interface according to an embodiment of this application.

As shown in FIG. 16A, after receiving the screen splitting operation, the electronic device displays a to-be-split-screen interface (including an up-down split-screen interface and a left-right split-screen interface, where the to-be-split-screen interface in FIG. 16A is a left-right split-screen interface) on a screen 1. Display areas on the to-be-split-screen interface include a display area 1 and a display area 2. An interface of an application 1 is displayed in the display area 1, and an interface of a desktop application or a multi-task interface is displayed in the display area 2.

After receiving an operation of same-screen switching to a next application, the electronic device determines a focus based on a location of a mouse, and further determines whether a display area indicated by same-screen is the display area 1 or the display area 2.

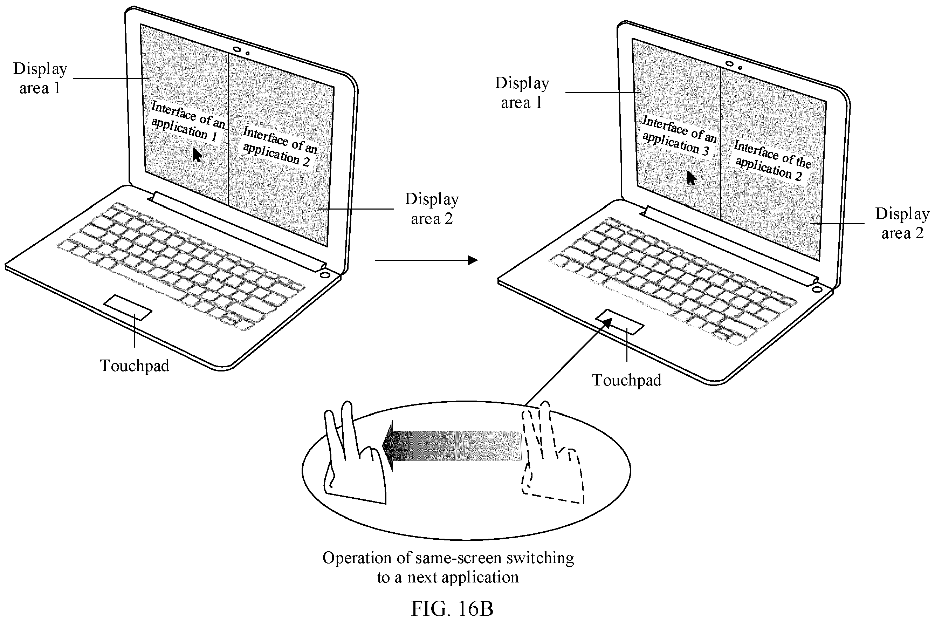

As shown in FIG. 16B, after it is determined that the display area indicated by same-screen is the display area 1, an application displayed in the display area 1 on the split-screen interface is switched, that is, is switched from the application 1 to an application 3, so that an interface displayed in the display area 1 is switched from the interface of the application 1 to an interface of the application 3. The application 3 is a next application of the application 1.

After receiving an operation of different-screen switching to a next application, the electronic device determines a focus based on a location of a mouse, and further determines whether a display area indicated by different-screen is the display area 1 or the display area 2.

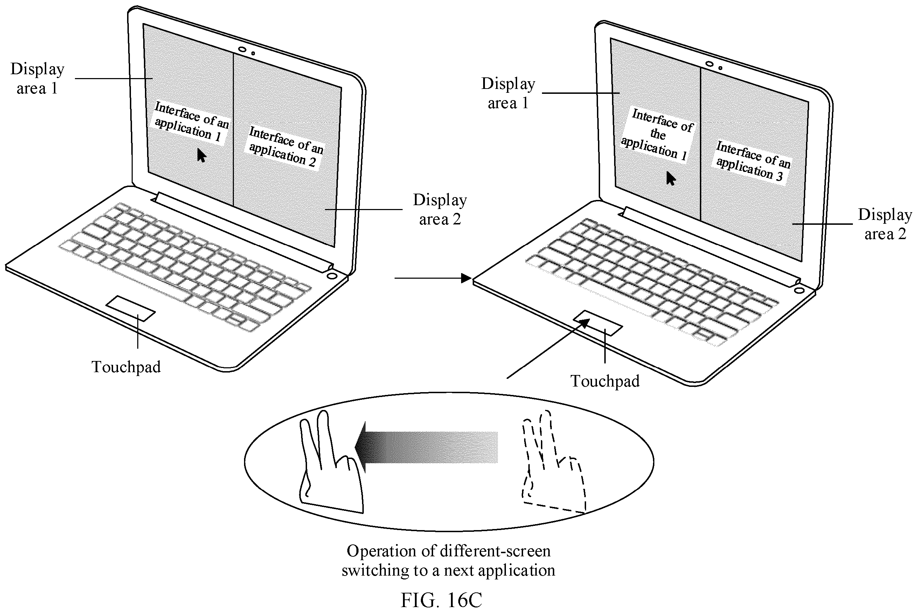

As shown in FIG. 16C, after it is determined that the display area indicated by different-screen is the display area 2, an application displayed in the display area 1 on the split-screen interface is switched, that is, is switched from an application 2 to an application 3, so that an interface displayed in the display area 1 is switched from an interface of the application 2 to an interface of the application 3. The application 3 is a next application of the application 2.

After receiving an operation of same-screen switching to a child page, the electronic device determines a focus based on a location of a mouse, and further determines whether a display area indicated by same-screen is the display area 1 or the display area 2.

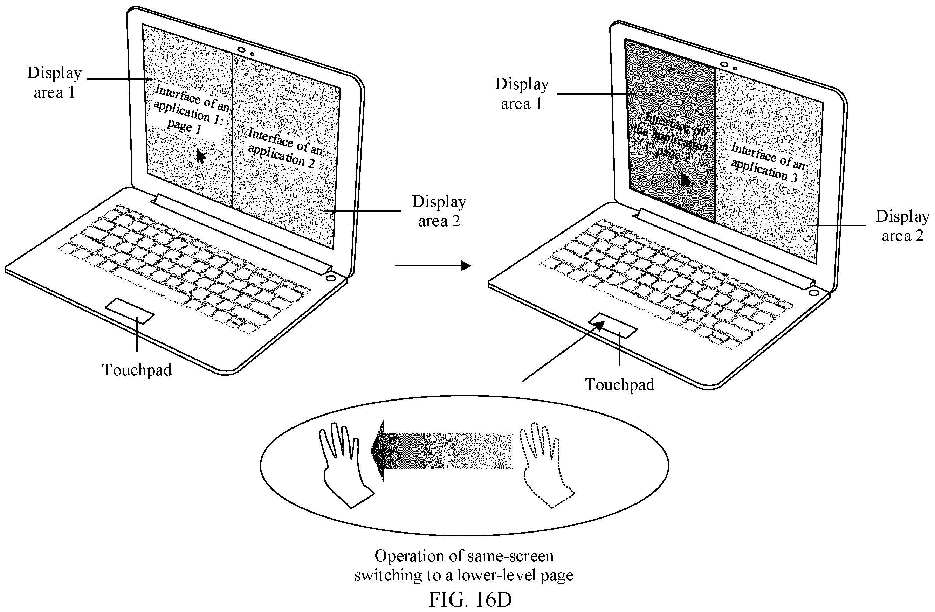

As shown in FIG. 16D, after it is determined that the display area indicated by same-screen is the display area 1, a child page of the application 1 is switched to, that is, content displayed in the display area changes from "Interface of an application 1: page 1" to "Interface of the application 1: page 2", where "Interface of the application 1: page 2" is a child page of "Interface of an application 1: page 1".

When there are a plurality of child pages of "Interface of an application 1: page 1", a child page may be determined from the plurality of child pages based on the location of the mouse.

Optionally, in some implementations of this application, the electronic device may alternatively receive another operation of a user from the touchpad or the screen 2, for example, an operation of same-screen downward switching to a sibling page. This may be determined with reference to the foregoing descriptions. Details are not described herein again.

Scenario 8: In a distributed scenario, an interface displayed on a second electronic device is changed on a first electronic device.

The first electronic device establishes a connection to the second electronic device.

FIG. 17 is a diagram of an example in which the first electronic device indicates the second electronic device to perform screen splitting according to an embodiment of this application.

After the first electronic device establishes the connection to the second electronic device, and after the first electronic device receives a screen splitting operation entered by a user, the second electronic device may perform a screen splitting operation.

Optionally, in some implementations of this application, the first electronic device may send a first indication to the second electronic device, where the first indication indicates the second electronic device to perform screen splitting.

Optionally, in some implementations of this application, the first electronic device may forward the received screen splitting input operation, and the second electronic device performs screen splitting.

Optionally, in some implementations of this application, the first electronic device may further send an indication or send a received operation, so that the user may enter, on the first electronic device, an operation of switching to a next application, an operation of switching to a previous application, an operation of same-screen switching to a next application, an operation of same-screen switching to a previous application, an operation of different-screen switching an application, an operation of different-screen switching to a previous application, an operation of switching to a parent page, an operation of switching to a child page, an operation of same-screen switching to a child page, an operation of same-screen switching to a parent page, an operation of different-screen switching to a child page, an operation of different-screen switching to a parent page, an operation of upward switching to a sibling page, an operation of downward switching to a sibling page, an operation of same-screen upward switching to a sibling page, an operation of same-screen downward switching to a sibling page, an operation of different-screen downward switching to a sibling page, an operation of different-screen upward switching to a sibling page, or the like. The second electronic device may perform a corresponding operation, to display a corresponding interface.

Optionally, in some implementations of this application, a screen of the first electronic device may be divided into a plurality of input areas, and different input areas correspond to different display areas on the second electronic device. For example, a first input area on the first electronic device corresponds to a first display area of the second electronic device, and a second input area on the first electronic device corresponds to a second display area of the second electronic device. When the user enters an application same-screen switching operation in the first input area, the second electronic device switches an application displayed in the first display area. When the user enters an application same-screen switching operation in the second input area, the second electronic device switches an application displayed in the second display area. When the user enters an application different-screen switching operation in the first input area, the second electronic device switches an application displayed in the second display area. Similarly, the user may enter, in different input areas, an operation of same-screen switching to a next application, an operation of same-screen switching to a previous application, an operation of different-screen switching an application, an operation of different-screen switching to a previous application, an operation of switching to a parent page, an operation of switching to a child page, an operation of same-screen switching to a child page, an operation of same-screen switching to a parent page, an operation of different-screen switching to a child page, an operation of different-screen switching to a parent page, an operation of upward switching to a sibling page, an operation of downward switching to a sibling page, an operation of same-screen upward switching to a sibling page, an operation of same-screen downward switching to a sibling page, an operation of different-screen downward switching to a sibling page, an operation of different-screen upward switching to a sibling page, or the like. The second electronic device may perform a corresponding operation, to display a corresponding interface. Details are not described herein again. Refer to the foregoing text descriptions.

FIG. 18A and FIG. 18B are diagrams of an example of a procedure of an interface display method according to an embodiment of this application.

As shown in FIG. 18A, a procedure of the interface display method provided in embodiments of this application includes a step S18A01 and a step S18A02. The step S18A01 is an optional step.

S18A01: Optionally, after detecting that an electronic device changes from an unfolded state to a support state, the electronic device displays a split-screen interface.

For definitions of the unfolded state and the support state, refer to the foregoing text descriptions corresponding to FIG. 1A to FIG. 1C. Details are not described herein again. After detecting that the electronic device is switched from the unfolded state to the support state, the electronic device displays the split-screen interface or may display a to-be-split-screen interface. For content of the split-screen interface and the to-be-split-screen interface, refer to the foregoing text descriptions corresponding to FIG. 7A to FIG. 7L. Details are not described herein again.

When the electronic device is in the unfolded state, the electronic device may display an interface of an application in full screen.

S18A02: When the electronic device displays the split-screen interface, in response to a first swipe operation performed in a second display area, the electronic device directly switches an application displayed in the second display area.

The electronic device may be in the support state or the unfolded state. If the electronic device is in the unfolded state, a first display area and the second display area may be display areas obtained through division along a folding edge. If the electronic device is in the support state, a first display area and the second display area may be display areas obtained through division along a folding edge, and the first display area is located on an upper side of space relative to the second display area.

When the electronic device displays the split-screen interface, after receiving the first swipe operation in the second display area, the electronic device directly switches the application displayed in the second display area. An application displayed in the second display area after switching may be referred to as a third application.

Optionally, in some implementations of this application, when the electronic device displays the split-screen interface, after receiving a second swipe operation in the second display area, the electronic device directly switches an application displayed in the first display area. An application displayed in the first display area after switching may be referred to as a fourth application.

Optionally, in some implementations of this application, when the electronic device displays the split-screen interface, after receiving a fourth swipe operation in the second display area, the electronic device directly switches between parent and child pages of the application displayed in the first display area.

Optionally, in some implementations of this application, when the electronic device displays the split-screen interface, after receiving a fifth swipe operation in the second display area, the electronic device directly switches between parent and child pages of the application displayed in the second display area.

Optionally, in some implementations of this application, when the electronic device displays the split-screen interface, after receiving a sixth swipe operation in the second display area, the electronic device directly switches to a sibling page of the application displayed in the first display area.

Optionally, in some implementations of this application, when the electronic device displays the split-screen interface, after receiving a seventh swipe operation in the second display area, the electronic device directly switches to a sibling page of the application displayed in the second display area.

As shown in FIG. 18B, a procedure of the interface display method provided in this embodiment of this application includes a step S18B01 and a step S18B02.

S18B01: When a display of an electronic device is in an unfolded state, the electronic device displays an interface of a first application by using a small window or a floating window.

For a definition of the unfolded state, refer to the foregoing text descriptions corresponding to FIG. 1A to FIG. 1C. Details are not described herein again.

In this case, an interface displayed by the electronic device may be a split-screen interface, a to-be-split-screen interface, or an interface displayed in full screen. This is not limited herein.

Because the display of the electronic device is in the unfolded state, display content of the small window or the floating window may cross a folding edge. When the display of the electronic device is in the unfolded state, the display is equivalent to a straight screen or a curved screen, and a display location of the small window or the floating window is arbitrary.

S18B02: After the electronic device detects that the display changes to a support state, the electronic device adjusts the location of the small window or the floating window, so that the display content of the small window or the floating window does not cross the folding edge.

The location of the small window or the floating window before adjustment is a first location, and a location of the small window or the floating window after adjustment is a second location. At the second location, the display content of the small window or the floating window does not cross the folding edge.

After the electronic device detects that the display changes to the support state, the interface displayed by the electronic device may be a split-screen interface, a to-be-split-screen interface, or an interface displayed in full screen. This is not limited herein.

Optionally, the electronic device may adjust the location of the small window or the floating window according to a first rule. For example, the first rule may be: comparing sizes of a first size and a second size, and when the first size is greater than the second size, displaying the floating window or the small window in a first display area. The first size is a size occupied by the small window or the floating window in the first display area, and the second size is a size occupied by the small window or the floating window in a second display area.

For another example, the first rule may be: determining an application type of the first application, and when the first application is an interactive application, displaying the floating window or the small window in a second display area; or when the first application is a display-type application, displaying the floating window or the small window in a first display area.

For another example of the first rule, refer to the text descriptions in the foregoing scenario 5.1. Details are not described herein again.

According to the context, the term "when" used in the foregoing embodiments may be interpreted as "if", "after", "when a confirmation that... is received", or "when a detection that... is received". Similarly, according to the context, the phrase "when it is determined that..." or "if it (a stated condition or event) is detected" may be interpreted as a meaning of "if it is determined that...", "when a confirmation that... is received", "when it is detected that... (a stated condition or event)", or "when a detection that... (a stated condition or event) is received".

All or some of the foregoing embodiments may be implemented by using software, hardware, firmware, or any combination thereof. When software is used to implement embodiments, all or some of embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive), or the like.

Persons of ordinary skill in the art may understand that all or some of the processes of the methods in embodiments may be implemented by a computer program instructing related hardware. The program may be stored in a computer-readable storage medium. When the program runs, the processes of the methods in embodiments are performed. The foregoing storage medium includes any medium that can store program code, such as a ROM, a random access memory RAM, a magnetic disk, or an optical disc.

**Claims**

1. An interface display method, applied to an electronic device comprising a display, wherein the method comprises:

   displaying, by the electronic device, an interface of a first application in a first display area of the display, and displaying an interface of a second application in a second display area of the display; and
in response to a first swipe operation performed in the second display area, directly switching, by the electronic device, the interface of the second application displayed in the second display area to an interface of a third application, and keeping displaying the interface of the first application in the first display area.

2. The method according to claim 1, wherein the method further comprises:
in response to a second swipe operation performed in the second display area, directly switching, by the electronic device, the interface of the first application displayed in the first display area to an interface of a fourth application, and keeping displaying the interface of the third application in the second display area.

3. The method according to claim 1 or 2, wherein the third application is a previous application or a next application of the second application.

4. The method according to claim 3, wherein if the third application is started earlier than the second application, the third application is a previous application of the second application; or
before the electronic device displays the interface of the first application in the first display area of the display and displays the interface of the second application in the second display area of the display, if the electronic device displays the interface of the first application in the first display area of the display and displays the interface of the third application in the second display area of the display, the third application is a previous application of the second application.

5. The method according to any one of claims 1 to 4, wherein the display is a foldable screen, and the foldable screen is in a support state.

6. The method according to claim 5, wherein before the displaying, by the electronic device, an interface of a first application in a first display area, and displaying an interface of a second application in a second display area, the method further comprises:

   when the foldable screen is in the support state, determining an application type of the first application and/or an application type of the second application; and
   if the first application is a display-type application, determining, by the electronic device, that the first application is to be displayed in the first display area, and determining that the second application is to be displayed in the second display area;

or

if the second application is an interactive application, determining, by the electronic device, that the first application is to be displayed in the first display area, and determining that the second application is to be displayed in the second display area, wherein

a relative location between the first display area and the second display area is: the first display area is located on an upper side of the second display area.

7. The method according to claim 6, wherein the display-type application is a video playing application or a music playing application, and/or the interactive application is an instant messaging application or a game application.

8. The method according to any one of claims 5 to 7, wherein before the displaying, by the electronic device, an interface of a first application in a first display area of the display, and displaying an interface of a second application in a second display area of the display, the method further comprises:

when the foldable screen is in an unfolded state, displaying, by the electronic device, the interface of the first application in full screen; and the displaying, by the electronic device, an interface of a first application in a first display area of the display, and displaying an interface of a second application in a second display area of the display specifically comprises:

when the electronic device detects that the display changes to the support state, displaying, by the electronic device, the interface of the first application in a third display area, and displaying, by the electronic device, a multi-task interface or an interface of a desktop application in a fourth display area; and in response to an operation of selecting the second application in the fourth display area, displaying, by the electronic device, the interface of the first application in the first display area, and displaying the interface of the second application in the second display area.

9. The method according to any one of claims 1 to 7, wherein before the displaying, by the electronic device, an interface of a first application in a first display area of the display, and displaying an interface of a second application in a second display area of the display, the method further comprises:

displaying, by the electronic device, the interface of the first application in full screen, and displaying the interface of the second application on the interface of the first application in a floating manner; or displaying, by the electronic device, the interface of the second application in full screen, and displaying the interface of the first application on the interface of the second application in a floating manner; and

the displaying, by the electronic device, an interface of a first application in a first display area of the display, and displaying an interface of a second application in a second display area of the display specifically comprises:

after the electronic device receives a third swipe operation, displaying, by the electronic device, the interface of the first application in the first display area, and displaying the interface of the second application in the second display area.

10. The method according to any one of claims 5 to 7, wherein before the displaying, by the electronic device, an interface of a first application in a first display area of the display, and displaying an interface of a second application in a second display area of the display, the method further comprises:

when the display is in an unfolded state, displaying, by the electronic device, the interface of the first application in full screen, and displaying the interface of the second application on the interface of the first application in a floating manner; or displaying, by the electronic device, the interface of the second application in full screen, and displaying the interface of the first application on the interface of the second application in a floating manner; and

the displaying, by the electronic device, an interface of a first application in a first display area of the display, and displaying an interface of a second application in a second display area of the display specifically comprises:

when the electronic device detects that the display changes from the unfolded state to the support state, displaying, by the electronic device, the interface of the first application in the first display area, and displaying the interface of the second application in the second display area.

11. The method according to any one of claims 2 to 7, wherein

after the response to a second swipe operation performed in the second display area, directly switching the interface of the first application displayed in the first display area to an interface of a fourth application, and keeping displaying the interface of the third application in the second display area, the method further comprises:

in response to a fourth swipe operation performed in the second display area, directly switching, by the electronic device, the interface of the fourth application displayed in the first display area from a first page to a second page, wherein the second page is a parent page or a child page of the first page.

12. The method according to any one of claims 2 to 7, wherein
after the response to a second swipe operation performed in the second display area, directly switching the interface of the first application displayed in the first display area to an interface of a fourth application, and keeping displaying the interface of the third application in the second display area, the method further comprises:
in response to a fifth swipe operation performed in the second display area, directly switching the interface of the third application displayed in the second display area from a third page to a fourth page, wherein the fourth page is a parent page or a child page of the third page.

13. The method according to any one of claims 2 to 7, wherein
after the response to a second swipe operation performed in the second display area, directly switching the interface of the first application displayed in the first display area to an interface of a fourth application, and keeping displaying the interface of the third application in the second display area, the method further comprises:
in response to a sixth swipe operation performed in the second display area, directly switching the interface of the fourth application displayed in the first display area from a first page to a fifth page, wherein the fifth page is a sibling page of the first page.

14. The method according to any one of claims 2 to 7, wherein
after the response to a second swipe operation performed in the second display area, directly switching the interface of the first application displayed in the first display area to an interface of a fourth application, and keeping displaying the interface of the third application in the second display area, the method further comprises:
in response to a seventh swipe operation performed in the second display area, directly switching the interface of the third application displayed in the second display area from a third page to a sixth page, wherein the sixth page is a sibling page of the third page.

15. The method according to claim 5, wherein the method further comprises:

when the foldable screen is in the support state, if the electronic device determines to display a first notification, determining a notification type of the first notification; and
if the first notification is a display notification, displaying, by the electronic device, the first notification in the first display area; or if the first notification is an interactive notification, displaying, by the electronic device, the first notification in the second display area, wherein
a relative location between the first display area and the second display area is: the first display area is located on an upper side of the second display area.

16. The method according to claim 5, wherein the method further comprises:

when the foldable screen is in the support state, if the electronic device determines to display a first notification, determining a notification type of the first notification; and if the first notification is an interactive notification, displaying, by the electronic device, a second notification in the first display area, and displaying, by the electronic device, a third notification in the second display area, wherein the second notification is used for displaying display content in the first notification, and the third notification is used for displaying interactive content in the first notification, wherein
a relative location between the first display area and the second display area is: the first display area is located on an upper side of the second display area.

17. The method according to claim 15 or 16, wherein the determining a notification type of the first notification specifically comprises:
determining, by the first electronic device based on display duration of the first notification, a type of a control comprised in the first notification, whether there is a click event listener on the control of the first notification, an application that initiates the first notification, and semantics of text content in the first notification and/or a type declaration of the first notification, that the first notification is a display notification or an interactive notification.

18. An interface display method, applied to an electronic device comprising a display, wherein the display is a foldable screen, a display area of the display comprises a first display area and a second display area that are obtained through division by a folding edge, and the method comprises:

when the foldable screen is in an unfolded state, displaying, by the electronic device, an interface of a first application at a first location in a floating manner; and

after the electronic device detects that the display changes to a support state, displaying, by the electronic device, the interface of the first application at a second location in a floating manner, wherein the second location is different from the first location, and the second location is in the first display area or the second display area.

**19.** The method according to claim 18, wherein the displaying, by the electronic device, the interface of the first application at a second location in a floating manner specifically comprises:

if the first size is greater than the second size, displaying, by the electronic device, the interface of the first application in the first display area at the second location in a floating manner, wherein the second location is in the first display area, the first size is a size occupied by the first location in the first display area, and the second size is a size occupied by the first location in the second display area.

**20.** The method according to claim 19, wherein before the displaying, by the electronic device, the interface of the first application at a second location in a floating manner, the method further comprises: determining, by the electronic device, the first size and the second size based on the first location, a location of the first display area, and a location of the second display area.

**21.** The method according to claim 18, wherein before the displaying, by the electronic device, the interface of the first application at a second location in a floating manner, the method further comprises:

when the foldable screen is in the support state, determining an application type of the first application; and

if the first application is a display-type application, determining, by the electronic device, that the first application is to be displayed in the first display area, wherein the second location is in the first display area; or if the first application is an interactive application, determining, by the electronic device, that the first application is to be displayed in the second display area, wherein the second location is in the second display area, and a relative location between the first display area and the second display area is: the first display area is located on an upper side of the second display area.

**22.** The method according to claim 18, wherein the method further comprises:

when the foldable screen is in the unfolded state, displaying, by the electronic device, a sidebar at a third location; and

after the electronic device detects that the display changes to the support state, displaying, by the electronic device, the sidebar at a fourth location, wherein the fourth location is in the second display area, and a relative location between the first display area and the second display area is: the first display area is located on an upper side of the second display area.

**23.** An electronic device, wherein the electronic device comprises one or more processors and a memory, the memory is coupled to the one or more processors, the memory is configured to store computer program code, the computer program code comprises computer instructions, and the one or more processors invoke the computer instructions to enable the electronic device to perform the method according to any one of claims 1 to 22.

**24.** A chip system, wherein the chip system is used in an electronic device, the chip system comprises one or more processors, and the processor is configured to invoke computer instructions to enable the electronic device to perform the method according to any one of claims 1 to 22.

**25.** A computer-readable storage medium, comprising instructions, wherein when the instructions are run on an electronic device, the electronic device is enabled to perform the method according to any one of claims 1 to 22.

**26.** A computer program product, comprising computer instructions, wherein when the computer instructions are executed by one or more processors, the method according to any one of claims 1 to 22 is implemented.

FIG. 1A

Screen C

Screen A

α

Screen B

Screen B

Folding edge

Screen C

Screen A

FIG. 1B

FIG. 1C

Support state

Screen 1

Screen 2

Touchpad

(A)

Support state

Screen 1

Screen 2

Touchpad

(B)

Support state

Screen 1

Touchpad

(C)

FIG. 2

Electronic device

Antenna 1

Antenna 2

| Mobile communication module<br>2G/3G/4G/5G<br>[150] | Wireless communication module<br>BT/WLAN/GNSS/NFC/IR/FM<br>[160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Charging management module [140]

Power management module [141]

Battery [142]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 3A

Vector z1

Vector z2

Screen A

α

θ

θ

Screen B

FIG. 3B

Z

Vector z1

c1

90°

Screen A

γ1

β1

XOY plane (horizontal plane)

(a)

Z

Vector z2

c2

90°

Screen B

γ2

β2

XOY plane (horizontal plane)

(b)

FIG. 3C

| Application layer | Camera | Calendar | Map | WLAN | Music | Messaging |
|---|---|---|---|---|---|---|
| | Gallery | Phone | Navigation | Bluetooth | AI life | ... |

| Application framework layer | Window manager | Content provider | Phone manager | Resource manager |
|---|---|---|---|---|
| | Notification manager | View system | ... | |

| System library | Surface manager | Three-dimensional graphics processing library | Android runtime |
|---|---|---|---|
| | Two-dimensional graphics engine | Media library | ... |

| Kernel layer | Display driver | Camera driver | |
|---|---|---|---|
| | Audio driver | Sensor driver | ... |

FIG. 4A

| Framework layer | Window manager 406 | | Physical form, for example, support state |

Data such as orientation vectors of the screen A and the screen B

| Kernel layer | Sensor driver 405 |

Sensor data    Sensor data    Sensor data    Sensor data

| Hardware layer | Acceleration sensor 401 | Gyroscope sensor 402 | Acceleration sensor 403 | Gyroscope sensor 404 |

Screen A    Screen B

FIG. 4B

System

First electronic device ← Connection → Second electronic device

FIG. 5

Second electronic device
First electronic device
Screen 2
Screen 1

FIG. 6

Interface 702

Interface 701

Display area 3

Display area 4

Interface of the application 1

Interface of an application 1

FIG. 7A

Interface 702

| Interface of an application 1 | — Display area 3

— Display area 4

Interface 701

Interface of the application 1

FIG. 7B

Interface 703

Lisa

07:45, January 5

Hello?

Interface 704

Hello?

Display area 3

Browser

Display area 4

google.com

Google

FIG. 7C

EP 4 530 810 A1

08:08

Friday, February 9

6°C to 18°C
Cloudy

Icon 721

Folder 720

Icon 722

Work

Baidu Netdisk

WeCom

Tencent Meeting

Meituan

Notepad:

Icon
723

Icon
724

Widget
725

Email

Gallery

Music

Icon 726

Phone

Messaging

Contacts

Camera

FIG. 7D-1

EP 4 530 810 A1

Dream It Possible
Delacey

Lyrics

00:42      04:42

FIG. 7D-2

EP 4 530 810 A1

Dream It Possible
Delacey

Lyrics

00:42 — 04:42

Display area 1

Folder 730 — Work

Notepad

Email

Gallery

Music

Display area 2

Widget 735

Phone

Messaging

Contacts

Camera

FIG. 7D-3

EP 4 530 810 A1

Unfolded state

Interface 708

Interface of an application 1

Support state

Interface 709

Interface of the application 1

Fold

Display area 1

Interface of a desktop application or multi-task interface

Display area 2

FIG. 7E

Interface 710

Interface of an application 1

Display
area 1

Display
area 2

→

Interface 711

Interface of the application 1

Display
area 1

Interface of a desktop
application or multi-task
interface

Display
area 2

FIG. 7F

FIG. 7G

Interface 710

Interface of the application 1

Display area 1

Display area 2

Interface 712

Interface of an application 1

Display area 1

Interface of an application 2

Display area 2

FIG. 7H

69

Interface 712

Interface of an application 1

Display
area 1

Interface of an application 2

Display
area 2

Interface 713

Interface of the application 2

Display
area 1

Display
area 2

FIG. 7I

EP 4 530 810 A1

Interface 730

FIG. 7J(A)

Interface 731

Dream It Possible
Delacey

Lyrics

00:42　　　　　　　　　　　　　　　　　04:42 ——— Display
area 1

⇒　Ⓚ　Ⓘ Ⓘ　Ⓚ　☰

Email　　Gallery　　Music　　Novel ——— Icon
733

——— Display
area 2

Phone　　Messaging　　Contacts　　Camera

FIG. 7J(B)

Interface 732

Chapter 1063

XXXXXXXXXXXXXXXXXXXXXXXXXXXXXXXXXXXXXX
XXXXXXXXXXXXXXXXXXXXXXXXXXXXXXXXXXXXXX
XXXXXXXXXXXXXXXXXXXXXXXXXXXXXXXXXXXXXX
XXXXXXXXXXXXXXXXXXXXXXXXXXXXXXXXXXXXXX
XXXXXXXXXXXXXXXXXXXXXXXXXXXXXXXXXXXXXX
XXXXXXXXXXXXXXXXXXXXXXXXXXXXXXXXXXX

Display area 1

Dream It Possible
Delacey

00:42     04:42

Display area 2

FIG. 7J(C)

Interface 740

Interface of the application 1

Display area 1

Interface of an application 2

Interface of a desktop application or multi-task interface

Display area 2

Interface 710

Interface of an application 1

Display area 1

Display area 2

FIG. 7K

Interface 710

Interface of an application 1

Display area 1

Display area 2

Interface 741

Interface of the application 1

Display area 1

Interface of an application 2

Display area 2

FIG. 7L

Interface 801

Interface of an application 1

Display area 1

Interface of an application 2

Display area 2

(A)

Interface 802

Interface of the application 1

Display area 1

Interface of the application 2

Interface of an application 3

Display area 2

Display area 22

Display area 21

(B)

Interface 803

Interface of the application 1

Display area 1

Interface of the application 3

Display area 2

(C)

FIG. 8A

Interface 801

Interface of an application 1 ———— Display area 1

Interface of an application 2 ———— Display area 2

(A)

Interface 804

Interface of the application 1 ———— Display area 1

Interface of an application 4 | Interface of the application 2 ———— Display area 2

Display area 21

Display area 22

(B)

Interface 805

Interface of the application 1 ———— Display area 1

Interface of the application 4 ———— Display area 2

(C)

FIG. 8B

EP 4 530 810 A1

Interface 810

| Interface of an application 1 | Interface of an application 2 |

Display area 1

Display area 2

(A)

Interface 811    Display area 21

| Interface of the application 1 | Interface of an application 3 |
| | Interface of the application 2 |

Display area 1

Display area 22    Display area 2

(B)

Interface 812

| Interface of the application 1 | Interface of the application 3 |

Display area 1

Display area 2

(C)

FIG. 8C

Interface 810

Display area 1

| Interface of an application 1 | Interface of an application 2 |
|---|---|

(B)

Display area 2

Interface 813    Display area 22

Display area 1

| Interface of the application 1 | Interface of the application 2 |
|---|---|
| | Interface of an application 4 |

(A) Display area 21    Display area 2

Interface 814

Display area 1

| Interface of the application 1 | Interface of the application 4 |
|---|---|

(C)

Display area 2

FIG. 8D

EP 4 530 810 A1

Interface 801

Interface of an application 1

Display
area 1

Interface of an application 2

Display
area 2

Activity manager service

| Application 4 | Application 3 | Application 1 | Application 2 |

Sequence of next applications

FIG. 8E(A)

Interface 832

Interface of the application 1

Display
area 1

Interface of an
application 3

Interface of the application 2

Display
area 22

Display
area 21

Display
area 2

Activity manager service

| Application 4 | Application 3 | Application 1 | Application 2 |
|---|---|---|---|

—— Sequence of next applications ——→

FIG. 8E(B)

Interface 833

Interface of the application 1

Display
area 1

Interface of the application 3

Display
area 2

Activity manager service

| Application 4 | Application 3 | Application 1 | Application 2 |

Sequence of next applications ──────▶

FIG. 8E(C)

Interface 830

Interface of an application 1

Display
area 1

~
TO
FIG. 8F-2

Interface of an application 2

Display
area 2

Activity manager service

| Application 4 | Application 3 | Application 1 | Application 2 |
|---|---|---|---|

——— Sequence of next applications ——➤

FIG. 8F-1

Interface 831 (to-be-split-screen interface)

Interface of the application 1

Display area 1

CONT. FROM FIG. 8F-1 ~

Interface of a desktop application or multi-task interface

Display area 2

Activity manager service

| Application 4 | Application 3 | Application 1 | Application 2 |
|---|---|---|---|

Sequence of next applications ⟶

FIG. 8F-2

Interface 840

Interface of an application 1 — Display area 1

Interface of an application 2 — Display area 2

(A)

Interface 840

Interface of the application 1 — Display area 1

Interface of the application 2 — Display area 2

(B)

Interface 841 (to-be-split-screen interface)

Interface of the application 1 — Display area 1

Interface of a desktop application or multi-task interface — Display area 2

(C)

FIG. 8G

EP 4 530 810 A1

Interface 901

Interface of an application 1

Display area 1

Interface of an application 2

Display area 2

FIG. 9A(A)

Interface 902

Interface of the application 1

Display
area 1

Interface of the
application 2

Interface of an application 3

Display
area 21

Display area 22

Display
area 2

FIG. 9A(B)

Interface 903

Interface of the application 1

Display area 1

Interface of the application 3

Display area 2

FIG. 9A(C)

Interface 901

Interface of an application 1

Display
area 1

Interface of an application 2

Display
area 2

FIG. 9B(A)

Interface 904

Interface of the application 1

Display
area 1

Display
area 22

Interface of an application 4

Interface of the
application 2

Display
area 2

Display
area 21

Display
area 22

FIG. 9B(B)

Interface 905

Interface of the application 1

Display area 1

Interface of the application 4

Display area 2

FIG. 9B(C)

Interface 901

Interface of an application 1

Display
area 1

Interface of an application 2

Display
area 2

Activity manager server

| Application 4 | Application 3 | Application 1 | Application 2 |

Sequence of next applications ⟶

FIG. 9C(A)

Interface 906

Interface of the application 1

Display
area 1

Interface of the
application 2

Interface of an application 4

Display
area 21

Display
area 2

Display area 22

Activity manager server

| Application 4 | Application 3 | Application 1 | Application 2 |
|---|---|---|---|

◄─── Sequence of next applications ───►

FIG. 9C(B)

Interface 907

Interface of the application 1

Display area 1

Interface of the application 4

Display area 2

Activity manager server

| Application 4 | Application 3 | Application 1 | Application 2 |
|---|---|---|---|

Sequence of next applications ⟶

FIG. 9C(C)

Interface 911

Interface of an application 1

Display area 1

Interface of an application 2

Display area 2

FIG. 9D(A)

Interface 912

Display area 12

Interface of the application 1

Interface of an application 3

Display area 1

Display area 11

Interface of the application 2

Display area 2

FIG. 9D(B)

Interface 913

Interface of the application 3

Display area 1

Interface of the application 2

Display area 2

FIG. 9D(C)

Interface 911

Interface of an application 1

Display
area 1

Interface of an application 2

Display
area 2

FIG. 9E(A)

Interface 914

Display
area 11

Interface of an
application 4

Interface of the application 1

Display
area 1

Display
area 12

Interface of the application 2

Display
area 2

FIG. 9E(B)

Interface 915

Interface of the application 4

Display area 1

Interface of the application 2

Display area 2

FIG. 9E(C)

Interface 911

Interface of an application 1

— Display area 1

Interface of an application 2

— Display area 2

Activity manager service

| Application 4 | Application 3 | Application 1 | Application 2 |

———— Sequence of next applications ———→

FIG. 9F(A)

Interface 916

Display area 12

Display area 1

Interface of the application 1

Interface of an application 4

Display area 11

Interface of the application 2

Display area 2

Activity manager service

| Application 4 | Application 3 | Application 1 | Application 2 |

Sequence of next applications ⟶

FIG. 9F(B)

EP 4 530 810 A1

Interface 917

Interface of the application 4

Display area 1

Interface of the application 2

Display area 2

Activity manager service

| Application 4 | Application 3 | Application 1 | Application 2 |

Sequence of next applications ⟶

FIG. 9F(C)

103

Interface 921

Interface of an application 1

Display area 1

$\sim$
→ TO
FIG. 9G-2

Interface of an application 2

Display area 2

Activity manager service

| Application 4 | Application 3 | Application 1 | Application 2 |

— Sequence of next applications →

FIG. 9G-1

Interface 922

Interface of the application 1

———— Display
area 1

CONT.
FROM
FIG. 9G-1
~

Interface of a desktop application or multi-task interface

———— Display
area 2

Activity manager service

| Application 4 | Application 3 | Application 1 | Application 2 |
|---|---|---|---|

————— Sequence of next applications ————▶

FIG. 9G-2

Interface 921

Interface of an application 1

Display area 1

→ $\sim$
TO
FIG. 9H-2

Interface of an application 2

Display area 2

Activity manager service

| Application 4 | Application 3 | Application 1 | Application 2 |

←——————— Sequence of next applications ——————→

FIG. 9H-1

Interface 923

Interface of a desktop application or multi-task interface

Display
area 1

CONT.
FROM
FIG. 9H-1

Interface of the application 2

Display
area 2

Activity manager service

| Application 4 | Application 3 | Application 1 | Application 2 |
|---|---|---|---|

———— Sequence of next applications ————▶

FIG. 9H-2

EP 4 530 810 A1

Interface 921

Interface of an application 1 —— Display area 1

Interface of an application 2 —— Display area 2

Interface 921

Interface of the application 1 —— Display area 1

Interface of the application 2 —— Display area 2

Interface 922

Interface of the application 1 —— Display area 1

Interface of a desktop application or multi-task interface —— Display area 2

FIG. 9I

Interface 921

Interface of an application 1 —— Display area 1

Interface of an application 2 —— Display area 2

Interface 921

Interface of the application 1 —— Display area 1

Interface of the application 2 —— Display area 2

Interface 923

Interface of a desktop application or multi-task interface —— Display area 1

Interface of the application 2 —— Display area 2

FIG. 9J

EP 4 530 810 A1

Page structure of an application 2

Page 1

Home
page

Page 2

Page
2.1

FIG. 10A

FIG. 10B

Interface 1010

Interface of an application 1: page 2 — Display area 1

Interface of an application 2: page 2 — Display area 2

Interface 1011

Interface of the application 1: page 2 — Display area 1

Interface of the application 2: home page — Display area 2

FIG. 10C

EP 4 530 810 A1

Interface 1010

Interface of an application 1: page 2 —— Display area 1

Interface of an application 2: page 2 —— Display area 2

Interface 1012

Interface of the application 1: home page —— Display area 1

Interface of the application 2: page 2 —— Display area 2

FIG. 10D

FIG. 10E

EP 4 530 810 A1

Page structure of an application 2

Page 1

Home page

Page 2

Page 3

FIG. 11A

Interface 1101

Interface of an application 1

Display area 1

Interface of an application 2: page 2

Display area 2

Interface 1102

Interface of the application 1

Display area 1

Interface of the application 2: page 3

Display area 2

Interface 1101

Interface of an application 1

Display area 1

Interface of an application 2: page 2

Display area 2

Interface 1103

Interface of the application 1

Display area 1

Interface of the application 2: page 1

Display area 2

FIG. 11B

EP 4 530 810 A1

Interface 1110

Interface of an application 1: page 2

— Display area 1

Interface of an application 2: page 2

Display area 2

Interface 1111

Interface of the application 1: page 2

— Display area 1

Interface of the application 2: page 1

Display area 2

FIG. 11C

Interface 1110

Interface of an application 1: page 2 —Display area 1

Interface of an application 2: page 2 —Display area 2

Interface 1112

Interface of the application 1: page 1 —Display area 1

Interface of the application 2: page 2 —Display area 2

FIG. 11D

EP 4 530 810 A1

Interface 1120

**Video**

Display
area 1

~
TO
FIG. 11E-2

< News 1: Title 1

Daily news
1/1/2023

+ Follow

Content of the news:
XX

Display
area 2

Comment

FIG. 11E-1

Interface 1121

Video

Display
area 1

CONT.
FROM
FIG. 11E-1

News 2: Title 2

Toutiao
1/1/2023

+ Follow

Content of the news:
YY

Display
area 2

Comment

FIG. 11E-2

Interface 1201

Interface of an application 1

Interface of an application 2

Interface 1202

Interface of the application 1

Display area 1

Interface of a desktop application or multi-task interface

Interface of the application 2

Display area 2

FIG. 12A

Dream It Possible
Delacey

Lyrics

◀ Lisa

07:45, January 5

Hello?

00:42

Floating window
1205 or small
window 1205

TO
FIG. 12B-2

FIG. 12B-1

EP 4 530 810 A1

Interface 1204

Display area 1

CONT.
FROM
FIG. 12B-1
~

Dream It Possible
Delacey

Lyrics

00:42          04:42

Email     Gallery     Music

Lisa  07:45, January 5

Hello?

Floating window
1205 or small
window 1205

Phone     Messaging     Contacts     Camera

Display area 2

FIG. 12B-2

Interface 1201

Interface of an application 1

Interface of an application 2

Interface 1211

Interface of the application 1

Display area 1

Interface of the application 2

Display area 2

FIG. 12C

Interface 1212

Video

▶

Step

Played X0,000 times

Episode
selection

1

2

3

◎ Share your brilliant con

◀ Lisa ☏
07:45, January 5

🖼 Hello?

⌖

🖼 😄 ⊙ 🗀

→ ~ TO
FIG. 12D-2

Floating
window 1214
or small
window 1214

FIG. 12D-1

Interface 1213

Video

Display area 1

CONT.
FROM
FIG. 12D-1

Lisa

Hello?

Display area 2

FIG. 12D-2

EP 4 530 810 A1

126

Interface 1221

Lisa

07:45, January 5

Hello?

< Second episode

< Floating window 1224 or small window 1224

Display area 2

Interface 1222

Video < Second episode

Display area 1

Lisa

Hello?

FIG. 12E

EP 4 530 810 A1

Lisa

07:45, January 5

Hello?

< Second episode

Floating window
1224 or small
window 1224

FIG. 12F-1

EP 4 530 810 A1

Interface 1223

Lisa

Hello?

< Second episode

Display area 1

Floating window 1224 or small window 1224

~ TO FIG. 12F-1

Browser ⊗

google.com

Google

Display area 2

FIG. 12F-2

Video

Step

Played X0,000 times

Episode selection | 1 | 2 | 3 | 4

Share your brilliant comments!

AI subtitling

Tao

Taobao

Screenshot

Settings

Sidebar 1303

FIG. 13A

EP 4 530 810 A1

Interface 1302

Video

Display area 1

~ TO FIG. 13A

Display area 2

Browser ⊗
google.com
Google

AI subtitling
T

Tao
Taobao

Screenshot
Settings

Sidebar 1303

FIG. 13B

EP 4 530 810 A1

131

Interface 1401

Display
area 1

Video

News 2: Title 2

Toutiao
1/1/2023

**+** Follow

Content of the news:
YY

Display
area 2

Comment

FIG. 14(A)

Interface 1402

Video

Verification code: 123456

Notification 1410

Display area 1

News 2: Title 2

Toutiao
1/1/2023

+ Follow

Content of the news:
YY

Display area 2

Comment

FIG. 14(B)

Interface 1404

**Video**

Display
area 1

News 2: Title 2

Toutiao

Answer the call from Lisa?

Follow

| Answer | | Decline |

Display
area 2

Comment

Notification 1411

FIG. 14(C)

Interface 1404

Video

Answer the call from Lisa?

Notification
1412

Display
area 1

News 2: Title 2

Toutiao
1/1/2023

+Follow

Answer

Decline

Display
area 2

Comment

Notification 1413

Control 1415

Control 1416

FIG. 14(D)

Display area 1

Display area 2

Interface 1501

Interface of an application 1

Interface of an application 2

— Rotate →

Interface 1502

Interface of the application 1

Display area 1

Interface of the application 2

Display area 2

FIG. 15A

EP 4 530 810 A1

Display area 1

Interface 1501

Display area 2

Interface of an application 1

Interface of an application 2

— Rotate →

Interface 1503

Interface of the application 2

Display area 1

Interface of the application 1

Display area 2

FIG. 15B

Support state

Display
area 1

Interface of
an
application 1

Interface of a
desktop
application
or multi-task
interface

Display
area 2

Screen
splitting
operation

Touchpad

FIG. 16A

Display area 1

Interface of an application 1

Interface of an application 2

Display area 2

Touchpad

Display area 1

Interface of an application 3

Interface of the application 2

Display area 2

Touchpad

Operation of same-screen switching to a next application

FIG. 16B

Display
area 1

Interface of an
application 1

Interface of an
application 2

Display
area 2

Touchpad

Display
area 1

Interface of
the
application 1

Interface of an
application 3

Display
area 2

Touchpad

Operation of different-screen
switching to a next application

FIG. 16C

EP 4 530 810 A1

Display area 1

Interface of an application 1: page 1

Interface of an application 2

Display area 2

Touchpad

Display area 1

Interface of the application 1: page 2

Interface of an application 3

Display area 2

Touchpad

Operation of same-screen
switching to a lower-level page

FIG. 16D

EP 4 530 810 A1

System

Second electronic device

Video

Google
google.com

Browser

Google

Vmall

MeeTime

First electronic device

Send a first message

Enter a screen splitting operation

FIG. 17

S18A01: Optionally, after detecting that an electronic device changes from an unfolded state to a support state, the electronic device displays a split-screen interface

S18A02: When the electronic device displays the split-screen interface, in response to a first swipe operation performed in a second display area, the electronic device directly switches an application displayed in the second display area

FIG. 18A

S18B01: When a display of an electronic device is in an unfolded state, the electronic device displays an interface of a first application by using a small window or a floating window

S18B02: After the electronic device detects that the display changes to a support state, the electronic device adjusts a location of the small window or the floating window, so that display content of the small window or the floating window does not cross a folding edge

FIG. 18B

## INTERNATIONAL SEARCH REPORT

International application No.

**PCT/CN2023/121417**

### A. CLASSIFICATION OF SUBJECT MATTER

G06F 3/0485(2022.01)i

According to International Patent Classification (IPC) or to both national classification and IPC

### B. FIELDS SEARCHED

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNTXT, CNKI, ENTXT, ENTXTC, DWPI: 折叠屏; 分屏; 滑动; 切换; 悬浮; 区域; 面积; fold screen; split screen; slide; switch; suspend; region; area

### C. DOCUMENTS CONSIDERED TO BE RELEVANT

| Category* | Citation of document, with indication, where appropriate, of the relevant passages | Relevant to claim No. |
|---|---|---|
| X | CN 109062467 A (GUANGDONG OPPO MOBILE TELECOMMUNICATIONS CORP., LTD.) 21 December 2018 (2018-12-21) description, paragraphs 31-188 | 1-17, 23-26 |
| X | WO 2020062294 A1 (HUAWEI TECHNOLOGIES CO., LTD.) 02 April 2020 (2020-04-02) description, page 23, paragraph 9 to page 31, paragraph 10 | 18-22, 23-26 |
| A | CN 113076154 A (HUAWEI TECHNOLOGIES CO., LTD.) 06 July 2021 (2021-07-06) entire document | 1-26 |
| A | CN 114995693 A (HONOR DEVICE CO., LTD.) 02 September 2022 (2022-09-02) entire document | 1-26 |

☐ Further documents are listed in the continuation of Box C.    ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **24 December 2023** | **26 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/121417**

| Patent document cited in search report | | | Publication date (day/month/year) | Patent family member(s) | | | Publication date (day/month/year) |
|---|---|---|---|---|---|---|---|
| CN | 109062467 | A | 21 December 2018 | WO | 2020007147 | A1 | 09 January 2020 |
| | | | | CN | 109062467 | B | 09 October 2020 |
| WO | 2020062294 | A1 | 02 April 2020 | CN | 112714901 | A | 27 April 2021 |
| | | | | KR | 20210068097 | A | 08 June 2021 |
| | | | | EP | 3848786 | A1 | 14 July 2021 |
| | | | | EP | 3848786 | A4 | 15 September 2021 |
| | | | | US | 2021342044 | A1 | 04 November 2021 |
| | | | | JP | 2022501741 | W | 06 January 2022 |
| | | | | JP | 7081048 | B2 | 06 June 2022 |
| | | | | KR | KR102534354 | B1 | 18 May 2023 |
| CN | 113076154 | A | 06 July 2021 | WO | 2021135354 | A1 | 08 July 2021 |
| | | | | EP | 4068088 | A1 | 05 October 2021 |
| | | | | US | 2022334684 | A1 | 20 October 2022 |
| | | | | EP | 4068088 | A4 | 22 March 2023 |
| CN | 114995693 | A | 02 September 2022 | CN | 114995693 | B | 31 March 2023 |

Form PCT/ISA/210 (patent family annex) (July 2022)

**EP 4 530 810 A1**

**Patent documents cited in the description**

- CN 202211203511